# EUROPEAN PATENT APPLICATION

(11) **EP 4 332 787 A1**
(43) Date of publication of application: **06.03.2024**
(21) Application number: 21950851.2
(22) Date of filing: 28.12.2021
(51) Int. Cl.: G06F 16/248

(54) **DISPLAY DEVICE AND METHOD FOR DISPLAYING CHART**

(30) Priority: 20.07.2021 CN 202110819109
(71) Applicant: BOE Technology Group Co., Ltd., Chaoyang District, Beijing 100015 (CN)
(72) Inventor: ZHAO, Lifei, Beijing 100176 (CN); BIAN, Jiahui, Beijing 100176 (CN); WANG, Jinpeng, Beijing 100176 (CN); LIU, Xin, Beijing 100176 (CN); HUANG, Guangwei, Beijing 100176 (CN); KONG, Fanhao, Beijing 100176 (CN); HU, Fengshuo, Beijing 100176 (CN); AN, Zhanfu, Beijing 100176 (CN)
(74) Representative: Cohausz & Florack
(86) International application number: PCT/CN2021/142129
(87) International publication number: WO 2023/000613

(57) **Abstract**

The present disclosure provides a display device and a method for displaying a chart, the display device comprising: a display screen and a control circuit. The control circuit comprises a processor and a memory; the memory is used for storing a program executable by the processor; and the processor is used for reading the program in the memory and performing the following steps: identifying writing track information in a display area of the display screen to obtain a data identification result; in response to a user's chart drawing instruction, determining a chart type corresponding to the chart drawing instruction; and in response to the user's chart drawing instruction, drawing, according to the data identification result, a chart of the chart type corresponding to the chart drawing instruction, and displaying the drawn chart in the display area. In the present invention, table data written by the user is identified, and the table data is drawn into a chart and then displayed on an electronic whiteboard, so that a solution for automatically drawing charts is provided to accurately display the changing law of data groups, thus improving interactive experience in intelligent meetings.

## Description

### Cross Reference to Related Applications

The application claims the priority from Chinese Patent Application No. 202110819109.8, filed with the China National Intellectual Property Administration on July 20, 2021 and entitled "Electronic whiteboard and graph display method thereof', which is hereby incorporated by reference in its entirety.

### Technical Field

The disclosure relates to the technical field of human-computer interaction, in particular to a display apparatus and a method for graph display.

### Background

Attending conferences is probably one of the most common work activities. However, with the constant development of the times and the constant progress of science and technology, the traditional mode of conferencing does not meet the needs of the modern workplace, and the importance of conferencing efficiency and interactive experience in corporate conferencing have begun to emerge. Intelligent Conference is an office product that incorporates various devices like electronic boards, computers and remote conferencing devices, and includes various features like interactive smart boards.

With the advancement of high-precision positioning technology such as infrared, electromagnetic and capacitive touch, touch writing has been achieved on the electronic whiteboard. In the process of using the electronic whiteboard for writing, it is often necessary to present the data group on the electronic whiteboard in graph. At present, one method is to use a hand-drawn graph, which is not only inefficient but also difficult to accurately show the change rules of data group, causing unnecessary deviations for later analysis; the other is to draw a graph on the computer and project the graph on the electronic whiteboard, which is cumbersome to operate and not suitable for use in conference interaction, resulting in poor interactive experience during conference.

### Summary

The disclosure provides a display apparatus and a method for graph display, which is used to identify table data written by a user and display the table data on the display apparatus in graph after drawing the table data into the graph. The disclosure provides a scheme for automatically drawing a graph, which can accurately show the change rule of data groups and improve the interactive experience of intelligent conference.

In a first aspect of an embodiment of the disclosure, a display apparatus including a display screen and a control circuit is provided. The display screen is configured for content display. The control circuit includes a processor and a memory, where the memory is configured for storing programs executable by the processor, and the processor is configured to read the programs in the memory to perform: recognizing writing trajectory information in a display area of the display screen and obtaining a data recognition result; in response to a graph drawing command from a user, determining a graph type corresponding to the graph drawing command; and in response to the graph drawing command from the user, drawing a graph of the graph type corresponding to the graph drawing command according to the data recognition result, and displaying the drawn graph in the display area.

In a second aspect of an embodiment of the disclosure, a method for graph display is provided. The method includes: recognizing writing trajectory information in a display area of a display screen and obtaining a data recognition result; in response to a graph drawing command from a user, determining a graph type corresponding to the graph drawing command; and in response to the graph drawing command from the user, drawing a graph of the graph type corresponding to the graph drawing command according to the data recognition result, and displaying the drawn graph in the display area.

In a third aspect of an embodiment of the disclosure, an apparatus for graph display is provided. The apparatus includes a recognition unit configured for recognizing writing trajectory information in a display area of a display screen and obtaining a data recognition result; a determining unit configured for in response to a graph drawing command from a user, determining a graph type corresponding to the graph drawing command; and a drawing unit configured for in response to the graph drawing command from the user, drawing a graph of the graph type corresponding to the graph drawing command according to the data recognition result, and displaying the drawn graph in the display area.

In a fourth aspect of an embodiment of the disclosure, a text recognition model is provided. The text recognition model includes: a plurality of RNN network layers, and an input of any one of the RNN network layers other than the first two RNN network layers is connected with at least two outputs; where the at least two outputs comprises outputs of any two RNN network layers prior to the any one RNN network layer.

In a fifth aspect of an embodiment of the disclosure, a method for automatic cell division and projection is provided. The method includes: obtaining writing trajectory information in a display area of a display screen; determining row separation lines and column separation lines based on a first projection histogram of the writing trajectory information on a first coordinate axis, and a second projection histogram of the writing trajectory information on a second coordinate axis; and determining various cells according to the row separation lines and column separation lines.

In a sixth aspect of an embodiment of the disclosure, an electronic device is provided. The electronic device includes a processor and a memory, where the memory is configured for storing programs executable by the processor, and the processor is configured to read the programs in the memory to perform the method in the first aspect, the fourth aspect or the fifth aspect.

In a seventh aspect of an embodiment of the disclosure, a computer readable storage medium is provided. The computer readable storage medium is provided computer programs stored therein. When executed by a processor, the programs are configured for implementing the method in the first aspect, the fourth aspect or the fifth aspect.

The above or other aspects of the disclosure will be more concise and understandable in the description of the following embodiments.

### Brief Description of Figures

In order to describe technical solutions in embodiments of the present disclosure more clearly, accompanying drawings required by the embodiments of the present disclosure will be briefly described below. Apparently, the accompanying drawings in the following description are merely some embodiments of the present disclosure, and a person of ordinary skill in the art can further derive other accompanying drawings from these accompanying drawings without creative efforts.
FIG. 1 is a schematic diagram of a display apparatus according to some embodiments of the disclosure.
FIG. 2A is a first schematic diagram of a display area of an electronic whiteboard according to some embodiments of the disclosure.
FIG. 2B is a second schematic diagram of a display area of an electronic whiteboard according to some embodiments of the disclosure.
FIG. 2C is a third schematic diagram of a display area of an electronic whiteboard according to some embodiments of the disclosure.
FIG. 2D is a fourth schematic diagram of a display area of an electronic whiteboard according to some embodiments of the disclosure.
FIG. 3 is a schematic diagram for illustrating writing trajectory recognition according to some embodiments of the disclosure.
FIG. 4 is a schematic diagram for illustrating display in a line graph according to some embodiments of the disclosure.
FIG. 5 is a schematic diagram for illustrating display in a histogram according to some embodiments of the disclosure.
FIG. 6 is a schematic diagram for illustrating display in a pie chart according to some embodiments of the disclosure.
FIG. 7A is a first schematic diagram for illustrating display of a writing area and a graph area according to some embodiments of the disclosure.
FIG. 7B is a second schematic diagram for illustrating display of a writing area and a graph area according to some embodiments of the disclosure.
FIG. 7C is a third schematic diagram for illustrating display of a writing area and a graph area according to some embodiments of the disclosure.
FIG. 7D is a fourth schematic diagram for illustrating display of a writing area and a graph area according to some embodiments of the disclosure.
FIG. 7E is a fifth schematic diagram for illustrating display of a writing area and a graph area according to some embodiments of the disclosure.
FIG. 8A is a first schematic diagram showing a comparison before and after modification to written contents according to some embodiments of the disclosure.
FIG. 8B is a second schematic diagram showing a comparison before and after modification to written contents according to some embodiments of the disclosure.
FIG. 9A is a schematic diagram for illustrating a comparison of display of line graphs according to some embodiments of the disclosure.
FIG. 9B is a schematic diagram for illustrating a comparison of display of histograms according to some embodiments of the disclosure.
FIG. 9C is a schematic diagram for illustrating a comparison of display of pie charts according to some embodiments of the disclosure.
FIG. 10 is a flow chart of a method for drawing a graph according to some embodiments of the disclosure.
FIG. 11 is a flow chart of a method for drawing a line graph according to some embodiments of the disclosure.
FIG. 12 is a flow chart of a method for drawing a histogram according to some embodiments of the disclosure.
FIG. 13 is a flow chart of a method for drawing a pie chart according to some embodiments of the disclosure.
FIG. 14 is a flow chart of a method for displaying a graph in a case with table boarders according to some embodiments of the disclosure.
FIG. 15A is a schematic diagram of a guide template for displaying a bar graph according to some embodiments of the disclosure.
FIG. 15B is a schematic diagram of an editor interface for displaying a bar graph according to some embodiments of the disclosure.
FIG. 15C is a schematic diagram of a writing interface for displaying a bar graph according to some embodiments of the disclosure.
FIG. 15D is a schematic diagram of an interface for displaying a bar graph in full screen according to some embodiments of the disclosure.
FIG. 15E is a schematic diagram of a full screen interface for displaying a bar graph according to some embodiments of the disclosure.
FIG. 16A is a schematic diagram of a guide template for displaying a radar graph according to some embodiments of the disclosure.
FIG. 16B is a schematic diagram of an editor interface for displaying a radar graph according to some embodiments of the disclosure.
FIG. 16C is a schematic diagram of a writing interface for displaying a radar graph according to some embodiments of the disclosure.
FIG. 16D is a schematic diagram of a writing interface for displaying a radar graph according to some embodiments of the disclosure.
FIG. 16E is a schematic diagram of a full screen interface for displaying a radar graph according to some embodiments of the disclosure.
FIG. 17A is a schematic diagram of a guide template for displaying a pie chart according to some embodiments of the disclosure.
FIG. 17B is a schematic diagram of an editor interface for displaying a pie chart according to some embodiments of the disclosure.
FIG. 17C is a schematic diagram of a writing interface for displaying a pie chart according to some embodiments of the disclosure.
FIG. 17D is a schematic diagram of an update interface for displaying a pie chart according to some embodiments of the disclosure.
FIG. 17E is a schematic diagram of a full screen interface for displaying a pie chart according to some embodiments of the disclosure.
FIG. 18A is a schematic diagram of a guide template for displaying a line graph according to some embodiments of the disclosure.
FIG. 18B is a schematic diagram of an editor interface for displaying a line graph according to some embodiments of the disclosure.
FIG. 18C is a schematic diagram of a writing interface for displaying a line graph according to some embodiments of the disclosure.
FIG. 18D is a schematic diagram of a full screen interface for displaying a line graph according to some embodiments of the disclosure.
FIG. 19 is a flow chart of a method for displaying a graph in a case where a title prompt is displayed according to some embodiments of the disclosure.
FIG. 20 is a schematic diagram for illustrating line graph drawing in a case where a title prompt is displayed according to some embodiments of the disclosure.
FIG. 21 is a flow chart of a method for segmentation in rows and columns according to some embodiments of the disclosure.
FIG. 21A is a projection histogram of an X-axis according to some embodiments of the disclosure.
FIG. 21B is a projection histogram of the X-axis after contraction mapping according to some embodiments of the disclosure.
FIG. 21C is a projection histogram of a Y-axis according to some embodiments of the disclosure.
FIG. 21D is a projection histogram of the Y-axis after contraction mapping according to some embodiments of the disclosure.
FIG. 21E is a projection histogram of a Y-axis according to some embodiments of the disclosure.
FIG. 21F is a projection histogram of the Y-axis after contraction mapping according to some embodiments of the disclosure.
FIG. 21G is a schematic diagram for illustrating segmentation in rows and columns according to some embodiments of the disclosure.
FIG. 21H is a schematic diagram for illustrating segmentation in rows and columns according to some embodiments of the disclosure.
FIG. 22 is a first flow chart of a method for segmentation in rows and columns according to some embodiments of the disclosure.
FIG. 23 is a second flow chart of a method for segmentation in rows and columns according to some embodiments of the disclosure.
FIG. 24 is a schematic diagram for illustrating a text recognition model according to some embodiments of the disclosure.
FIG. 25 is a flow chart of a method for displaying a graph according to some embodiments of the disclosure.
FIG. 26 is a schematic diagram of an apparatus for displaying a graph according to some embodiments of the disclosure.
FIG. 27 is a schematic diagram of an electronic device according to some embodiments of the disclosure.

### Detailed Description

In order to make the objects, technical solutions, and advantages of the disclosure more apparent, the disclosure will be described below clearly and fully with reference to the accompanying drawings. Apparently the embodiments to be described below are only a part but not all of the embodiments of the disclosure. Based upon the embodiments of the disclosure, all other embodiments which can occur to those ordinarily skilled in the art without any creative labour shall fall into the scope of the disclosure.

The term "and/or" in the embodiments of the disclosure describes association relationships among associated objects, indicating that there may be three relationships, for example, A and/or B, which may indicate the three situations: the existence of A alone, the existence of both A and B, and the existence of B alone. The character "/" generally indicates that the associated objects are in an "or" relationship.

The application scenarios described in the embodiments of the disclosure are intended to more clearly illustrate the technical solutions of the embodiments of the disclosure, and do not constitute a limitation on the technical solutions provided in the embodiments of the disclosure. For those skilled in the art, with the emergence of new application scenarios, the technical solutions provided in the embodiments of the disclosure are also applicable to solve similar technical problems. Here, in the description of the disclosure, unless otherwise indicated, the term "multiple" or "plurality of" indicates two or more.

Intelligent conference is an office product that integrates an electronic whiteboard, a computer, a remote meeting terminal and other equipment, and has a function of interactive smart whiteboard and other functions. With the rise of intelligent conference, the efficiency and interactive sense in enterprise meetings become more important. How to improve the meeting efficiency and interactive sense in smart meeting becomes a major concern at present. With the advancement of high-precision positioning technologies such as infrared, electromagnetic and capacitive touch, etc., touch writing has been achieved on the electronic whiteboard. In the process of using the electronic whiteboard for writing, it is often necessary to present a data group on the electronic whiteboard in graph. At present, in a method using a hand-drawn graph, which is not only inefficient but also difficult to accurately show the change rules of data groups, causing unnecessary deviations for later analysis; in the other method to draw a graph on the computer and project the graph on the electronic whiteboard, it is cumbersome to operate and not suitable for use in conference interaction, resulting in inefficient conference and poor interactive experience during conference for the user.

Embodiments of the disclosure provide a display apparatus and a method for displaying a graph, which can automatically recognize the writing trajectory information from the user, convert contents written by the user into a graph, and display the graph on the electronic whiteboard. The disclosure provides a scheme for automatically generating a graph and displaying the graph according to the contents written by the user, thereby improving the efficiency of conferences and the interactive experience of the user.

In some embodiments, the display apparatus includes, but is not limited to, an electronic whiteboard including a touch component. The touch component is configured for obtaining handwriting trajectory information. Alternatively, the electronic whiteboard includes a camera, a radar, or other components for obtaining handwriting trajectory information.

It should be noted that the electronic whiteboard in embodiments of the disclosure is not the traditional electronic whiteboard written via a marker or chalk, but refers to a large-sized (generally more than 50 inches) intelligent interactive display device with a touch handwriting function. On the intelligent interactive display device, a writing application such as the electronic whiteboard is installed, and the user can write on the display device by using fingers, active pen or passive pen, etc. The intelligent interactive display device can contain a liquid crystal display (LCD), an organic electroluminescence display (OLED), electronic ink and other display modules, which can display the writing trajectory in real time.

The principle for the graph display according to embodiments of the disclosure is that, after receiving a graph drawing command from the user, recognizing obtained writing trajectory information, and drawing and then displaying a graph based on a data recognition result, so that the content written by the user is automatically drawn into a graph for display, thereby effectively improving the interactive experience. It is easy to understand that the electronic whiteboard according to embodiments of the disclosure can receive the writing trajectory information from the user. During implementation, the writing trajectory information and the user's touch command may be received via the configured touch component. The embodiments of the disclosure do not make too many limitations on how to specifically obtain the writing trajectory information.

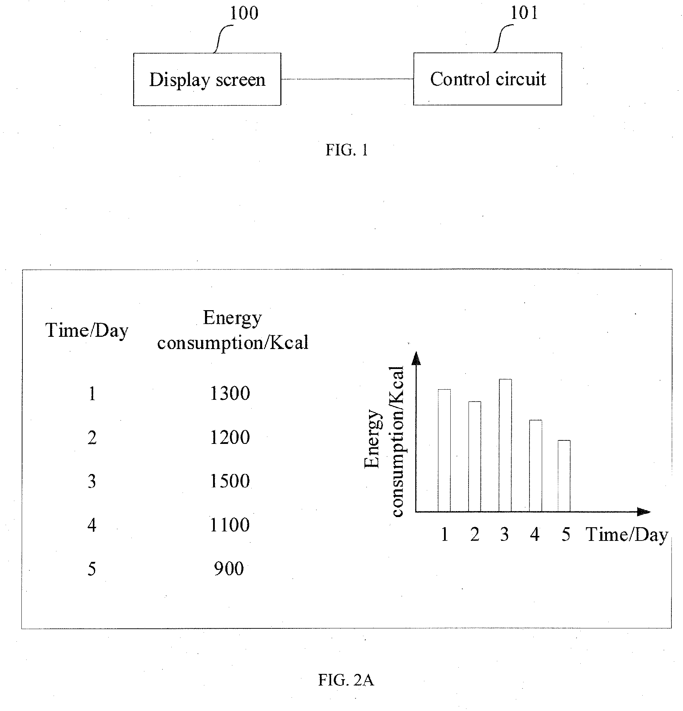

In some embodiments, as shown in FIG. 1, embodiments of the disclosure provide a display apparatus including a display screen 100 and a control circuit 101.

The display screen 100 is used for content display.

The control circuit 101 includes a processor and a memory. The memory is used to store programs executable by the processor. The processor is used to read the programs in the memory and perform:
recognizing writing trajectory information in a display area of the display screen, and obtaining a data recognition result;
in response to a graph drawing command from a user, determining a graph type corresponding to the graph drawing command; and
in response to the graph drawing command from the user, drawing a graph of the graph type corresponding to the graph drawing command according to the data recognition result, and displaying the drawn graph in the display area.

In some embodiments, the display apparatus includes but is not limited to an electronic whiteboard. The electronic whiteboard includes a touch component for obtaining handwriting trajectory information. The electronic whiteboard in the embodiments further includes a camera, a radar and other components for obtaining the handwriting trajectory information. The control circuit in the embodiments may further include at least one of a driver control circuit, a clock module, and a rendering engine. The memory in the embodiments can be used to store instructions, data and other information with storage requirements.

In some embodiments, obtaining the writing trajectory information can be implemented in any of the following ways, but not limited to: obtaining the writing trajectory information written by the user on a terminal in real time via at least one of a touch component, a camera component or a radar component configured in the electronic whiteboard, or via a terminal in communication with the electronic whiteboard. The writing scenarios in the embodiments include: the writing via fingers of a user, the writing via a touch pen by a user, the writing written by a user on a terminal in communication with the electronic whiteboard, and the writing without touching the display screen (space writing) from a user. The embodiments do not make too much restriction on the specific way of obtaining the writing trajectory information.

In the embodiments, it should be noted that the step of recognizing the writing trajectory information and the step of responding to the graph drawing command from the user are not limited in sequence. During implementation, the writing trajectory information is firstly recognized to obtain the data recognition result, and then the graph drawing command from the user is responded to; alternatively, the graph drawing command from the user is firstly responded to, and then the writing trajectory information is recognized to obtain the data recognition result.

In the embodiments, it should be noted that positions for the user's writing trajectory information in the display area do not overlap with positions for the corresponding graph in the display area, so as to ensure that the user can view the content written by the user and the drawn graph at the same time. Without affecting the normal content interaction, based on the method of automatically graph drawing, the interaction efficiency in the meeting and the user's interactive experience are improved.

In some embodiments, in a case of an intelligent graphing mode with the graph type being determined, after determining that the user stops writing for a preset amount of time, the drawing of the graph is triggered. In embodiments of the disclosure, in the case of an intelligent graphing mode with the graph type being determined, in response to a command triggered after stopping writing for a preset amount of time, the writing trajectory information in the display area of the display screen can be recognized to obtain the data recognition result; and the graph is drawn according to the data recognition result, and the drawn graph is displayed. During implementation, if the user stops writing for a preset amount of time, the writing trajectory information in the display area is recognized to obtain the data recognition result, and the graph is drawn according to the data recognition result and the drawn graph is displayed in the display area. During implementation, a timing for recognizing the writing trajectory information and drawing and displaying the graph according to the data recognition result can be determined according to a timing for receiving the graph drawing command.

In some embodiments, the timing for recognizing the writing trajectory information is that: if it is determined that the user stops writing for a preset amount of time, the writing trajectory information in the display area of the display screen is recognized to obtain the data recognition result.

In some embodiments, in the case of an intelligent graphing mode with the graph type being determined, in response to a gesture command from the user, the graph drawing is triggered. In this case, the user's gesture command can be responded in the case of the intelligent graphing mode where the graph type is known, the writing trajectory information in the display area of the display screen can be recognized to obtain the data recognition result; and according to the data recognition result, the graph can be drawn and then displayed.

In some embodiments, the gesture command includes but is not limited to a gesture command indicating a direction, such as a gesture command indicating an arrow, including but not limited to at least one of a gesture command indicating a single-headed arrow, or a gesture command indicating a double-headed arrow.

Optionally, the table data corresponding to the X-axis is determined according to the arrow direction in the received gesture command; or, the table data corresponding to the Y-axis is determined according to the arrow direction in the received gesture command.

Optionally, if the gesture command indicates a single-headed arrow, the table data corresponding to the X-axis or the table data corresponding to the Y-axis is determined according to the direction of the single-headed arrow. In some embodiments, for example, the data content in a first column of the table data is determined as the table data corresponding to the X-axis, and the data content in the second column of the table data is determined as the table data corresponding to the Y-axis.

Optionally, if the gesture command indicates a double-headed arrow, the command indicating the double-headed arrow includes a first arrow command and a second arrow command input sequentially. Here, the first arrow command is received earlier than the second arrow command, and a second direction indicated by the second arrow command is different from a first direction. In this case, the table data corresponding to the X-axis and the Y-axis is set as follows.

The table data corresponding to the X-axis is determined according to the first direction indicated by the first arrow command, and the data corresponding to the Y-axis is determined according to the second direction indicated by the second arrow command.

Alternatively, the table data corresponding to the Y-axis is determined according to the first direction indicated by the first arrow command, and the table data corresponding to the X-axis is determined according to the second direction indicated by the second arrow command.

The data recognition result in the embodiments include but are not limited to table data, data in groups and other data which can be used for graphing.

It should be noted that the above table data can refer to data with row information or column information, or data with both row and column information, but not data that needs to completely include the separation line of rows or columns. In computer data, as long as the row or column information of the data can be indicated via a data storage form, the corresponding data can be referred to as the table data.

The table data in the embodiments includes multiple cells, which can be evenly distributed, such as cells in 3 rows and 2 columns. The cells can also include the user's writing trajectory information. After recognizing the writing trajectory information in the cells, the data content for the cells can be obtained, so that the graph can be drawn using the data in the respective cells.

In some embodiments, data groups can be determined according to the data with column information or row information in the table data. For example, data contents in the respective cells in the first column in the table data can be taken as the contents of the first data group; and data contents in the respective cells in the second column in the table data can be taken as the contents of the second data group. Here, the contents in the data group are arranged in an order determined according to the order of the cells. Alternatively, data contents in the respective cells in the first row in the table data can be taken as the contents of the first data group; and data contents in the respective cells in the second row in the table data can be taken as the contents of the second data group. For example, the data contents in respective cells in the first column in the table data are 10, 20, and 30 respectively, and the contents in the first data group are [10, 20, 30].

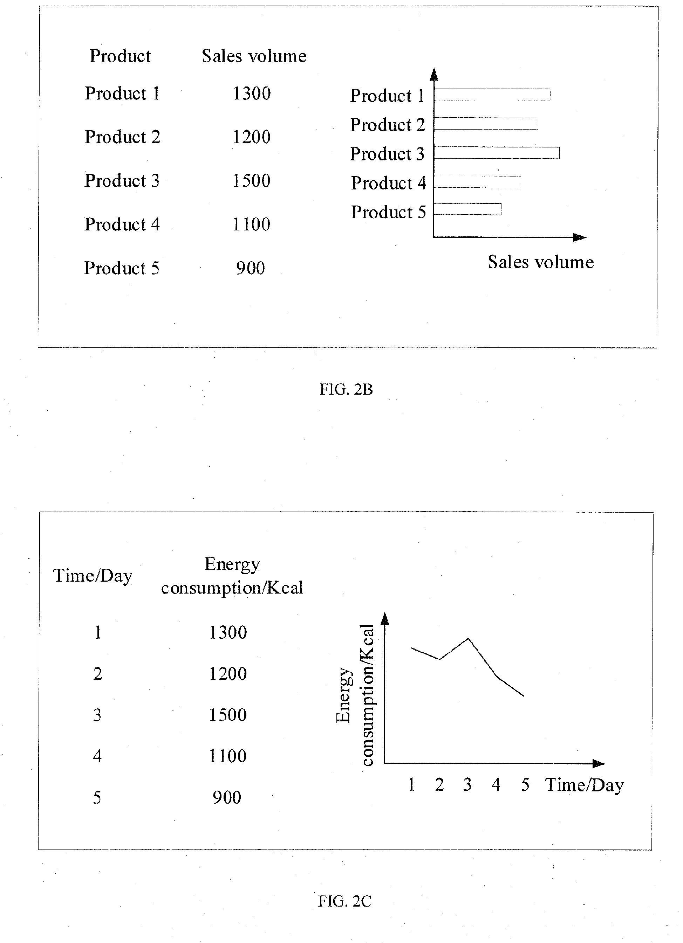

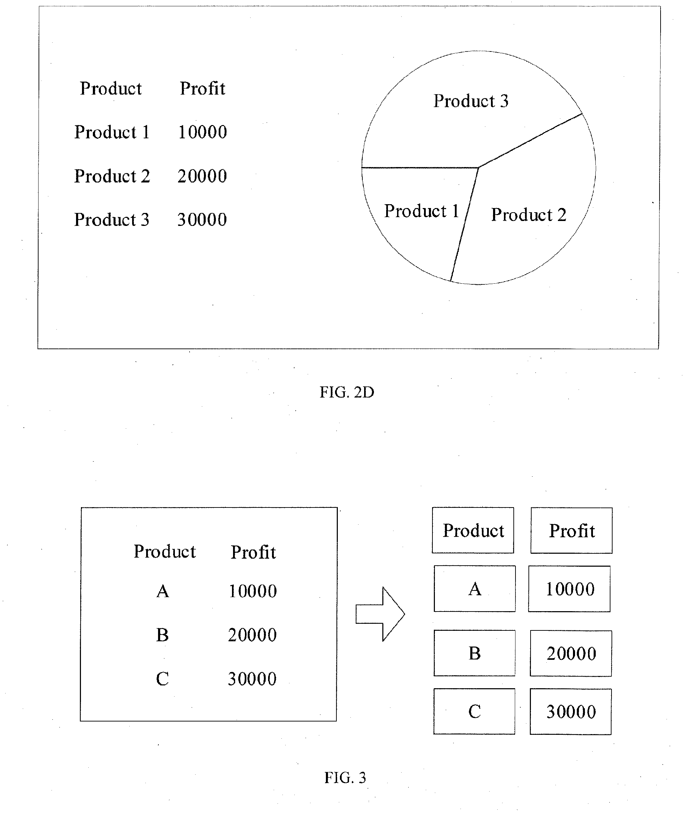

Embodiments of the disclosure provides a schematic diagram of the display area of the display screen of the electronic whiteboard, as shown in FIG. 2A, FIG. 2B, FIG. 2C, and FIG. 2D. After the user writes on one side of the display area of the electronic whiteboard, the graph drawing command is triggered, and the corresponding graph is displayed on the other side of the display area. During implementation, after the user selects the graph type, in the intelligent graphing mode with the graph type being determined, when determining that the user stops writing for a preset amount of time, the corresponding graph is drawn and displayed on the other side of the display area.

In some embodiments, displaying the graph includes but is not limited to: displaying coordinate axes and table data simultaneously, displaying coordinate axes first and then table data, or displaying table data first and then coordinate axes. If it is a line graph, the table data should be understood as the coordinate points on the line; if it is a histogram, the table data should be understood as rectangles in the histogram; and if it is a pie chart, the table data should be understood as slices of different sizes. In some embodiments, the axis titles can be displayed or not, which can be determined according to actual needs, and is not limited herein.

In some embodiments, the writing trajectory information in the display area can be obtained after receiving the user's graph drawing command, or after determining that writing is finished by the user. The embodiments of the disclosure do not limit the timing of obtaining writing trajectory information. Here, the manners for determining that the writing is finished include: determining that the writing is finished in response to that there is no writing trajectory information received in a preset amount of time which begins from a moment when a last piece of writing trajectory information is received, or in response to a button for finishing being triggered by the user. It should be noted that the buttons or keys in the embodiments include virtual buttons or physical buttons, which are not limited herein.

In some embodiments, the method for recognizing the writing trajectory information provided in the embodiments includes the following three according to different writing scenarios.

First, there is a writing scenario with table boarders.

The writing scenario is mainly to recognize the writing trajectory information. Recognizing is made based on the data content in the writing prompt table displayed in the display area, and in this scenario, the position (size) of each cell in the writing prompt table is known. Even if the writing prompt table can be dynamically expanded during the user's writing process, but the position (size) of each cell in the expanded writing prompt table is still known. The writing prompt table can be fixedly displayed in the display area before the user writes, or the baseline position of the writing prompt table can be dynamically determined according to the position of the user's first writing. The user only needs to write the corresponding content in each cell in the writing prompt table, and merely the writing trajectory information is recognized during the recognition process. Since the position of each cell in each writing prompt table is known, it is only necessary to partition the data recognition results into each cell of the writing prompt table, so as to obtain a table containing the content written by the user, and generate a graph according to the data content in the table and display the graph.

In some embodiments, before recognizing the writing trajectory information in the display area of the display screen and obtaining the data recognition result, the processor is further configured to perform:
displaying a writing prompt table in the display area, where the writing prompt table is configured to prompt the user to write in various cells of the writing prompt table; and
receiving the writing trajectory information written by the user in the writing prompt table.

In some embodiments, the processor is further configured to perform:
determining a baseline position of the writing prompt table according to a position of trajectory information of a first writing from the user in the display area; and
displaying the writing prompt table with a fixed number of rows and a fixed number of columns in the display area according to the baseline position of the writing prompt table, where the trajectory information of the first writing from the user is located within a cell of the writing prompt table.

For example, the position of content in the user's first writing in the display area is set as the position of the cell in the first row and column of the writing prompt table, or as the position of the cell in the second row and column of the writing prompt table. This position is used as the baseline position of the writing prompt table for displaying a fixed number of rows and columns of the writing prompt table.

In some embodiments, after displaying the writing prompt table, the processor is configured to perform any of the following methods for increasing the number of rows and columns of the writing prompt table.

Method 1: if the trajectory information of continuous writing from the user exceeds a range of the writing prompt table, the number of rows of the writing prompt table is increased according to the position of the trajectory information of the continuous writing.

Method 2: if the trajectory information of continuous writing from the user exceeds a range of the writing prompt table, the number of columns of the writing prompt table is increased according to the position of the trajectory information of the continuous writing.

Method 3: if the trajectory information of continuous writing from the user exceeds a range of the writing prompt table, the numbers of rows and columns of the writing prompt table are increased according to the position of the trajectory information of the continuous writing.

Method 4: if the trajectory information of continuous writing from the user is located at a critical row of the writing prompt table, the number of rows of the writing prompt table is increased.

Method 5: if the trajectory information of continuous writing from the user is located at a critical column of the writing prompt table, the number of columns of the writing prompt table is increased.

Method 6: if the trajectory information of continuous writing from the user is located at critical row and a critical column of the writing prompt table, the numbers of rows and columns of the writing prompt table are increased.

Here, being located at the critical row in the embodiments indicates that the last row of the writing prompt table is about to be reached, for example, locating at a penultimate row of the writing prompt table. Or, the critical row is the last row of the writing prompt table.

For the writing prompt table in the embodiments of the disclosure, the baseline position of the writing prompt table can be dynamically determined according to the position of the user's first writing. The writing prompt table can be dynamically and automatically expanded when all the cells in the writing prompt table are about to be filled or when the writing content has exceeded the scope of the writing prompt table, to ensure that the user's writing content is within the scope of the writing prompt table.

In some embodiments, the processor is further configured to perform:
in response to an editing command from the user in the intelligent graphing mode with the graph type being determined, displaying the writing prompt table in the display area; where the numbers of rows and columns of the writing prompt table are fixed, or are determined according to the parameters input by the user.

In some embodiments, the writing prompt table can be displayed in response to the editing command from the user in the intelligent graphing mode with the graph type being determined. After displaying the writing prompt table, the user can also set the rows and columns of the writing prompt table by inputting row parameters and column parameters, for example, the user input the row parameter as 3, the column parameter as 5, and then the writing prompt table of 3 rows and 5 columns is generated and displayed.

In some embodiments, the size of the cell in the writing prompt table in the embodiments is predefined, or is determined according to the cell parameters input from the user or according to the trajectory information of the first writing from the user. For example, the size of the cell can be determined according to the positions of trajectory points in the trajectory information of the user's first writing, which is not limited too much in the embodiments.

In some embodiments, in the writing scenario with table boarders, the data recognition result includes a plurality of data groups. Any one of data groups includes content written by the user in any column of the writing prompt table, or, the content written by the user in any row of the writing prompt table.

During implementation, the plurality of data groups can be determined as follows.

If the writing prompt table is displayed in the display area, the content written by the user in the writing prompt table is divided by columns or rows, and a plurality of data groups is obtained.

Alternatively, if the writing prompt table is not displayed in the display area, after determining the cells, the data content of the respective cell is divided by columns or by rows, and a plurality of data groups is obtained.

It should be noted that elements in a data group correspond to the content of a column, and an order of the elements in the data group is the same as an order of the cells in the column. For example, if a user writes the content of 4 rows and 3 columns in the writing prompt table, 3 columns corresponding to 3 data groups are obtained by dividing the writing prompt table by columns. A first data group corresponds to the data content in the 4 cells in the first column. In this case, each data group includes 4 elements.

In some embodiments, in the writing scenario with table boarders, the processor is configured to determine the data recognition result by any one of the following ways.

Way 1: a trajectory point of a cell is determined first, and then the trajectory point of each cell is recognized.

The writing trajectory information in each cell is determined according to a position relationship between the trajectory points in the writing trajectory information and cells in the writing prompt table.

The writing trajectory information in each cell is recognized and the data content of each cell is obtained.

Way 2: the writing trajectory information is recognized first, and then the data content in the cell is determined.

The writing trajectory information is recognized and the content written by the user and a position of the content in the display area are obtained.

The data content of each cell is determined based on the position of the content and the position of each cell in the writing prompt table.

In the writing scenario with table boarders, the position and size of each cell in the writing prompt table are known. In the process of recognition, it is only necessary to determine which cell each trajectory point is located in according to the position relationship of respective trajectory points in the writing trajectory information and cells, so as to determine the trajectory point included in each cell (that is, writing trajectory information), recognize the trajectory point in each cell, and obtain the data content of each cell. A plurality of data groups are obtained by dividing the data contents of respective cells into columns or into rows. The graph is drawn based on the respective data groups and displayed.

Second, there is a writing scenario without table boarders.

In this scenario, the writing trajectory information should be recognized, and also the content written by the user should be recognized using a clustering algorithm. In this case, the writing prompt table is not displayed in the display area, and the user only needs to write the data content in the writing table. The recognition process requires not only handwriting recognition algorithm, but also the clustering algorithm without table boarders. In this case, the writing trajectory information is segmented into different cells, the writing trajectory information in each cell is recognized, the data content in each cell is obtained, and finally the graph is generated and displayed according to the data content in each cell.

In some embodiments, in this scenario, the data recognition result in this embodiment includes multiple cells, the data recognition result also includes the position of each cell and the data content in each cell. In the embodiments, the writing trajectory information is recognized to obtain the actual content written by the user. Based on the user's drawing requirements, the content written by the user serves as data content, and a graph of the graph type corresponding to the graph drawing command is drawn according to the data content in each cell, and the drawn graph is displayed in the display area.

In this scenario, in some embodiments, the writing trajectory information for graphical display is determined after receiving the user's graph drawing command, and the specific determination method includes but is not limited to any of the followings.

Method I: all the writing trajectory information in the display area is determined as the writing trajectory information for graphical display.

During specific implementation, if the user needs to draw a graph while using the electronic whiteboard, the display screen of the electronic whiteboard is set for receiving the writing trajectory information for drawing the graph and the area for displaying the graph according to the user's needs. The content written by the user before this setting in the display screen is hidden.

Method 11: all the writing trajectory information located in a preset box in the display area is determined as the writing trajectory information for graphical display.

This method does not hide the content written by the user on the display screen. When there is a demand for graphical display, the preset box is displayed in the display area of the display screen, and the user can write the content for graphical display in the preset box, and the corresponding graph is displayed in another area of the display area.

In method II, after receiving the user's graph drawing command, all the writing trajectory information in the display area is recognized to obtain the table data corresponding to all the writing trajectory information. Here, the writing trajectory information includes but is not limited to the writing order and coordinates of each trajectory point. That is, the writing trajectory information includes the trajectory points with the sequential writing order. Since the writing trajectory information includes not only the coordinates of each trajectory point, but also the writing order of each trajectory point, the content written by the user can be more accurately recognized according to the correlation between the writing order and coordinates of each trajectory point.

In some embodiments, in the writing scenario, the data recognition result includes multiple cells, and the data recognition result also includes the position of each cell and the data content in each cell.

In some embodiments, the algorithms for writing trajectory recognition include but are not limited to clustering algorithm and handwriting recognition algorithm. Here, the clustering algorithm is used to cluster all the received writing trajectory information according to the similarity between the respective trajectory points, so as to partition all the trajectory points into the respective cells. Trajectory points in each cell is a cluster, which can be understood as the data content written by the user in each cell. The handwriting recognition algorithm is used to recognize the trajectory points in each cell, to obtain the final content which is the data content. Based on the position of each cell and the data content in the cell, the data content in the table written by the user can be determined.

During implementation, after obtaining the writing trajectory information, the obtained writing trajectory information is recognized to obtain the position information of each cell in the table and the data content corresponding to each cell. For example, in a 2×4 table, a position of the first cell is (1, 1), and the data content in the first cell is "income"; a position of the second cell is (1, 2), and the data content in the second cell is "100".

In some embodiments, the writing trajectory information in the display area of the display screen is recognized to obtain the table data by the following steps.

Step 1: each cell is determined and the writing trajectory information is partitioned into each cell.

Here, each determined cell is used as each cell in a corresponding table, the writing trajectory information in each determined cell is used as the data content in each cell in the corresponding table.

During implementation, each cell is determined based on the clustering algorithm based on the writing trajectory information, and then the writing trajectory information is partitioned to each cell. Each cell includes the data content.

In some embodiments, the clustering algorithm may be an adaptive class clustering algorithm, such as K-Means. The trajectory points which are written in a same order and with closer coordinate distances are grouped into a cluster, and the trajectory information of the same cluster is partitioned into the same cell, thereby partitioning all the writing trajectory information into each cell.

In the embodiments, each cell can be determined using the clustering algorithm, and the user's writing trajectory information can be partitioned into each cell.

During implementation, the cluster number of K-Means algorithm, that is, the total number of cells obtained by partitioning, can be set in advance. An improved K-Means algorithm can also be used to automatically determine the final cluster number, that is, the total number of cells obtained by the partitioning. Here, the dataset of K-Means algorithm includes N sample points, each sample point includes two features, which are the writing order of the trajectory point and the coordinates of the trajectory point. The design idea is to calculate the distance between the sample points within each category using the preset loss function, so that the distance between the sample points within each category is small and the difference between the sample points of different clusters is large. For the K-Means algorithm, first L average points are selected, the sample points are clustered according to the L average points, and the smallest samples in the cluster are removed. After removing the samples, an average point is randomly selected from the remaining L1 sample points, and an average point furthest from the average point randomly selected is found, and the iteration is repeated until K average points are selected, where L, L1, and K are positive integers, and L>L1,

The specific flow of the K-Means algorithm is shown below.

Step 1: performing initialization, and selecting K average points.

Step 2: grouping the sample point into a cluster where the average point is closest to the sample point, and determining the clustering result.

Here, the optimal clustering result is obtained by calculating the minimum value of the loss function.

Step 3: updating the average points according to the clustering results.

Step 4: repeating steps 2 and 3 until the average point is no longer changing.

Step 5: outputting the clustering results.

In some embodiments, two schemes for partitioning the writing trajectory information into cells are provided as follows.

Scheme 1: the following steps are included.

Step 1a: obtaining the writing order and coordinates of trajectory points in the writing trajectory information.

Step 1b: determining the similarity between the respective trajectory points according to the writing order and coordinates of the respective trajectory points.

Step 1c: partitioning the trajectory points whose similarity satisfies a preset threshold into one cell.

In the implementation, after obtaining the writing order and coordinates of each trajectory point in the writing trajectory information, each trajectory point can be clustered according to the clustering algorithm, and the trajectory points whose similarity meets the preset threshold are classified into a class, and cells corresponding to the respective trajectory points are generated.

Scheme 2: the following steps are included.

Step 2a: converting the writing trajectory information into strokes, and determining barycenters of the strokes according to average coordinate values of trajectory points of the strokes.

In some embodiments, the writing trajectory information is obtained by resampling the trajectory points in the writing trajectory information. The resampling process is used to increase the trajectory points in the corresponding strokes according to the length of each stroke in the writing trajectory information. During implementation, the writing trajectory information can be resampled, the number of points in the strokes can be increased according to the stroke length, and the writing trajectory information after resampling can be used to determine each cell.

Step 2b: partitioning the strokes into the respective cells according to the position relationship between the barycenters of the strokes and the cells.

In some embodiments, the respective cells are determined by one or more of the following ways.

Way I: determining column separation lines based on valley positions in a first projection histogram projected on a first coordinate axis of the writing trajectory information; determining row separation lines of any column based on valley positions of a second projection histogram projected on a second coordinate axis of writing trajectory information in the column; and determining the various cells based on the column separation lines and the row separation lines.

It should be noted that the first coordinate axis and the second coordinate axis in the embodiments are perpendicular to each other.

During implementation, the column separation line is determined according to a valley position where a width of a valley in the first projection histogram is greater than a threshold.

During implementation, the row separation line is determined according to a valley position where a width of the valley in the second projection histogram is greater than a threshold.

During implementation, the respective cells are determined according to the column separation lines and row separation lines as follows:
partitioning the writing trajectory information into multiple columns according the column separation lines, partitioning the writing trajectory information in a column into multiple rows according the row separation lines, determining table boarders according to minimum values and maximum values of all the trajectory points of the writing trajectory information in the first coordinate axis and the second coordinate axis, and determining the table and the data contents in the table according to the column separation lines, the row separation lines, the table boarders, and the writing trajectory information. It should be noted that in this embodiment of determining the cells, first the columns are separated and then the rows are separated for each column, so that the problem that the content of each row of different columns is not aligned due to irregular writing can be solved. Even if the content in each row in different columns is not in the same horizontal line, the method in the embodiments is capable of accurately partitioning the data content into the respective cells, and accurately separating the rows and columns. The method is applicable to the longitudinal table, and can solve the problem that the recognition is affected by writing content intended for one row into different rows in one column in the longitudinal table.

Way II: determining row separation lines according to valley positions in a second projection histogram projected on a second coordinate axis of the writing trajectory information; determining column separation lines for a row according to valley positions in a first projection histogram projected on a first coordinate axis of writing trajectory information in the row; and determining the various cells according to the column separation lines and the row separation lines.

During implementation, the column separation line is determined according to a valley position where a width of the valley in the first projection histogram is greater than a threshold.

During implementation, the row separation line is determined according to a valley position where a width of the valley in the second projection histogram is greater than a threshold.

During implementation, the respective cells are determined according to the column separation lines and row separation lines as follows:
partitioning the writing trajectory information into multiple rows according the row separation lines, partitioning the writing trajectory information in a row into multiple columns according the column separation lines, determining table boarders according to minimum values and maximum values of all trajectory points of the writing trajectory information in the first coordinate axis and the second coordinate axis, and determining the table and the data contents in the table according to the column separation lines, the row separation lines, the table boarders, and the writing trajectory information. It should be noted that in this embodiment of determining the cells, first the rows are separated and then the columns are separated for each column, so that the problem of a blank row due to irregular writing can be solved. In this embodiment, a blank row can be determined, the data content in each cell can be partitioned accurately, and the rows and columns can be separated accurately.

Way III: determining column separation lines according to valley positions of a first projection histogram projected on a first coordinate axis of the writing trajectory information; determining row separation lines according to valley positions in a second projection histogram projected on a second coordinate axis of the writing trajectory information; and determining the various cells according to the column separation lines and the row separation lines.

During implementation, the column separation line is determined according to a valley position where a width of the valley in the first projection histogram is greater than a threshold.

During implementation, the row separation line is determined according to a valley position where a width of the valley in the second projection histogram is greater than a threshold.

During implementation, the respective cells are determined according to the column separation lines and row separation lines as follows:
partitioning the writing trajectory information into multiple columns according the column separation lines, partitioning the writing trajectory information into multiple rows according the row separation lines, determining table boarders according to minimum values and maximum values of all trajectory points of the writing trajectory information in the first coordinate axis and the second coordinate axis, and determining the table and the data contents in the table according to the column separation lines, the row separation lines, the table boarders, and the writing trajectory information. It should be noted that in this embodiment of determining the cells, the rows and the columns are separated simultaneously, so that the problem of a blank cell due to irregular writing of the user can be solved. In this embodiment, a blank cell, i.e., a cell with no writing trajectory information included, can be determined, the data content in each cell can be partitioned accurately, and the rows and columns can be separated accurately.

In some embodiments, the first projection histogram is obtained by performing contraction mapping for a projection histogram obtained by projecting the writing trajectory information to the first coordinate axis. Here, by the contraction mapping, the unit spacing of the first coordinate axis of the projection histogram is reduced to a first preset spacing, and the number of trajectory points projected within the first preset spacing is summed, and the sum is taken as the number of trajectory points corresponding to the first preset spacing. Here, taking the first coordinate axis being the X-axis as an example, the X-axis coordinate of the projection histogram represents the position of the trajectory point in the writing trajectory information in the X direction, and the Y-axis coordinates represent the numbers of trajectory points projected to different X-axis positions. For example, the number of trajectory points in an interval from 0 to 100 on the X-axis of the projection histogram is contraction mapped to a new interval from 0 to 10. Specifically, a sum of the numbers of trajectory points in a sub-interval from 0 to 10 in the interval from 0 to 100 is taken as the number of trajectory points corresponding to a sub-interval from 0 to 1 in the new interval from 0 to 10, and a sum of the numbers of trajectory points in a sub-interval from 10 to 20 in the interval from 0 to 100 is taken as the number of trajectory points corresponding to a sub-interval from 1 to 2 in the new interval from 1 to 10, and so on. Further, the number of trajectory points in each sub-interval in the interval from 0 to 10 can be normalized. Taking the sub-interval from 0 to 1 in the new interval from 0 to 10 as an example, the sum of the numbers of trajectory points corresponding to the sub-interval from 0 to 1 is taken as the number of trajectory points corresponding to the sub-interval from 0 to 1. Here, the sub-interval from 0 to 1 corresponds to one number of trajectory points, that is, the sub-interval from 0 to 1 corresponds to one value.

In some embodiments, the second projection histogram is obtained by performing contraction mapping for a projection histogram obtained by projecting the writing trajectory information to the second coordinate axis. Here, by the contraction mapping, the unit spacing of the second coordinate axis of the projection histogram is reduced to a second preset spacing, and the numbers of trajectory points projected within the second preset spacing is summed, and the sum is taken as the number of trajectory points corresponding to the second preset spacing. Here, taking the second coordinate axis being the Y-axis as an example, the Y-axis coordinate of the projection histogram represents the position of the trajectory point in the writing trajectory information in the Y direction, and the X-axis coordinates represent the numbers of trajectory points projected to different Y-axis positions. For example, the number of trajectory points in an interval from 0 to 100 on the Y-axis of the projection histogram is contraction mapped to a new interval from 0 to 10. The above description for the first projection histogram can be referenced, which will not be repeated herein.

Here, the projection histogram in the embodiments indicates statistics of the number of trajectory points projected on a preset coordinate axis of the writing trajectory information.

Step 2: recognizing the writing trajectory information in each cell and obtaining the data content in each cell.

Here, the writing trajectory information is recognized according to the handwriting recognition algorithm, and the data content in each cell is obtained. Optionally, the handwriting recognition algorithm in the embodiments includes, but is not limited to at least one of a text recognition algorithm or a digit recognition algorithm.

Step 3: Determining the data recognition result according to the position of each cell and the data content in each cell.

As shown in FIG. 3, which illustrates the recognition of the writing trajectory, the user's writing trajectory information "product, profit, A, B, C, 10000, 20000, 30000" is partitioned into 8 cells, each cell includes all the writing trajectory information of the data content. Based on the handwriting recognition algorithm, writing trajectory information in each cell is recognized, and the data content in each cell is obtained, so as to determine the data recognition result.

It should be noted that the table in the embodiments consists of various cells, and the data content in the table is composed of the data content in each cell. Each piece of table data (data content in each cell) can be determined according to the recognized position of each cell and the content of each data. Data content in each column or row of cells is taken as a data group, and the graph is drawn according to the data groups and displayed.

Third, there is a writing scenario with a title prompt.

In this writing scenario, the title prompt includes but is not limited to a horizontal line or a vertical line. Optionally, the writing trajectory information above the horizontal line is recognized, the writing trajectory information below the horizontal line is recognized based on the clustering algorithm and the handwriting recognition algorithm. Alternatively, the writing trajectory information at the left side of the vertical line is recognized, and the writing trajectory information at the right side of the vertical line is recognized based on the clustering algorithm and handwriting recognition algorithm. In this scenario, the display area only shows horizontal or vertical lines, and at least one of the horizontal lines or vertical lines is shown. There can be a long horizontal line or multiple short horizontal lines, or a long vertical line or multiple short vertical lines, and the style and number of horizontal or vertical lines are not limited in the embodiments. For example, the user can write the axis titles above the horizontal lines, where there can be one or more titles; and the user can write the content of the title below the horizontal line.

In some embodiments, in this scenario, before recognizing the writing trajectory information in the display area of the display screen and obtaining the data recognition result, the processor is further configured to perform:
displaying a title prompt in the display area, where the title prompt is used to indicate a writing position of the table title for the user. In a case of drawing a line graph, the table title is used to represent the title of the axis; in a case of drawing a bar graph, the table title is used to represent categories titles or bar names on a preset axis; in a case of drawing a radar chart, the table title is used to represent a title or polar coordinate name of each vertex; and in a case of drawing a pie chart, the table title is used to represent a title of each slice.

In a first area corresponding to the title prompt, first writing trajectory information is obtained; and in a second area corresponding to the title prompt, second writing trajectory information is obtained.

The title prompt in the embodiments can indicate the writing position for the user, so that the user writes content as indicated by the title prompt. In this case, spacing between different contents can be prevented to be small, which helps the clustering algorithm to accurately and automatically perform recognition in cells, and avoids a case of assigning part or all of trajectory points for same content to a wrong cell, thereby avoiding a recognition error.

In some embodiments, the title prompt is used to separate the axis title written by the user (i.e., the table title) and the content corresponding to the title. In some embodiments, the first area and the second area are separated by the title prompt. In some embodiments, the title prompt includes at least one of a horizontal line, a vertical line, or a symbol.

During implementation, two horizontal lines can be displayed, and each horizontal line corresponds to a column in the table. For example, the first writing trajectory information under title 1 is obtained in the area above the first horizontal line, and the first writing trajectory information is recognized as the title 1 of the X-axis. The first writing trajectory information under title 2 is obtained in the area above the second horizontal line, and the first writing trajectory information is recognized as the title 2 of the Y-axis; the second writing trajectory information representing content is obtained in the area below the first horizontal line, and the second writing trajectory information is recognized as the content corresponding to title 1; the second writing trajectory information representing content is obtained in the area below the second horizontal line, and the second writing trajectory information is recognized as the content corresponding to title 2.

In the writing scenario displaying the title prompt, the data recognition result includes the multiple axis titles and multiple cells, and further includes the position of each cell and the data content in each cell.

In some embodiments, the data recognition result is determined by the following steps.

Step 3a: recognizing the writing trajectory information in the first area to obtain a title for each coordinate axis.

Step 3b: partitioning the writing trajectory information in the second area into cells, recognizing the writing trajectory information in each cell, and obtain the data content in each cell in the second area.

Here, the writing trajectory information is assigned into cells in any of the following schemes.

Scheme I: converting the writing trajectory information into strokes, determining barycenters of the strokes according to average coordinate values of the trajectory points in the strokes, and assigning the strokes into cells according to a position relationship between the barycenters of the strokes and the cells.

Scheme II: obtaining the writing order and coordinates of each trajectory point in the writing trajectory information, determining a similarity between each trajectory point according to the writing order and coordinates of each trajectory point, and assigning the trajectory points whose similarity meets a preset threshold into a cell.

The cell is determined in any of the following ways.

Way I: determining column separation lines according to valley positions in a first projection histogram projected on a first coordinate axis of the writing trajectory information; determining row separation lines for a column according to valley positions in a second projection histogram projected on a second coordinate axis of the writing trajectory information in the column; and determining the respective cells according to the column separation lines and the row separation lines.

Way II: determining row separation lines according to valley positions in a second projection histogram projected on a second coordinate axis of the writing trajectory information; determining column separation lines for a row according to valley positions in a first projection histogram projected on a first coordinate axis of the writing trajectory information in the row; and determining the respective cells according to the column separation lines and the row separation lines.

Way III: determining column separation lines according to valley positions in a first projection histogram projected on a first coordinate axis of the writing trajectory information; determining row separation lines according to valley positions in a second projection histogram projected on a second coordinate axis of the writing trajectory information; and determining the respective cells according to the column separation lines and the row separation lines.

Here, the column separation line is determined according to a valley position where a width of the valley in the first projection histogram is greater than a threshold; and/or
the row separation line is determined according to a valley position where a width of the valley in the second projection histogram is greater than a threshold.

Here, in the way I to way III, the writing trajectory information is obtained by resampling the trajectory points in the writing trajectory information from the user. The resampling process is used to increase the trajectory points in the corresponding strokes according to the length of each stroke in the writing trajectory information from the user.

The first projection histogram is obtained by performing contraction mapping for a projection histogram obtained by projecting the writing trajectory information to the first coordinate axis. Here, by the contraction mapping, the unit spacing of the first coordinate axis of the projection histogram is reduced to a first preset spacing, and the number of trajectory points projected within the first preset spacing is summed.

The second projection histogram is obtained by performing contraction mapping for a projection histogram obtained by projecting the writing trajectory information to the second coordinate axis. Here, by the contraction mapping, the unit spacing of the second coordinate axis of the projection histogram is reduced to a second preset spacing, and the number of trajectory points projected within the first preset spacing is summed.

Step 3c: determining the data recognition result, according to the title, the data content in each cell in the second area, and the position relationship between the title and each cell.

Here, in this scenario, except the recognition of the writing trajectory information in the first area corresponding to the title prompt, the recognition method for the second area can refer to the recognition method for the second writing scenario without table boarders described above. Since the user writes the title in the first area and writes the content in the second area, so merely the writing trajectory information in the first area needs to be recognized, and the writing trajectory information in the second area is recognized using the clustering algorithm and the handwriting recognition algorithm. The writing trajectory information is first partitioned into each cell, and then the writing trajectory information in each cell is recognized, the data content in each cell is determined, and the data content in the cell in the column corresponding to each title is finally determined, or the data content in the cell in the row corresponding to each title is determined.

The data content in each column of cells except the title is taken as a data group or the data content in each row of cells except the title is taken as a data group, and the graph is drawn according the data groups and displayed.

The above three different scenarios of the embodiments are slightly different in the way of recognition and obtaining recognition results. That is, the way of recognition in the case with a table and the way of recognition in the case without a table are different. Based on the three different scenarios in the embodiments, the content of the table written by the user in different scenarios can be determined, and the content of any column or any row written by the user can be determined.

In some embodiments, a plurality of data groups are determined by partitioning the content written by the user into columns, or a plurality of data groups are determined by partitioning the content written by the user into rows. The content in any column written by the user is determined as a data group; or, the content in any row written by the user is determined as a data group.

In some embodiments, the graph type is determined according to the graph drawing command. The graph corresponding to the graph type is drawn according to each data group corresponding to the content written by the user.

In some embodiments, the content of each column written by the user is determined as each data group according to the preset correspondence between each row and the coordinate axis; or, the content of each row written by the user is determined as each data group according to the preset correspondence between each column and the coordinate axis.

In some embodiments, the content in a preset row of the content written by the user is determined as a title of each coordinate axis, and the data content in each of other cells is determined as data content. Alternatively, the content in a preset column of the content written by the user is determined as a title of each coordinate axis, and the data content in each of other cells is determined as data content.

In some embodiments, the data content in each cell is determined as the data content.

In some embodiments, the graph type is determined according to the graph drawing command;
the graph corresponding to the graph type is drawn according to each data group corresponding to the content written by the user.

During implementation, in the embodiments, regardless of a scenario with a table or a scenario without a table, in the process of drawing the graph, the content written by the user is divided into various data groups, and the graph corresponding to the graph type is drawn according to the each data group corresponding to the content written by the user.

Here, in the case with a table, content in each column written by the user in the writing prompt table is taken as a data group, or content in each row written by the user in the writing prompt table is taken as a data group.

In the case without a table, after partitioning the content written by the user into cells, the data content in the cells in each column is taken as a data group, or the data content in the cells in each row is taken as a data group.

In some embodiments, if any data group includes the content in any column written by the user, different types of graphs may be drawn in the following manners.

If determining that the graph type indicates a bar graph, each category title on a preset axis is determined according to a data group corresponding to a preset column, a bar name is determined according to a first content corresponding to a preset index value in a data group corresponding to a remaining column other than the preset column, a bar height corresponding to each category title and the bar name is determined according to the content other than the first content in the data group corresponding to the remaining column, and the bar graph is drawn according to each category title, bar name and bar height.

Alternatively, if determining that the graph type indicates a radar chart, a title of each vertex is determined according to a data group corresponding to a preset column, a polar coordinate name is determined according to the second content corresponding to a preset index value in the data group corresponding to a remaining column other than the preset column, and the polar coordinate corresponding to each title and polar coordinate name is determined according to the content other than the second content in the data group corresponding to the remaining column, and the radar chart is drawn according to each title, polar coordinate name and polar coordinates.

Alternatively, if determining that the graph type indicates a line graph, an axis title is determined according to content corresponding to a preset index value in the data group, a coordinate point according to the content corresponding to a same index value other than the preset index value in different data groups, and the line graph is drawn according to the axis title and the coordinate point.

Alternatively, if determining that the graph type indicates a pie chart, a title of each slice is determined according to a data group corresponding to a preset column, a proportion of each slice is determined according to data groups corresponding to columns other than the preset column, and the pie chart is drawn according to the title and proportion of each slice.

Here, when drawing a bar graph, the data group in the embodiments can be understood as a sequence. The preset index value in the embodiments is used to indicate a sequence number of the content in the data group. For example, the preset index value is 1, which indicates that the first content corresponding to the preset index value 1 is the first one of contents in the data group.

When drawing a radar chart, the polar coordinate name in the embodiments is used to distinguish different examples. For example, the data group corresponding to column 1 includes Math, English, and Chinese, the polar coordinate name corresponding to the preset index value 1 in the data group corresponding to column 2 is "Class 1", and the polar coordinate name corresponding to the preset index value 1 in the data group corresponding to column 3 is "Class 2". Different polar coordinate names are used to distinguish "Class 1" and "Class 2".

When drawing a line graph, for example, the first one of contents corresponding to the preset index value of 1 in the first data group is taken as the X-axis title of "month", and the first one of contents corresponding to the preset index value of 1 in the second data group is taken as the Y-axis title of "income". A coordinate point (12, 100) is determined according to a second content of 12 corresponding to the preset index value 2 in the first data group and the second content of 100 corresponding to the preset index value 2 in the second data group. Here, the coordinate point (12, 100) indicates that the income in December is 100. Each coordinate point is determined in turn and a line graph is drawn.

It should be noted that, the above methods of drawing different types of graphs in the embodiments are described by taking a data group includes the content of a column written by the user as an example. The implementations for rows and the implementations for columns in the embodiments can be interchanged. The above embodiments are also applicable to the case that a data group includes the content of a row written by the user by changing the column in the above embodiments to row. Based on the above embodiments, regardless of the content of the row serving as a data group or the content of the column serving as a data group, the principles of implementations are the same, and the corresponding implementations all fall within the scope of the disclosure, which will not be repeated herein.

In some embodiments, taking a data group including the content in a column of the writing prompt table written by the user as an example, the data recognition results determined with different graph types are described as follows.

Case 1: the graph is a bar graph.

Each category title of the preset axis is determined according to the data group corresponding to the preset column, the bar height and bar name corresponding to each category title are determined according to the data group corresponding to the column other than the preset column, and a bar graph is drawn according to each category title, and the bar height and bar name corresponding to each category title.

In some embodiments, if the graph is determined as a bar graph, each category title of the preset axis is determined according to the data group corresponding to the preset column, the bar name is determined according to the first content corresponding to the preset index value in the data group corresponding to the remaining column other than the preset column, and the bar height corresponding to each category title and column name is determined according to the content other than the first content in the data group corresponding to the remaining column, and the bar graph is drawn according to each category title, column name and column height.

During implementation, as shown in the writing prompt table 1, in the scenario with a known graph type, the user writes the content in the writing prompt table 1, and after recognizing the content written by the user, the data content in each cell of the writing prompt table is obtained, and the bar graph is drawn using the data content in the cell. The table is shown as follows:

### Writing prompt table 1

| | Class 1 | Class 2 |
|---|---|---|
| Chinese | 90 | 89 |
| Math | 95 | 99 |
| English | 94 | 92 |
| | | |

Here, there may be empty cells in the writing prompt table.

For example, each content in the data group corresponding to column 1 is determined as each category title on the X-axis. That is, the category titles on the X-axis are determined as "Chinese, Math, English" according to the contents of "Chinese, Math, English" in the data group corresponding to column 1. The bar name of "Class 1" is determined according to the first content corresponding to the first element contained in the data group corresponding to column 2, and a bar name " Class 2" is determined according to the first content corresponding to the first element contained in the data group corresponding to column 3. Based on the content corresponding to the remaining elements (90, 95, 94) in the data group corresponding to column 2, the content corresponding to Chinese and Class 1 is determined as 90, the content corresponding to Math and Class 1 is 95, and the content corresponding to English and Class 1 is 94. That is, the bar height corresponding to the bar name of Class 1 and title of Chinese is determined as 90, the bar height corresponding to the bar name of Class 1 and title of Math is determined as 95, and the bar height corresponding to the bar name of Class 1 and title of English is determined as 94. Likewise, based on the content corresponding to the remaining elements (89, 99, 92) in the data group corresponding to column 3, the bar height corresponding to the bar name of Class 2 and title of Chinese is determined as 89, the bar height corresponding to the bar name of Class 2 and title of Math is determined as 99, and the bar height corresponding to the bar name of Class 2 and title of English is determined as 92. Thus, a bar graph is drawn according to the determined category titles, the bar names (Class 1 and Class 2) and the bar heights.

Case 2: the graph is radar chart.

The title of each vertex is determined according to the data group corresponding to the preset column, the polar coordinates and polar coordinate names corresponding to each title are determined according to the data group corresponding to the columns other than the preset column, and a radar chart is drawn according to the title of each vertex and the polar coordinates and polar coordinate names corresponding to each title.

In some embodiments, if the graph is determined as a radar chart, the title of each vertex is determined according to the data group corresponding to the preset column, the polar coordinate name is determined according to the second content corresponding to the preset index value in the data group corresponding to the remaining column other than the preset column, and the polar coordinate corresponding to each title and polar coordinate name is determined according to the content other than the second content in the data group corresponding to the remaining column, and the radar chart is drawn according to each title, polar coordinate name and polar coordinate.

During implementation, as shown in the writing prompt table 1, in the scenario with a known graph type, the user writes content in the writing prompt table 1, and after recognizing the content written by the user, the data content in each cell of the writing prompt table is obtained, and the radar chart is drawn using the data content in the cell as follows.

For example, each content in the data group corresponding to column 1 is determined as the title of each vertex of the radar chart. That is, the titles of the vertexes of the radar chart are determined as "Chinese, Math, English" according to the contents of "Chinese, Math, English" in the data group corresponding to column 1. A polar coordinate name of "Class 1" is determined according to the first content corresponding to the first element contained in the data group corresponding to column 2, and a polar coordinate name of "Class 2" is determined according to the first content corresponding to the first element contained in the data group corresponding to column 3. Based on the content corresponding to the remaining elements (90, 95, 94) in the data group corresponding to column 2, the content corresponding to Chinese and Class 1 is determined as 90, the content corresponding to Math and Class 1 is 95, and the content corresponding to English and Class 1 is 94. That is, the polar coordinate corresponding to the polar coordinate name of Class 1 and title of Chinese is determined as 90, the polar coordinate corresponding to the polar coordinate name of Class 1 and title of Math is determined as 95, and the polar coordinate corresponding to the polar coordinate name of Class 1 and title of English is determined as 94. Likewise, based on the content corresponding to the remaining elements (89, 99, 92) in the data group corresponding to column 3, the polar coordinate corresponding to the polar coordinate name of Class 2 and title of Chinese is determined as 89, the polar coordinate corresponding to the polar coordinate name of Class 2 and title of Math is determined as 99, and the polar coordinate corresponding to the polar coordinate name of Class 2 and title of English is determined as 92. Thus, a radar chart is drawn according to the determined titles, the polar coordinate names (Class 1 and Class 2) and the polar coordinates.

Case 3: the graph is a line graph.

The axis titles are determined according to the contents corresponding to the preset index value in the data groups, the coordinate points are determined according to the contents corresponding to the same index value other than the preset index value in different data groups, and a line graph is drawn according to the axis titles and the coordinate points.

During implementation, as shown in the writing prompt table 2, in the scenario with a known graph type, the user writes contents in the writing prompt table 2, and after recognizing the contents written by the user, the data content in each cell of the writing prompt table is obtained, and the line graph is drawn using the data content in the cell as follows.

### Writing prompt table 2

| Month | Income |
|---|---|
| 3 | 32 |
| 4 | 44 |
| 5 | 57 |
| 6 | 14 |

For example, the contents corresponding to the first element in the data groups corresponding to the columns are determined as the axis titles. Specifically, the first element of "month" in the data group corresponding to column 1 is determined as the title of the X-axis, the first element of "income" in the data group corresponding to column 2 is determined as the title of the Y-axis. The coordinate point of (3, 32) is determined according to the second element in the data group corresponding to column 1 and the second element in the data group corresponding to column 2. Likewise, the coordinate point of (4, 44) is determined according to the third element in the data group corresponding to column 1 and the third element in the data group corresponding to column 2; the coordinate point of (5, 57) is determined according to the fourth element in the data group corresponding to column 1 and the fourth element in the data group corresponding to column 2; the coordinate point of (6, 14) is determined according to the fifth element in the data group corresponding to column 1 and the fifth element in the data group corresponding to column 2. A line graph is drawn according to the title of the coordinate axes and the coordinate points.

Case 4: the graph is a pie chart.

The title of each slice is determined according to the data group corresponding to the preset column, the proportion of each slice is determined according to the data group corresponding to the column other than the preset column, and a pie chart is drawn according to the title and proportion of each slice.

During implementation, as shown in the writing prompt table 3, in the scenario with a known graph type, the user writes content sin the writing prompt table 3, and after recognizing the content written by the user, the data content in each cell of the writing prompt table is obtained, and the data content in the cell is used to draw a pie chart as follows.

### Writing prompt table 3

| | |
|---|---|
| February | 10 |
| March | 20 |
| April | 30 |
| May | 40 |

For example, each content in the data group corresponding to column 1 is used as the title of each slice. That is, the titles of the slices are February, March, April, and May. The proportion of the slice corresponding to the title of each slice is determined according to the data group corresponding to column 2. In this case, a proportion of the slice with the title of February is 10%, a proportion of the slice with the title of March is 20%, a proportion of the slice with the title of April is 30%, and a proportion of the slice with the title of May is 40%. The pie chart is drawn according to the titles and the proportions of the respective slices.

In some embodiments, the graph type may be determined by any of the following modes.

Mode 1: the graph drawing command includes a graph selection command, and a graph type corresponding to the graph selection command is determined in response to the graph selection command from the user in the intelligent graphing mode.

It should be noted that the intelligent drawing mode in the embodiments indicates a writing application that can be initiated in response to an operation and allows the user to write, and can draw a graph according to the content written by the user. Alternatively, the intelligent graphing mode in the embodiments indicates a smart graphing function in other application, such as enabling a graphing function or opening an interface with a graphing function in a handwriting application of an electronic whiteboard.

In the implementation, after enabling the intelligent graphing mode in the electronic whiteboard, the display can show a variety of buttons for graph types. The user inputs graph selection commands for different graph types via different buttons. For example, in the intelligent graphing mode, icons for the bar graph, radar chart, line graph, and pie chart are shown in the lower left of the display area. After the user clicks the icon for bar graph, the display interface switches to the editing interface of the intelligent graphing mode corresponding to the bar graph.

In some embodiments, in response to the user's graph selection command in the intelligent graphing mode, the writing prompt table is shown in the display area, and the writing trajectory information written by the user in the writing prompt table is received. After determining that the user stops writing for a preset amount of time, a graph of the graph type corresponding to the graph selection command is drawn and displayed.

Mode 2: the graph drawing command includes a first touch gesture, and in response to the user's first touch gesture in the intelligent graphing mode, a first graphic generated for the first touch gesture is recognized, and the graph type is determined according to the first graphic.

In some embodiments, the graph drawing command includes at least one of a drawing command for an arrow, a drawing command for a circle, a drawing command for a polygon, a drawing command for a cylinder, and a drawing command for a rectangle. Here, the polygon includes a first graphic with at least three sides. The drawing command for the arrow includes the drawing command for a single-headed arrow, or a drawing command for a double-headed arrow, or a drawing command for an arrow with two more heads. The user can input the first graphic on the display interface of the touch component, and the processor recognizes the type of the first graphic and determines different graph types according to different types of the first graphic.

In some embodiments, after recognizing the first graphic corresponding to the graph drawing command, before the graph type is determined, a process of generation of a selection menu is included. For example, after recognizing a specific first graphic, a menu of candidates may be generated. The menu of candidates includes a selection icon for at least one graph type or a selection icon for one graph type, and at least one selection icon for other operating object, the graph type is determined according to a selection (such as clicking) on a selection icon.

In some embodiments, before responding to the graph drawing command in the intelligent graphing mode from the user, the writing trajectory information written by the user is received, the writing trajectory information is recognized, and the data recognition result is obtained; then in response to the graph drawing command in the intelligent graphing mode from the user, a graph of the graph type corresponding to the graph drawing command is drawn according to the data recognition result and is displayed.

Optionally, the first graphic generated for the first touch gesture includes, but is not limited to at least one of an arrow, a circle, a rectangle, cylinder, or a polygon.

If the first graphic is an arrow, the graph is determined to be a line graph. If the first graphic is a circle, the graph is determined to be a pie chart. If the first graphic is rectangle, the graph is determined to be a histogram. If the first graphic is a bar, the graph is determined to be a bar graph. If the first graphic is a polygon, the graph is determined to be a radar chart.

In this mode, the graph type can be determined by any one or more of the following methods.

Method 2a: if the graph drawing command includes a drawing command for an arrow, then the graph is determined as a line graph. During implementation, if the user draws a double-headed arrow, the graph is determined to be a line graph, and generation of a line graph is triggered.

In some embodiments, the drawing commands for the arrow includes: a drawing command for two arrows with different directions, for example, a drawing command for two arrows with directions perpendicular with each other or a drawing command for a double-headed arrow, which is like "↔".

In some embodiments, if the drawing command for two arrows includes a command for a first arrow like "→" and a command for a second arrow like "↑", the direction of the X-axis of the drawn graph is determined according to a first direction indicated by the command for the first arrow, and a direction of the Y-axis of the graph is determined according to the second direction indicated by the command for the second arrow. Alternatively, the drawing command of the two arrows includes a command for a first arrow like "↑" and a command for a second arrow like "--", then the direction of the X-axis of the drawn graph is determined based on a first direction indicated by the command for the first arrow, and the direction of the Y-axis of the graph is determined according to a second direction indicated by the command for the second arrow. It should also be noted that the drawing command for the arrow not only includes the command for the arrow drawn by the user, but also includes the command for a shape drawn by the user which can be recognized as an arrow. In this case, a line segment drawn by the user is recognized as an arrow using a preset product program (i.e., the user-drawn line segment without an arrowhead is mapped to an arrow).

During implementation, directions of the X-axis and the Y-axis in the graph can be determined further according to the correspondence between the X-axis, the Y-axis and the cells of each column, and then the graph is drawn. For example, if the left column cell corresponds to the X-axis, the data content in the left column cell is the data on the X-axis; likewise, the right column cell corresponds to the X-axis, then the data content in the right column cell is the data on the Y-axis. Depending on the X and Y-axis directions, displayed graphs are different. In the embodiments, the X-axis direction can be determined to be horizontal according to the received command for the first arrow indicating the horizontal direction, or the X-axis direction can be determined to be vertical according to the command for the first arrow indicating the vertical direction. That is, the direction of the X-axis can be determined according to the direction indicated by the first arrow, and then the direction of the Y-axis can be determined. The axis direction of the graph can be adjusted to provide the user with more drawing selections.

Method 2b: if the graph drawing command includes a drawing command for a circle, the graph is determined to be a pie chart. During implementation, if the user draws a circle, or a double-headed arrow plus a circle, the graph is determined to be a pie chart, and the generation of a pie chart is triggered.

Method 2c: if the graph drawing command includes a drawing command for a rectangle, the graph is determined to be a histogram. During implementation, if the user draws a rectangle, or a double-headed arrow plus a rectangle, the graph is determined as a histogram, and the generation of the histogram is triggered.

Method 2d: if the graph drawing command includes a drawing command for a cylinder, the graph is determined as a bar graph. During implementation, if the user draws a cylinder, the graph is determined as a bar chart, and the generation of a bar graph is triggered.

Method 2e: if the graph drawing command includes a drawing command for a polygon, the graph is determined as a radar chart. During implementation, if the user draws a polygon, the graph is determined as a radar chart, and the generation of a radar chart is triggered.

The data group in the embodiments may refer to one or more data contents, which depends on the content of the table written by the user in the writing area.

In some embodiments, if the data group includes two data contents, data contents of a same column may be treated as a same data group, or data contents of a same row may be treated as a same data group, which can be determined according to actual needs and is not limited herein. For example, if the graph to be drawn is a line graph, the data group includes two sets of data, one is used for values on the X-axis and the other is used for values on the Y-axis. If the graph to be drawn is a pie chart, the data group includes two sets of data, one is used for the category names, and the other is used for the data corresponding to the category name. If the graph to be drawn is a histogram, the data group includes two sets of data, one is used for values on the X-axis and the other is used for the values on the Y-axis.

The data group can be determined by any of the following methods in the embodiments.

Method 2-1: the data content of each column is determined as each data group according to a preset correspondence between each row and the coordinate axis.

During implementation, if the user writes two rows of data, the number of rows indicates the coordinate axes X-Y, and the number of columns indicates the number of data groups. The top row corresponds to the X-axis, the bottom row corresponds to the Y-axis, and each data group (X, Y) can be determined from the data content of each column in an order from top to bottom. Alternatively, the top row corresponds to the Y-axis, the bottom row corresponds to the X-axis, and each data group (X, Y) can be determined from the data content of each column in an order from bottom to top.

Method 2-2: the data content of each row is determined as each data group according to a preset correspondence between each column and the coordinate axis.

During implementation, if the user writes two columns of data, the number of rows indicates the number of data groups, and the number of columns indicates the coordinate axes X-Y. Here, the leftmost column corresponds to the X-axis, the rightmost column corresponds to the Y-axis, and each data group (X, Y) can be determined from the data content of each row in an order from left to right. Alternatively, the leftmost column corresponds to the Y-axis, the rightmost column corresponds to the X-axis, and each data group (X, Y) can be determined from the data content of each row in an order from right to left.

In some embodiments, the title of each coordinate axis is determined as follows.

The data content of cells in each row is determined as each data group, according to a preset correspondence between columns and coordinate axes. Here, the title of each coordinate axis is determined according to the content in a preset row in the content written by the user, and the data content in the cells of other rows is determined as each data group.

Alternatively, the data content of cells in each column is determined as each data group, according to a preset correspondence between rows and coordinate axes. Here, the title of each coordinate axis is determined according to the content in a preset column in the content written by the user, and the data content in the cells of other columns is determined as each data group.

In some embodiments, based on a drawing order of the arrows, in two columns of cells, it is can be determined which column for X-axis and which column for Y-axis, the specific implementation is as follows.

Here, the data recognition result includes two columns of cells, the drawing command for the two arrows includes a command for a first arrow and a command for a second arrow which are drawn in turn. The command for the first arrow corresponds to the first column in the two columns of cells, and the command for the second arrow corresponds to the second column in the two columns of cells.

If a first direction indicated by the command for the first arrow is the X-axis direction, it is determined that the cells of the first column are for data on the X-axis of the graph, and cells of the second column are for data on the Y-axis of the graph.

If a first direction indicated by the command for the first arrow is the Y-axis direction, it is determined that the cells of the first column are for data on the Y-axis of the graph, and cells of the second column are for data on the X-axis of the graph.

Here, the command for the first arrow is received earlier than the command for the second arrow, and the second direction indicated by the command for the second arrow is different from the first direction. It is easy to understand that if the first direction indicated by the command for the first arrow is the X-axis direction, then the second direction indicated by the command for the second arrow is the Y-axis direction. If the first direction indicated by the command for the first arrow is the Y-axis direction, then the second direction indicated by the command for the second arrow is the X-axis direction. Here, the X-axis direction and the Y-axis direction are predefined, and the X-axis and Y-axis directions are perpendicular to each other. While the user inputs commands for the first arrow and the second arrow, usually the first direction indicated by the command for the first arrow and the second direction indicated by the command for the second arrow are not be completely perpendicular to each other. A certain error is allowed between the first direction and the X-axis, and likewise, a certain error is also allowed between the second direction and the Y-axis direction. The command for the first arrow and the command for the second arrow drawn within the allowed error can be recognized to determine the first direction indicated by the command for the first arrow and the second direction indicated by the command for the second arrow. Thus, the first column of data is ultimately determined as data on X-axis or Y-axis depending on the first direction being determined as X-axis direction or Y-axis direction.

In the graph drawing method in the writing scenario without table boarders, the principle in the embodiments is as follows: obtaining each cell after processing on all the user's writing trajectory information; obtaining data content in each cell by recognizing writing trajectory information in each cell using handwriting recognition algorithm based on a fact that each cell includes the writing trajectory information; recognizing data content in each cell; determining data groups according to the data contents; and drawing a graph according a graph type based on the data contents. It should be noted that the table data contains the position of each cell and the data content of each cell, where the cell position is used to determine which cells are used as a data group, and a connection or arrangement order of the data groups, etc., and the data content is used to determine the position corresponding to the specific data group in the axis or the size corresponding to the data group in the chart or the height corresponding to the data group in the chart.

In some embodiments, in the writing scenario without table boarders, the table data written by the user includes the title of each coordinate axis and/or data group. For the table generated in the embodiment, whether to add the title of each coordinate axis to the generated table depends on whether the table data contains the title of each coordinate axis. It should be noted that, in the embodiments, whether the table data contains the titles of each coordinate axis can be set in advance. For example, the data in the top row of the table is preset as the title of each coordinate axis, or the data in the leftmost column is preset as the title of each coordinate axis. In the case that the user knows in advance how the title of each coordinate axis is set in the electronic whiteboard, the user can input the title of each coordinate axis in the top row or in the leftmost column. During implementation, the title and data content of each coordinate axis in the table data is determined by any of the following methods.

Method 1: the content in a preset row in the content written by the user is determined as the title of each coordinate axis, and the data content in other cells as data content.

During implementation, while drawing the title of each coordinate axis, the data content in the cells of the first row can be used as the title of each coordinate axis, and the data content in other cells can be used as the data content.

Method 2: the content in a preset column in the content written by the user is determined as the title of each coordinate axis, and the data content in other cells is determined as the data content.

During implementation, while drawing the title of each coordinate axis, the data content in cells of the first column can be used as the title of each coordinate axis, and the data content in other cells can be used as the data content.

Method 3: the data content in each cell is determined as data content.

During implementation, the title and data content of each coordinate axis is not distinguished, and the data content in the cells can be used as the data content for graph drawing.

In some embodiments, the graph is drawn according to the table data via the following process.

Process 1: the graph type is determined according to the graph drawing command.

During implementation, the graph drawing command and the graph type are in a one-to-one correspondence.

Optionally, the graph based on types in the embodiments includes, but is not limited to, at least one of a line graph, a pie chart, a histogram, a bar graph, or a horizontal-bar graph.

Optionally, the graph drawing command in the embodiments includes, but is not limited to at least one of a touch gesture or a touch command. Here, a touch gesture includes at least one of a drawing gesture, a multi-finger touch gesture; and the touch command includes a click command.

In some embodiments, the touch gesture include, but is not limited to at least one of: a drawing command for a double-headed arrow, a drawing command for a circle, a drawing command for a polygon, a drawing command for a cylinder, and a drawing command for a rectangle. It is easy to understand that, the user can draw a double-headed arrow in the display interface or graph interface to trigger the generation of a line graph, or the user can draw a circle in the display interface or graph interface to trigger the generation of a pie chart, or the user can draw a rectangle in the display interface or graph interface to trigger the generation of a histogram. The user can also click a button for drawing in the display interface or graph interface or writing interface to trigger the corresponding graph drawing.

In some embodiments, the graph drawing command includes a command triggered in response to determining that the user stops writing for a preset amount of time, in the intelligent graphing mode with the graph type being determined.

In some embodiments, the graph drawing command includes at least one of a drawing command for a double-headed arrow, a drawing command for a circle, a drawing command for a polygon, a drawing command for a cylinder, or a drawing command for a rectangle.

Process 3: the graph corresponding to the graph type is drawn, according to each data group corresponding to the content written by the user.

Optionally, multiple data groups can be determined by partitioning the content written by the user into columns, or, by partitioning the content written by the user into rows.

The content of any column written by the user is determined as a data group; or, the content of any row written by the user is determined as a data group.

Optionally, the content of each column written by the user is determined as each data group according to a preset correspondence between each row and the coordinate axes; or, the content of each row written by the user is determined as each data group according to a preset correspondence between each column and coordinate axes.

Optionally, the content in the preset row among the content written by the user is determined as the title of each coordinate axis, and the data content in each of other cells is determined as data content. Alternatively, the content in the preset column among the content written by the user is determined as the title of each coordinate axis, and the data content in each of other cells is determined as data content.

Optionally, the data content in the each cell is determined as data content.

In some embodiments, if a title for each coordinate axis is provided, the graph may be drawn according to the graph type and the respective data groups, and the title of each coordinate axis can be added to the position of the corresponding axis. If there is no title for the coordinate axes, the graph is drawn directly according to the respective data groups. In the embodiments, one or more types of graphs can be drawn, and different types of graphs can be determined according to the different commands received by the user for graph drawing.

It should be noted that if it is a line graph, the determined data groups can be understood as various coordinate points, and a line graph is plotted by connecting the coordinate points according to the order in the X-axis or Y-axis. If it is a histogram, the determined data groups can be understood as the coordinate points, and the height of each coordinate point is determined according to the value of the Y-axis of each coordinate point, and the histogram is drawn. If it is a pie chart, the determined data groups contains the data that corresponds to each object in a one-to-one correspondence, and the pie chart is drawn based on the proportion of each piece of data in the sum of all data.

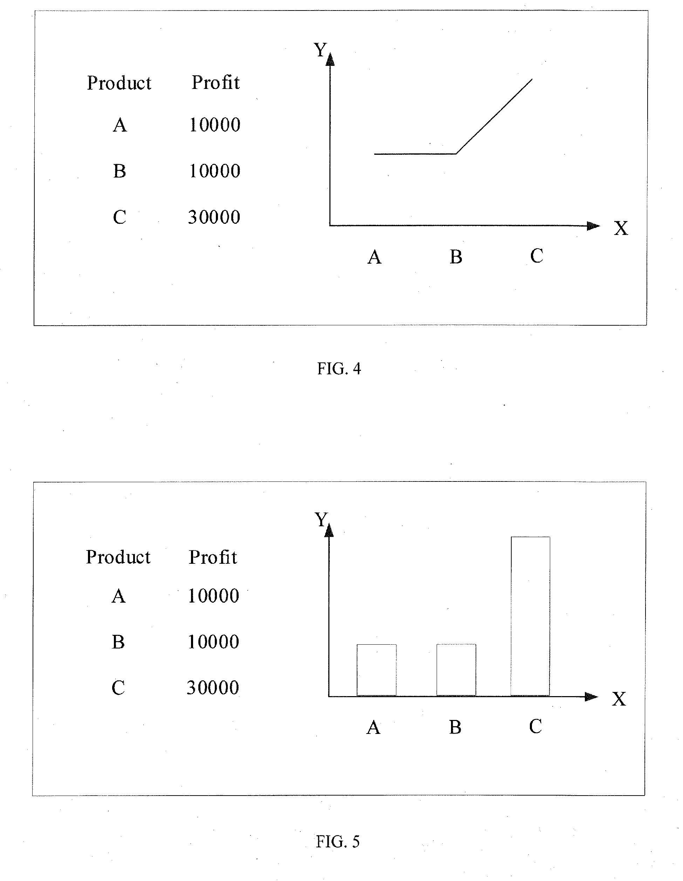

As shown in FIG. 4, in some embodiments, if it is a line graph, the X-Y axis is drawn, and each data group is labeled in the coordinate based on the X-Y axis. In this case, each data group can be treated as a coordinate point, and the respective coordinate points are connected according to the order of values from small to large in the X-axis, or the respective coordinate points are connected in the order of values from small to large in the Y-axis, and finally a line graph is obtained.

As shown in FIG. 5, in some embodiments, if it is a histogram, the X-Y axis is drawn, and each coordinate point is marked in the coordinate based on the X-Y axis. In this case, each data group can be used as a coordinate point, and a rectangle is drawn according to a distance of each coordinate point to the X-axis, or a rectangle is drawn according to the distance of each coordinate point to the Y-axis. Here, the height of the rectangle is the distance from the coordinate point to the X-axis or the distance from the coordinate point to the Y-axis, and the width of the rectangle is a preset value.

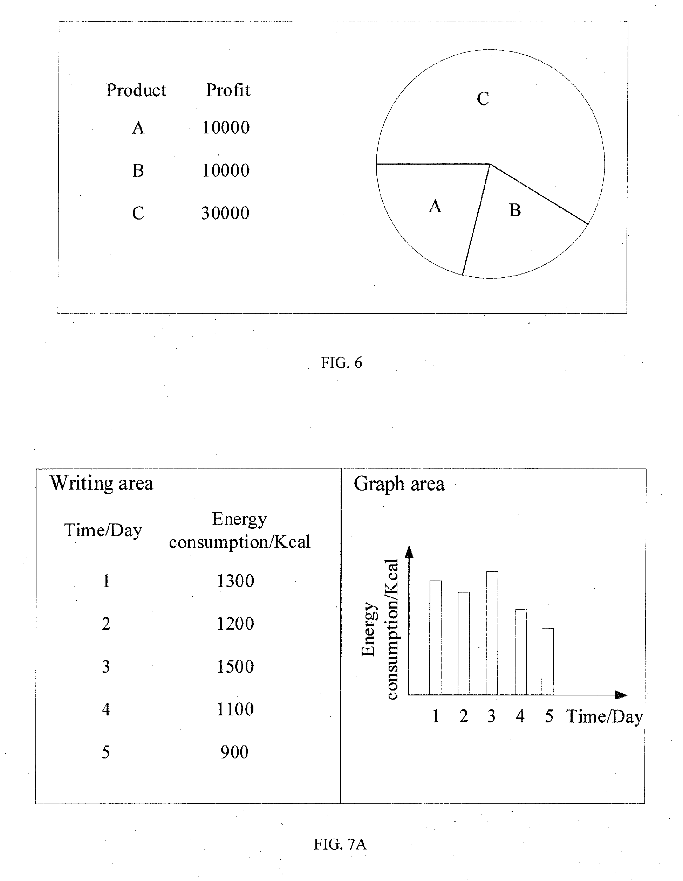

As shown in FIG. 6, in some embodiments, if it is a pie chart, each data group contains a data content, a proportion of a size for each data content among a sum for all data content is determined, and a pie chart is drawn according to the proportion of each data content.

In some embodiments, the graph drawing command includes a command triggered in response to determining that the user stops writing for a preset amount of time in the intelligent graphing mode with the graph type being determined.

In some embodiments, in response to an editing command in the intelligent graphing mode with the graph type being determined from the user, a preset graph is displayed in the display area. Here, a display style of the preset graph is determined according to the determined graph type.

During implementation, when the graph type is selected by the user, in the intelligent graphing mode with the graph type being determined, if determining that the user stops writing for a preset amount of time, it is determined that the writing of the required content in the writing prompt table has been finished, and the content written by the user can be recognized and the graph can be drawn, and then the drawn graph is displayed.

In some embodiments, a guide template is also provided for the user. The user can input the content in the table according to the content of the guide template, thereby regulating the user's writing in the table and improving the accuracy of recognition. During implementation, after determining the graph type, the display area of the display screen shows a guide template corresponding to the graph type, and the guide template is used to guide the user to write the table content according to a writing rule corresponding to the graph type.

In some embodiments, a first section of the guide template shows a table template, and a second section of the guide template shows a graph template. The table template includes a preset content, and the graph template includes a graph corresponding to the preset content.

In some embodiments, if it is determined that the user stops writing for a preset amount of time, the writing trajectory information in the display area of the display screen is recognized to obtain the data recognition result.

In some embodiments, the trajectory point whose pixel value is greater than a pixel threshold in the writing trajectory information of the display area of the display screen is recognized to obtain the data recognition result.

In some embodiments, in response to a command for enabling the intelligent graphing mode from the user on the first display interface in the writing application, a second display interface in the intelligent graphing mode is displayed in the display area.

After drawing a graph on the second display interface and displaying the graph, in response to a command for insertion from the user, the graph of the second display interface is inserted into the first display interface of the writing application for display.

The writing application in the embodiments refers to an application which allows the user to write via a stylus or finger on the display interface, and displays the content written by the user in real time. The writing application includes, but is not limited to, the writing function, the recognition function of the touch signal, or the recognition function of the stylus and other additional functions. The writing function includes but is not limited to a function for writing, a function for erasing, a function for marking, a function for annotating, a function for erasing, etc. The writing application in the embodiments includes a software entity with basic writing functions. In the embodiments, it is not limited to the functions other than the writing function in the writing application.

Here, after the graph is displayed, if the user adds annotation information related to the graph in the area where the graph is located, in response to a command for insertion from the user, the graph and the annotation information are inserted into the first display interface for display.

In some embodiments, the command for enabling intelligent graphing mode in the embodiments includes, but is not limited to, at least one of a touch command or a touch gesture. Here, the touch command includes, but is not limited to at least one of tap, single-click or double-click. The touch gesture includes, but is not limited to, at least one of a writing command or a drawing command based on a touch via a finger or stylus by the user.

In some embodiments, when the command for enabling intelligent graphing mode is a second touch gesture, displaying the second display interface in the intelligent graphing mode in the display area, includes:
receiving a second graphic drawn by the user on the first display interface of the writing application, where the second graphic is generated according to the second touch gesture; and
triggering to display the second display interface in the intelligent graphing mode in the display area according to the second graphic.

During implementation, after the user draws the second graphic on the first display interface of the writing application, the display of the second display interface in the intelligent graphing mode is triggered.

In some embodiments, after receiving the second graphic drawn by the user in the first display interface of the writing application, the non-standard second graphic drawn by the user is recognized as a standard second graphic. For example, for a rectangle with a side that is not absolutely straight, it is determined to be a rectangle by recognition via the processor, and the display is controlled to show a standard rectangle. In this case, a menu of candidates can be generated in the first display interface, for example, next to the standard rectangle. The menu of candidates includes a first startup icon corresponding to the second graphic. In response to a touch operation on the first startup icon from the user, a second display interface for the graph type corresponding to the second graphic is triggered to be displayed in the display area.

During implementation, after the user draws a second graphic in the first display interface of the writing application, a menu of candidates is generated in the first display interface. The menu of candidates includes a first startup icon, and the first startup icon is used to start the second display interface for the graph type corresponding to the second graphic. In this case, different second graphics drawn by the user are recognized by the processor to obtain different first startup icons. The user clicks the first startup icon to open the second display interface, and the graph types in the second display interfaces generated according to different first startup icons are different. In this case, a selection command on the first startup icon by clicking from the user can also be taken as the graph drawing command.

In some embodiments, the graph type is determined according to different shapes of the second graphics drawn by the user in the first display interface. The first startup icon in the menu of candidates varies along with the shape drawn by the user. The icon corresponding to the graph type indicated by the second graphic is displayed in the menu of candidates, in response to a touch on the icon from the user, the second display interface of the corresponding graph type is entered. The specific implementation is as follows.

If the second graphic is a cylinder, the first startup icon is an icon indicating a bar graph; and in response to a touch from the user on the icon indicating the bar graph, a second display interface corresponding to the bar graph is triggered to be displayed.

If the second graphic is a rectangle, the first startup icon is an icon indicating a histogram; and in response to a touch from the user on the icon indicating the histogram, a second display interface corresponding to the histogram is triggered to be displayed.

If the second graphic is a circle, the first startup icon is an icon indicating a pie chart; and in response to a touch from the user on the icon indicating the pie chart, a second display interface corresponding to the pie chart is triggered to be displayed.

If the second graphic is a polygon, the first startup icon is an icon indicating a radar chart; and in response to a touch from the user on the icon indicating the radar chart, a second display interface corresponding to the radar chart is triggered to be displayed.

If the second graphic is an arrow, the first startup icon is an icon indicating a line graph; and in response to a touch from the user on the icon indicating the line graph, a second display interface corresponding to the line graph is triggered to be displayed.

In some embodiments, the menu of candidates further includes a second startup icon, and the second startup icon includes an icon for an analysis template. Here, the icon for the analysis template includes but is not limited to: an icon for SWOT analysis (an enterprise strategic analysis) icon, or an icon for KANO model. The KANO model is a useful tool for classifying and prioritizing user demands, and reflects a nonlinear relationship between product performance and user satisfaction based on analyzing the impact of user needs on user satisfaction. After the second startup icon is displayed in the menu of candidates, the following steps are performed:
in response to a touch on the icon for the analysis template from the user, inserting the analysis template corresponding to the icon for the analysis template in the first display interface.

During implementation, the icon for SWOT analysis is displayed in the menu of candidates in the first display interface, and after the user clicks the icon for the SWOT analysis, the corresponding analysis template is inserted in the first display interface, and the user can edit the analysis template, add the corresponding content, etc.

In some embodiments, for example, the user draws a circle in the first display interface, the menu of candidates is displayed in the first display interface, and the menu of candidates displays an icon indicating a pie chart and an icon for KANO model. If the user clicks on the icon indicating the pie chart, the second display interface corresponding to the pie chart in the intelligent graphing mode is entered, and the user can draw the pie chart in the second display interface. If the user clicks the icon for KANO model, the corresponding analysis template is inserted in the first display interface, and the user can write and edit the content in the analysis template. Based on the same principle, other embodiments corresponding to graphics also fall within the scope of protection of the disclosure, which will not be repeated herein.

In some embodiments, the embodiments may also provide a method of partitioning the display area to distinguish the writing area for the user's writing and receiving the user's writing trajectory information and the graph area for graphical display. Before responding to the user's graph drawing command, a specific implementation is as follows:
determining the writing area and the graph area in the display area of the display screen, where the writing area is configured to receive the user's writing trajectory information, and the graph area is configured to display the graph corresponding to the writing trajectory information.

It is easy to understand that the writing area is used to receive the user's writing trajectory information and other touch operations. The user can operate in the writing area, such as normal writing, clicking and other control operations. The graph area is used for the graph display. During implementation, the user writes the content for graphical display in the writing area, the graph corresponding to the content will be displayed in the graph area. By partitioning the display area, the user's writing trajectory information received in the writing area can be better distinguished and displayed, and the drawn graph can be displayed in the graph area that is different from the writing area. As such, the user's experience can be improved.

In order to display the graph in the graph area, after receiving the user's touch gesture (writing trajectory information) in the graph area and waiting for a preset amount of time, the display of the drawn graph in the graph area is triggered. In the writing area, if the user's writing trajectory information in the writing area is received and a preset amount of time has been passed, in order to avoid affecting the normal writing function of the writing area, other functions (such as the graph display function) will not be triggered, and more time will be waited until receiving the next writing trajectory information from the user. As such, the functions of the writing area and the graph area are effectively distinguished.

In some embodiments, the writing trajectory information in the writing area is recognized. In response to the user's graph drawing command, the graph of the graph type corresponding to the graph drawing command is drawn according to the data recognition result, and the drawn graph is displayed in the graph area.

In the embodiments, at least one of a writing prompt table or a preset graph can be shown in the display area of the display screen. The data content in the writing prompt table is empty, the user can write the table content in each cell of the writing prompt table. Optionally, the writing area and the graph area in the display area of the display screen are determined, where the writing area is configured to receive the user's writing trajectory information, the graph area is configured to display the graph corresponding to the writing trajectory information. The writing prompt table corresponding to the graph type is displayed in the writing area of the display area, and/or, the preset graph corresponding to the graph type is displayed in the graph area of the display area. Here, the content in the preset graph is also empty, that is, only the graph style without graph content is displayed. For example, a preset graph for a pie chart is a pie chart which is not partitioned into slices.

In some embodiments, after determining the graph type corresponding to the graph selection command, or displaying the guide template corresponding to the graph type in the display area of the display screen, in response to the user's graph selection command in the intelligent graphing mode, the processor may be configured to execute:
in response to the user's editing command in the intelligent graphing mode with the graph type being determined, displaying the writing prompt table and the preset graph in the display area, and receiving the writing trajectory information written by the user in the writing prompt table.

It should be noted that, the writing prompt table and the preset graph both are empty at this time. The writing prompt table is used to provide the user with an empty table to input table content. The preset graph is used to provide the user with a graph style to allow the graph content drawing according to the table content entered by the user. Here, the number of rows and columns of the writing prompt table is fixed, or the number of rows and columns of the writing prompt table is set according to the parameters input by the user. The display style of the preset graph is determined according to the graph type corresponding to the guide template.

In some embodiments, the graph area is also configured to receive the user's graph drawing command. In some embodiments, after receiving the user's graph drawing command in the graph area and waiting for a preset amount of time, the writing trajectory information in the writing area is recognized in response to the user's graph drawing command. The graph of the graph type corresponding to the graph drawing command is drawn according to the data recognition result, and the drawn graph is displayed in the graph area.

In some embodiments, after determining the writing area and the graph area in the display area of the display screen, the graph drawing command from the user is received. The graph drawing command may be a graph drawing command triggered by the user in the graph area, or a graph drawing command triggered by the user in the writing area.

It should be noted that if the graph drawing command is a touch gesture, and the user triggers the graph drawing command in the graph area, for example, the user draws a double-headed arrow in the graph area, the electronic whiteboard in the embodiments is configured with a text recognition and a graphic recognition function. In order to distinguish the user's writing trajectory information in the writing area and the user's writing trajectory information in the graph area, while the writing trajectory information is recognized, the text recognition and/or digital recognition on the writing trajectory information in the writing area is performed; and the graphic recognition on the writing trajectory information in the graph area is performed, which is mainly configured to recognize at least one of an arrow, a circle, and a rectangle. The use of different recognition methods can more quickly and accurately recognize the writing trajectory information in the writing area, and can also quickly recognize the graph drawing command from the user in the graph area, and quickly determine the type of the drawn graph.

In some embodiments, the division of the display area into a writing area and a graph area may also be determined in the following manner:
in response to an editing command from the user in the intelligent graphing mode with the graph type being determined, dividing the display area into the writing area and the graph area; where the graph area is used to display a graph corresponding to the graph type.

In some embodiments, if the user has selected a graph type and the device is in the intelligent graphing mode with the graph type being determined, the editing command can be triggered directly so as to divide the display area into the writing area and the graph area, to facilitate the user to carry out operations such as editing, writing, and so on, in the writing area, and displaying the writing trajectory information in the writing area in the graph area.

In some embodiments, a writing area and a graph area in a display area of the display screen are determined, where the writing area is configured to receive writing trajectory information from a user, and the graph area is configured to display a graph corresponding to the writing trajectory information. In the writing area of the display area, a writing prompt table corresponding to the chart type is displayed, and/or, in the graph area of the display area, a preset graph corresponding to the graph type is displayed. In some embodiments, the user may write content in respective cells of the writing prompt table and draw the content on the preset graph based on the written content.

In some embodiments, the user may also drag the contents in the writing area to change the position of the contents in the writing area, and may also drag the contents in the graph area to change the position of the contents in the graph area.

In some embodiments, in response to a dragging command from the user in the writing area, the content in the writing area is moved in a corresponding direction; or, in response to a dragging command from the user in the graph area, the content in the graph area is moved in a corresponding direction.

In some embodiments, the writing prompt table in the writing area in the embodiments is draggable. In response to a user's dragging command in the writing area, the writing prompt table is moved in a corresponding direction. Or, a preset graph in the graph area is draggable, and in response to a user's dragging command in the graph area, the preset graph is moved in a corresponding direction.

In some embodiments, after receiving the writing trajectory information written by the user in the writing prompt table, if it is determined that the user stops writing for a preset amount of time, the writing trajectory information in the writing prompt table is recognized, and a data recognition result is obtained. Drawing is performed on the preset graph according to the data recognition result, and a graph corresponding to the data recognition result is obtained.

In some embodiments, after obtaining the graph corresponding to the data recognition result, any one of the following embodiments is included.
(1) In response to a modification command from the user, the corresponding writing trajectory information is modified and the graph is updated according to the writing trajectory information after modification.
   During implementation, if the user partially modifies existing contents in the writing area, then according to the writing trajectory information after modification, the existing contents in the writing area will firstly be replaced by such writing trajectory information after modification, and the contents of the modified writing area will also be utilized to redraw the graph, and the existing graph in the graph area will be updated using the redrawn graph.
(2) In response to a content adding command from the user, the corresponding writing trajectory information is added, and the graph is updated according to the added writing trajectory information.
   During implementation, if the user adds new content on the basis of the existing content in the writing area, not only the added content is displayed in the writing area, but also the graph can be redrawn according to the writing trajectory information in the writing area after the addition, and the redrawn graph is updated and displayed in the graph area. Here, the newly added content includes, but is not limited to, content by backwards insertion, i.e., the newly added content is inserted in a position before or in the middle of the existing content. For example, if 0 is inserted in the middle of the existing 1 and 2, the newly added content becomes 1, 0, 2; or if 3 is inserted in front of 1 and 2, the newly added content becomes 3, 1, 2.
(3) In response to a stroke adding command from the user, a stroke of the corresponding writing trajectory information is added, and the graph is updated according to the writing trajectory information after the adding the stroke.

In some embodiments, strokes may be added to the existing text or digits, the content written by the user is re-recognized based on the added strokes, and the graph is redrawn based on the writing trajectory information after the added strokes, and the existing graph is updated using the redrawn graph.

In some embodiments, it may be determined whether the currently added writing trajectory information is a modification of the existing content, an addition to the existing content, or an addition to the original strokes, based on the location of the added writing trajectory information, and an area of overlap between the added writing trajectory information and the existing writing trajectory information. During implementation, for example, if the position of the newly added writing trajectory information overlaps with the position of the existing writing trajectory information, and the overlap area is greater than a threshold value, it is determined that the newly added writing trajectory information is a modification to the existing content. If the position of the newly added writing trajectory information overlaps with the position of the existing writing trajectory information, and the overlap area is not greater than the threshold value, it is determined that the newly added writing trajectory information is an addition of the existing strokes. If the position of the newly added writing trajectory information does not overlap with the position of the existing writing trajectory information, and the position of the newly added writing trajectory information is located before or in the middle of the position of the existing writing trajectory information, it is determined that the newly added writing trajectory information is an addition inserted before or in the middle of the existing content.

(4) In response to an erasing command from the user, the corresponding writing trajectory information is erased, and the graph is updated according to the writing trajectory information after erasing.

During implementation, the user's erasing command includes, but is not limited to, a erasing command via palm or a erasing command via eraser. Here, the erasing command via palm is a command triggered when the user erases the corresponding content in the writing area by simulating an eraser with the palm of the hand, and the erasing command via eraser is a command triggered by the user clicking an eraser option in the menu bar.

(5) In response to a screen-clearing command from the user, all writing trajectory information is cleared.

During the implementation, it can be configured with a function of clearing the screen with one click. By selecting the screen-clearing command, all the writing trajectory information in the writing area is cleared, while the graph in the graph area can also be retained.

In some embodiments, after the display area is divided into the writing area and the graph area, any of the following commands from the user can be received in the graph area, where
in response to a full-screen preview command from the user, the graph area is displayed in full screen; or
in response to an annotation operation from the user in the graph area, the content corresponding to the annotation operation is displayed; or,
in response to an erasing operation from the user in the graph area, the content corresponding to the erasing operation in the graph area is removed; or,
in response to a screen-clearing operation from the user in the graph area, the content in the graph area is cleared; or,
in response to a save operation from the user in the graph area, the content in the graph area is saved; or,
in response to a command for switching graph type from the user, a current graph type is switched; or,
in response to an insertion command in the graph area from the user, the content in the graph area of the current display interface is inserted into the previous display interface.

In some embodiments, after determining a writing area and a graph area in the display area of the display screen, the writing trajectory information in the writing area from the user is received, in response to the graph drawing command from the user in the graph area, the writing trajectory information in the writing area is recognized, a graph of a corresponding graph type is drawn based on the table data determined according to the data recognition result, and the graph is displayed in the graph area.

The graph area is a part or all of a display area of the electronic whiteboard. If the graph area is a part of the display area, the remaining area of the display area is a writing area for receiving the user's writing trajectory information, and touch control operation. The graph area is used for receiving a graph drawing command from the user and for graphical display. The graph drawing command includes at least one of a touch gesture or a touch command, for which the disclosure is not limited herein.

In some embodiments, the embodiments may partition the display area into a writing area and a graph area by any of the following manners.

Manner 1: the display area is divided into a writing area and a graph area in advance.

In this manner, the writing area and the graph area are displayed in the display area directly after the device is started; or, the writing area and the graph area are displayed in the display area directly after a preset application is started.

During implementation, for example, the display area is divided into a writing area and a graph area in response to a command for enabling the intelligent graphing mode of the electronic whiteboard from the user; or, the display area is divided into a writing area and a graph area in response to an editing command from the user in the intelligent graphing mode with the graph type being determined.

Manner 2: in response to receiving a selection on a partition button from the user, the display area is divided into a writing area and a graph area.

In this manner, before receiving the selection on the partition button from the user, normal writing interactions can be carried out in all areas of the electronic whiteboard. When the user selects the partition button, it will re-trigger the generation of a new display area, which is divided into a writing area and a graph area.

Manner 3: After determining the writing is finished, the display area is divided into a writing area and graph area.

In this manner, the divided writing area contains the writing trajectory information obtained from the user's writing.

Meanwhile, in any of the above manners, a partition tag can be displayed in each partition of the display area for the user to distinguish, for example, "writing area" can be displayed in the writing area, and "graph area" can be displayed in the graph area.

In some embodiments, the display area is divided into a writing area and a graph area, and the relationship between the writing area and the graph area includes, but is not limited to, any one or more of the followings.

Type 1: as shown in FIG. 7A, the writing area and the graph area are not overlapping in position.

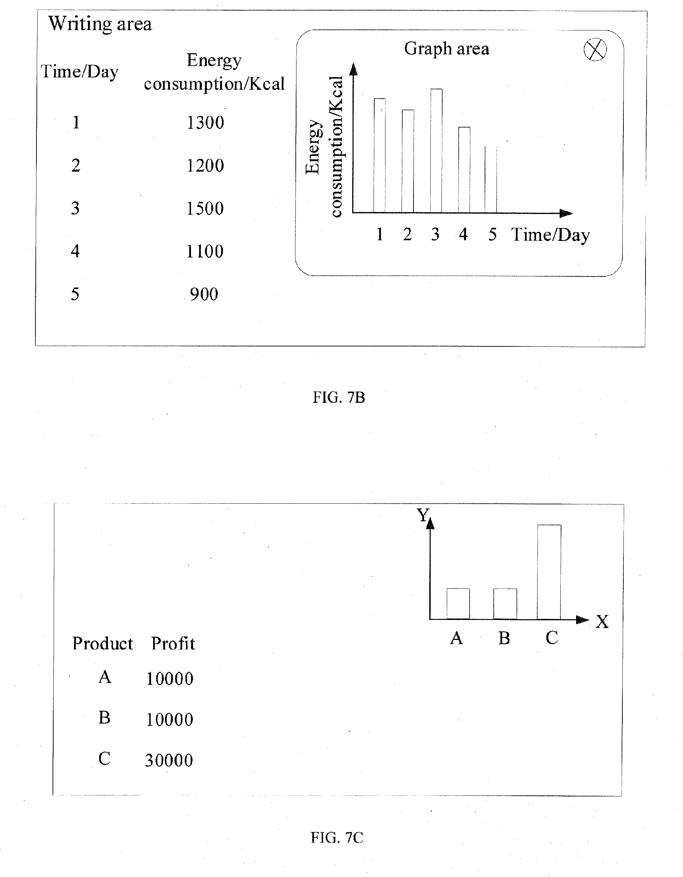

Type 2: as shown in FIG. 7B, the graph area floats above the writing area and does not obscure content in the writing area.

Type 3, the writing area and the graph area are in axial symmetry.

Type 4, as shown in FIG. 7C, the writing area and the graph area in central symmetry.

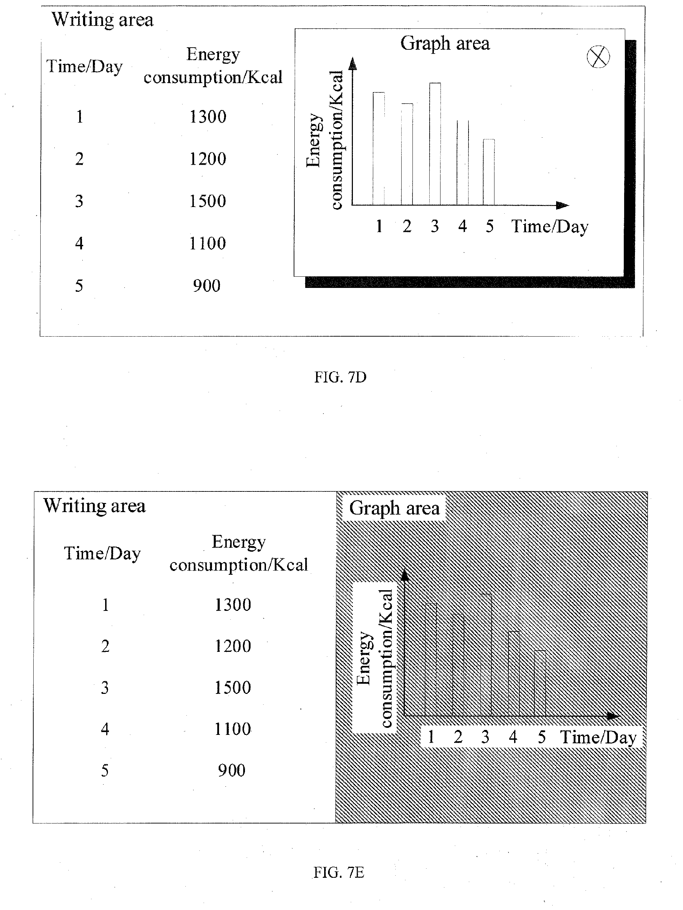

Type 5: as shown in FIG. 7D, the writing area and the graph area have different shapes; or, the writing area and the graph area have the same shape.

Type 6: as shown in FIG. 7E, the writing area and the graph area have different backgrounds; or, the writing area and the graph area have the same background.

Type 7: the writing area and the graph area are of different sizes; or, the writing area and the graph area are of the same size.

It should be noted that the above relationships between the writing area and the graph area are only shown as examples, and based on the same inventive concept, other relationships between the writing area and the graph area also fall within the scope of protection of the disclosure, which is not limited herein.

In some embodiments, the display area is divided into a writing area and a graph area, here the writing area and the graph area each occupy half of the display area, i.e., the display area is divided equally into the writing area and the graph area. Alternatively, the display area is divided into the writing area and the graph area according to a predetermined proportional relationship between the size of the writing area and the size of the graph area. The shapes and sizes of the writing area and the graph area may be the same or different, which are not limited herein.

In some embodiments, the graph area in the embodiments may be determined in any of the following ways.

Way 1: a graph area in a display area of the display screen is determined based on predefined positional information.

During implementation, after the electronic whiteboard is powered on or a predefined application is started in this manner, the display area is divided into a writing area and a graph area. The graph area may be placed on the right side or the left side or the upper side or the lower side of the writing area.

Way 2: in response to a first partition command in the display area from a user, a graph area corresponding to the first partition command in the display area is determined.

Optionally, one way is to pre-set different graph areas corresponding to different first partition commands, and determine the graph area corresponding to the first partition command according to the received first partition command. In this way, when the user inputs the first partition command in the display area, the display area is divided into a writing area and a graph area, and the position of the graph area corresponds to the first partition command. If the first partition command is not received from the user, the display area is regarded as the writing area for normal writing. Here, different first partition commands can be triggered via different buttons, which is not limited too much herein. Another way is to pre-set the graph area and directly display the pre-set graph area after receiving the first partition command. In this way, when the user inputs the first partition command in the display area, the display area will be divided into a writing area and a graph area, and the position of the graph area is fixed.

During implementation, the user can normally use the function of the electronic whiteboard to carry out normal writing interactions when there is no need for drawing. When there is a need for drawing graph, the user can trigger the display area of the electronic whiteboard to be partitioned by selecting the keys on the current display area or the keys of the stylus. After partitioning, the user can still perform normal writing interactions in the writing area, and if the user inputs a graph drawing command in the graph area and waits for a preset amount of time, the graph will be displayed in the graph area.

In some embodiments, the user may also partition the display area again after partitioning. After displaying the drawn graph in the graph area, the writing area and the graph area are partitioned again in the following manner, so as to facilitate the conversion of the table contents written by the user again into the corresponding graph for display. In this case, the writing area includes the two table contents written by the user, and the corresponding graph area includes the graphs corresponding to the two table contents written by the user. The details of the manner are as follows.

In response to a second partition command from the user, the writing area is divided into a first writing area and a second writing area, and the graph area is divided into a first graph area and a second graph area.

It should be noted that the first writing area and the second writing area obtained by the division in the embodiments may be adjacent to each other or may be separated by a graph area, and likewise, the first graph area and the second graph area may be adjacent to each other or may be separated by a writing area. For example, in the case that both the writing area and the graph area are divided, the first writing area and the second writing area, the first graph area and the second graph area are obtained as, in an order from left to right in the display area, the first writing area, the second writing area, the first graph area, and the second graph area; or, the obtained areas in order from left to right are the first writing area, the first graph area, the second writing area, and the second graph area; or, the obtained areas in the order from left to right are the first writing area, the first graph area, the second graph area, and the second writing area; or, the obtained areas in the order from left to right are the first graph area, the first writing area, the second writing area, and the second graph area. The embodiments do not impose excessive limitations on the position relationship between the writing area and the graph area obtained by the division.

Here, the first writing area is configured to display writing trajectory information received before area division, the second writing area is configured to display writing trajectory information received in the second writing area after area division, the first graph area is configured to display a graph corresponding to the writing trajectory information in the first writing area, and the second graph area is configured to display a graph corresponding to the writing trajectory information in the second writing area.

In particular, after dividing the writing area into a first writing area and a second writing area, the second writing area can be used to receive the user's writing trajectory information. The user can input the content of the graph to be generated in the second writing area, the first writing area still retains the content of the user's writing prior to the division. Optionally, the first writing area can also be used to receive the user's writing trajectory information. The first graph area still displays the graph corresponding to the content of the user's writing prior to the division. The second graph area displays the graph corresponding to a table content newly written by the user. Thus, the conference user is allowed to simultaneously view the table data written twice and the corresponding graphs, so as to facilitate comparison and improve the user's conference interaction experience.

It should be noted that after receiving a second partition command from the user, before dividing the writing area into the first writing area and the second writing area, the writing trajectory information in the writing area can be scaled, panned, or by other operations. In response to the second partition command from the user, the previous writing trajectory information in the writing area is moved to the first writing area, and the writing trajectory information previously in the writing area can be scaled according to the size of the first writing area.

In some embodiments, a method of modifying the writing trajectory information and displaying the graphs by comparison is provided, which includes: obtaining writing trajectory information after modification, determining the data contents in the table corresponding to the writing trajectory information after modification, redrawing a graph according to all of the modified data contents, displaying the redrawn graph and the original graph before modification in the same coordinate axes or in different pie charts, to compare the data contents in the table before modification and the data contents in the table after modification, which is visualized in the form of a graph for comparison, effectively improving the user's interactive experience of the meeting.

In some embodiments, in response to the modification command from the user, the writing trajectory information after modification is obtained and stored in a first storage zone, where the first storage area is not the same as a storage zone where the writing trajectory information before modification is located.

During implementation, by storing the original writing trajectory information and the writing trajectory information after modification in different storage zones, the writing trajectory information can be obtained more quickly from the different storage zones when the recognition of the writing trajectory information is performed, so as to distinguish the writing trajectory information after modification from the writing trajectory information before modification during the recognition.

In some embodiments, the modification command from the user in the embodiments includes, but is not limited to, at least one of: a command triggered via a different tip of the stylus, a command triggered via a different button of the stylus, or a command triggered via a switching button on the display area.

During implementation, when the user modifies the original writing content in the writing area, whether the writing trajectory information has been modified is determined in the following manner.

Manner 1: it is determined that the writing trajectory information has been modified according to a writing switch command received via the stylus.

Specifically, it is determined that a writing switch command via the stylus is received in the following manners.

Manner 1-1: it is determined that the writing switch instruction via the stylus is received based on that a writing command is received via a different tip of the stylus.

During implementation, if a dual-tip stylus is used, writing commands triggered via different tips of the dual-tip stylus are different. If a first tip is used when writing in the writing area for the first time, and the second tip is used when the content of the writing is modified, the writing switch command via the stylus is determined to be received after the electronic whiteboard receives the writing command triggered via the second tip. In this case, it is determined to modify the writing trajectory information, and the writing trajectory information generated via the second tip is stored in the first storage zone for use in drawing the graph later.

Manner 1-2: it is determined that the writing switch command via the stylus is received according to a selection command triggered via different keys of the stylus.

During implementation, if a first stylus corresponding to a first button is used when writing in the writing area for the first time, and a second stylus corresponding to a second button is used when the written content is modified, the electronic whiteboard determines that the writing switch command via the stylus is received after the electronic whiteboard receives the writing command triggered via the second stylus. In this case, it determines that the writing trajectory information is modified, and the writing trajectory information generated via the second stylus is stored in the first storage zone for later use when drawing the graph.

Manner 2: it is determined that the writing trajectory information is modified in response to a switch command generated via a selection on a switch button on the display area from the user.

In some embodiments, it is determined that the writing trajectory information is modified based on a switch command generated via a selection on a switch button on the display area from the user. In some embodiments, a switch button is provided in the graph area, and the user enables the switch button (e.g., by clicking the switch button once), the writing trajectory information is stored in a first storage zone; and the user disables the switch button (e.g., by clicking the switch button twice), the writing trajectory information is stored in a storage zone other than the first storage zone.

In some embodiments, after responding to the user's modification command, the modified contents can be displayed differentially, specifically including:
determining a first content before modification corresponding to the modification command and a second content after the modification corresponding to the modification command; and
displaying the first content and the second content simultaneously, where the first content and the second content are displayed in different formats.

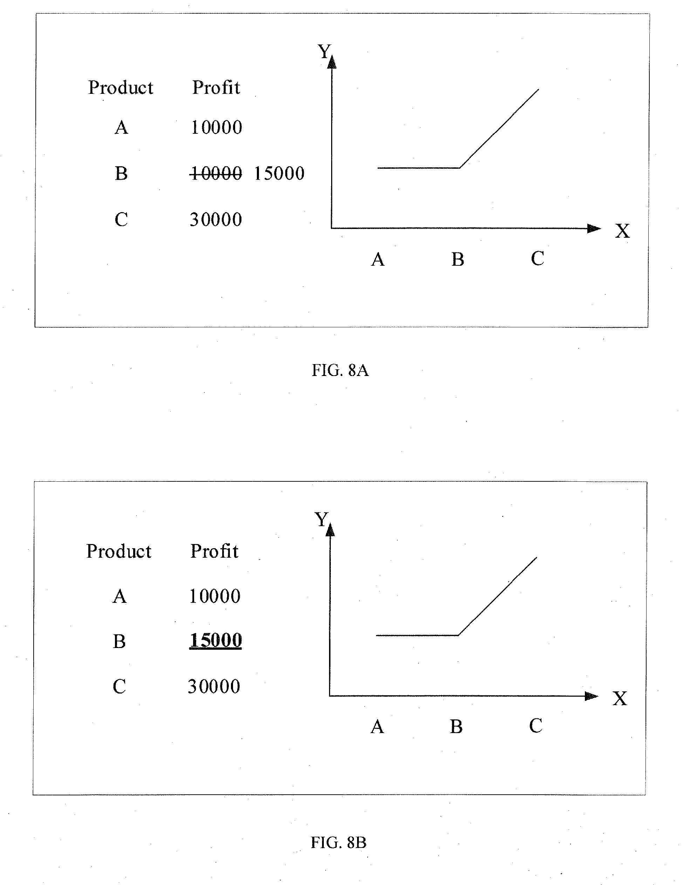

Here, the first content and the second content are displayed in a different color, or in a different font style, or in a different font size; or, the first content is marked for deletion and the second content is bolded for display. The first content and the second content are displayed in the manner shown in FIGS. 8A and 8B.

In some embodiments, after obtaining the writing trajectory information after modification and storing it in the first storage zone, all the writing trajectory information obtained after the modification is recognized if a graph drawing command from the user is received again, and the graph is drawn. Here, the graph is drawn based on the same coordinate axes as the graph drawn according to all the original writing trajectory information before the modification, and, on the basis of retaining the originally displayed graph, the graph corresponding to the writing trajectory information after modification is plotted in the coordinate axes of the original graph to provide the user with a comparison of the data to improve the interactive experience of the meeting.

In some embodiments, after obtaining the writing trajectory information after modification and storing it in the first storage zone, it is further configured to perform the following steps.

Step 1, the writing trajectory information after modification is obtained from the first storage zone, and a first graph is drawn based on the writing trajectory information before modification and the writing trajectory information after modification.

During implementation, after obtaining the writing trajectory information after modification, if a graph drawing command from the user is received again, the first graph is triggered to be generated again in response to the user's graph drawing instruction. Here, the first graph includes a first table data corresponding to the writing trajectory information before modification, and a second table data corresponding to the writing trajectory information after modification.

In some embodiments, the first graph is drawn by the following steps.

Step 1-1, a first cell corresponding to the writing trajectory information after modification is determined according to various cells divided based on the writing trajectory information before modification.

Step 1-2: the writing trajectory information in the first cell before the modification is replaced with the writing trajectory information after the modification.

Step 1-3: the writing trajectory information in the various cells after replacement is recognized, and the data content in the various cells is obtained. During implementation, the handwriting recognition algorithm may be used to recognize the writing trajectory information and obtain the data content in the various cells.

Steps 1-4: the second table data is determined according to the data content in various cells.

Step 2: the first table data corresponding to the writing trajectory information before modification and the second table data are simultaneously displayed in in the first graph, where the first table data and the second table data are displayed in different styles.

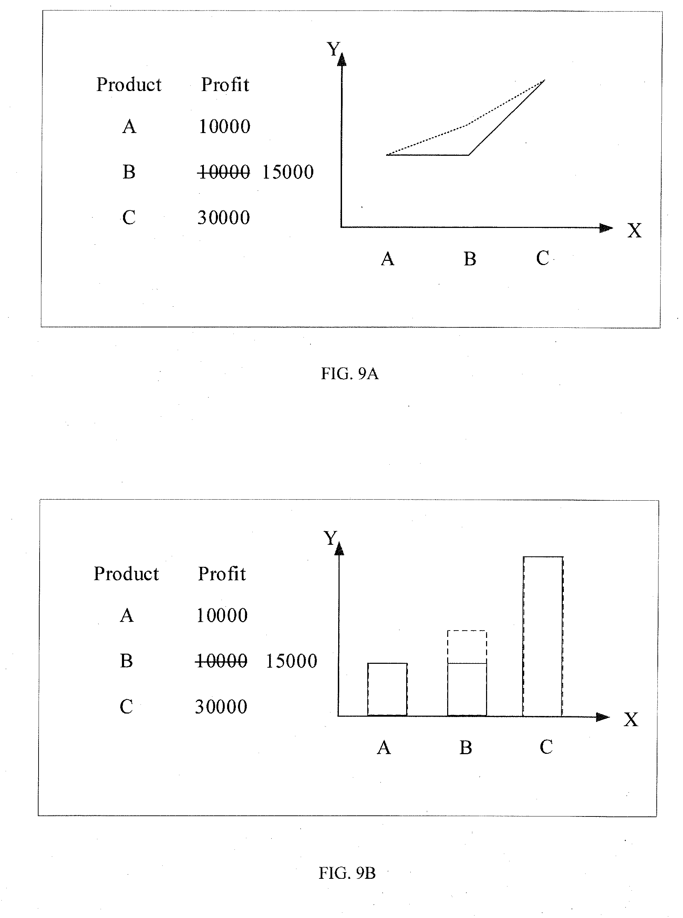

In some embodiments, as shown in FIG. 9A, if the graph type corresponding to the graph drawing command indicates a line graph, the first table data and the second table data are displayed simultaneously on the same axis.

As shown in FIG. 9B, if the graph type corresponding to the graph drawing command indicates a histogram, the first table data and the second table data are displayed simultaneously on the same axis.

In some embodiments, after obtaining the writing trajectory information after modification and storing it in the first storage zone, a second graph and a third graph may also be drawn, as implemented below:
acquiring the writing trajectory information after modification from the first storage zone, drawing a second graph based on the writing trajectory information before modification, and drawing a third graph based on the writing trajectory information after modification; and
displaying the second graph and the third graph simultaneously.

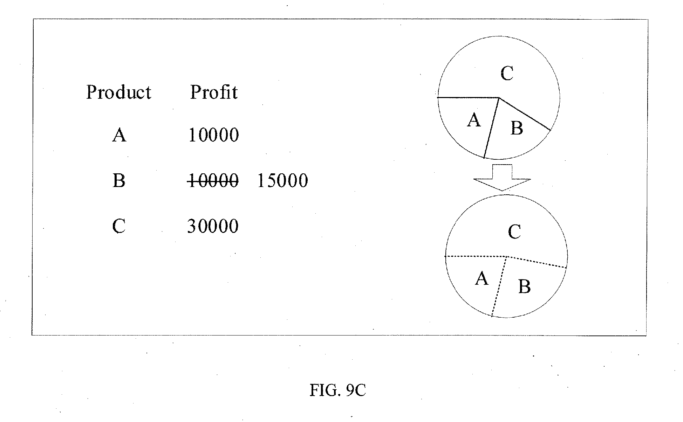

As shown in FIG. 9C, if the graph type corresponding to the graph drawing command indicates a pie chart, the second graph and the third graph are simultaneously displayed in different pie charts.

Here, the second graph and the third graph have different display styles. In some embodiments, the display style includes, but is not limited to, at least one of color, shape, and line thickness. During implementation, in order to distinguish the second graph and the third graph in display, lines of different colors may be used for drawing, or lines of different shapes may be used for drawing, or lines of different thickness may be used for drawing, which are not limited too much in the embodiments.

In some embodiments, the recognition of the writing trajectory information (including digits, graphics, titles of various coordinate axes, etc.) in the embodiments may be realized by using a neural network such as a convolutional neural network (CNN), a recurrent neural network (RNN), etc., such as long short-term memory (LSTM) network model, etc.

In some embodiments, the embodiments also provide a text recognition model for recognizing the writing trajectory information, and the specific recognition process is shown below:
inputting the writing trajectory information into the text recognition model for recognition, and outputting data content corresponding to the writing trajectory information; where the text recognition model includes a plurality of BiLSTM network layers and a fully connected layer, an input of any one of the BiLSTM network layers other than the first two BiLSTM network layers is connected with at least two outputs, and an input of the fully connected layer is connected with at least three outputs;
where the at least two outputs include outputs of any two BiLSTM network layers prior to the any one BiLSTM network layer, and the at least three outputs include outputs of any three BiLSTM network layers prior to the fully connected layer.

In some embodiments, an output of any one of BiLSTM network layers prior to a BiLSTM network layer except the last BiLSTM network layer serves as an input to at least two BiLSTM network layers after the BiLSTM network layer.

In some embodiments, the any one of BiLSTM network layers is obtained after deleting the network parameters using a Dropout layer during model training, and the any one of the BiLSTM network layers includes hidden layers, where the number of the hidden layers is lower than a preset value.

In some embodiments, the text recognition model includes four BiLSTM network layers and a fully connected layer. A first BiLSTM network layer includes a first input and a first output, a second BiLSTM network layer includes a second input and a second output, a third BiLSTM network layer includes a third input and a third output, and a fourth BiLSTM network layer includes a fourth input and a fourth output.

The first input is used for input of the writing trajectory information, the second input is connected with the first output, the third input is connected with the first and second outputs, the fourth input is connected with the first, second and third outputs, the fourth output is connected with an input of the fully connected layer, and the output of the fully connected layer is used to output data content corresponding to the writing trajectory information.

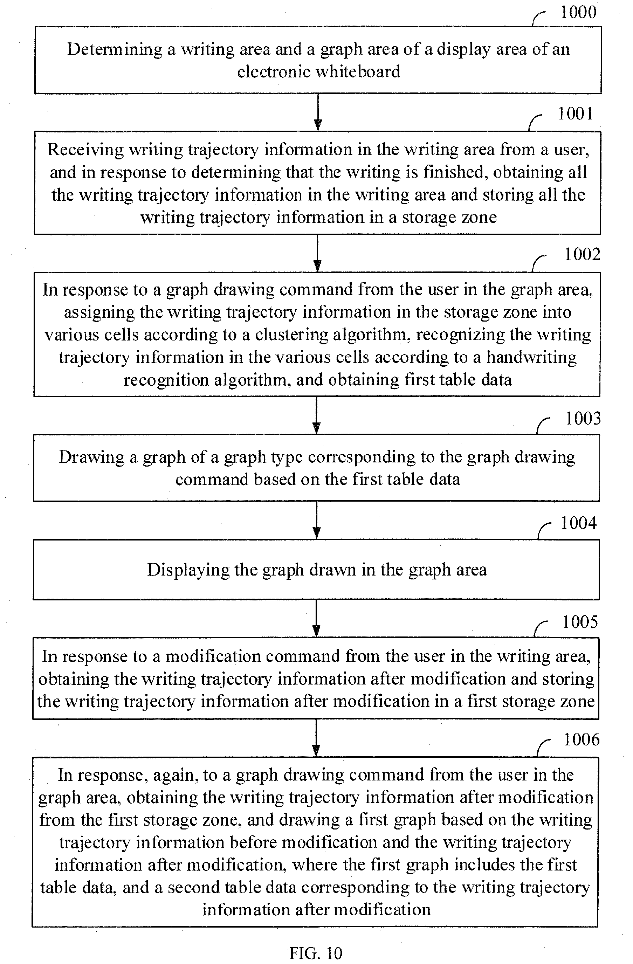

In some embodiments, as shown in FIG. 10, a graph drawing method provided by embodiments of the disclosure is illustrated in detail in a writing scenario without table boarders, using a partition as an example.

Step 1000: determining a writing area and a graph area of a display area of an electronic whiteboard.

Step 1001: receiving writing trajectory information in the writing area from a user, and in response to determining that the writing is finished, obtaining all the writing trajectory information in the writing area and storing all the writing trajectory information in a storage zone.

Step 1002: in response to a graph drawing command from the user in the graph area, assigning the writing trajectory information in the storage zone into various cells according to a clustering algorithm, recognizing the writing trajectory information in the various cells according to a handwriting recognition algorithm, and obtaining first table data.

Step 1003: drawing a graph of a graph type corresponding to the graph drawing command based on the first table data.

Step 1004: displaying the graph drawn in the graph area.

Step 1005: in response to a modification command from the user in the writing area, obtaining the writing trajectory information after modification and storing the writing trajectory information after modification in a first storage zone.

Step 1006: in response, again, to a graph drawing command from the user in the graph area, obtaining the writing trajectory information after modification from the first storage zone, and drawing a first graph based on the writing trajectory information before modification and the writing trajectory information after modification, where the first graph includes the first table data, and a second table data corresponding to the writing trajectory information after modification.

Here, the first table data and the second table data are displayed in different ways. For example, the colors or the formats of the lines, and so on, are different.

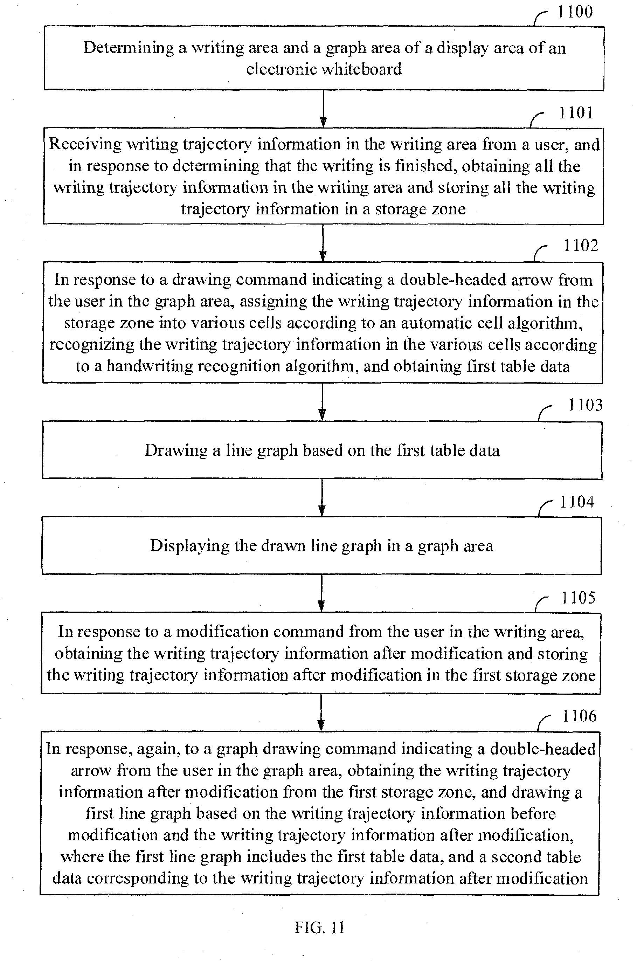

In some embodiments, as shown in FIG. 11, in a writing scenario without table boarders, embodiments of the disclosure provide a flow process for drawing a line graph, as shown below.

Step 1100, determining a writing area and a graph area of a display area of an electronic whiteboard.

Step 1101: receiving writing trajectory information in the writing area from a user, and in response to determining that the writing is finished, obtaining all the writing trajectory information in the writing area and storing all the writing trajectory information in a storage zone.

Step 1102: in response to a drawing command indicating a double-headed arrow from the user in the graph area, assigning the writing trajectory information in the storage zone into various cells according to an automatic cell algorithm, recognizing the writing trajectory information in the various cells according to a handwriting recognition algorithm, and obtaining the first table data.

Step 1103: drawing a line graph based on the first table data.

Step 1104: displaying the drawn line graph in a graph area.

Step 1105: in response to a modification command from the user in the writing area, obtaining the writing trajectory information after modification and storing the writing trajectory information after modification in the first storage zone.

Step 1106: in response, again, to a graph drawing command indicating a double-headed arrow from the user in the graph area, obtaining the writing trajectory information after modification from the first storage zone, and drawing a first line graph based on the writing trajectory information before modification and the writing trajectory information after modification, where the first line graph includes the first table data, and a second table data corresponding to the writing trajectory information after modification.

Here, the first table data and the second table data are displayed in different ways.

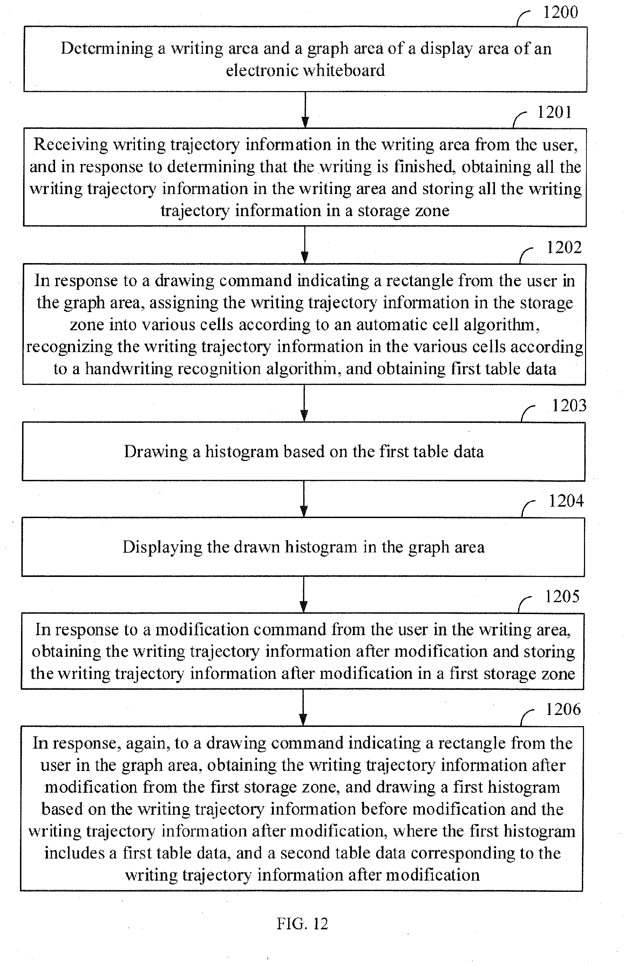

In some embodiments, as shown in FIG. 12, in a writing scenario without table boarders, embodiments of the disclosure provide a flow process for drawing a histogram as shown below.

Step 1200: determining a writing area and a graph area of a display area of an electronic whiteboard.

Step 1201: receiving writing trajectory information in the writing area from the user, and in response to determining that the writing is finished, obtaining all the writing trajectory information in the writing area and storing all the writing trajectory information in a storage zone.

Step 1202: in response to a drawing command indicating a rectangle from the user in the graph area, assigning the writing trajectory information in the storage zone into various cells according to an automatic cell algorithm, recognizing the writing trajectory information in the various cells according to a handwriting recognition algorithm, and obtaining first table data.

Step 1203: drawing a histogram based on the first table data.

Step 1204: displaying the drawn histogram in the graph area.

Step 1205: in response to a modification command from the user in the writing area, obtaining the writing trajectory information after modification and storing the writing trajectory information after modification in a first storage zone.

Step 1206: in response, again, to a drawing command indicating a rectangle from the user in the graph area, obtaining the writing trajectory information after modification from the first storage zone, and drawing a first histogram based on the writing trajectory information before modification and the writing trajectory information after modification, where the first histogram includes a first table data, and a second table data corresponding to the writing trajectory information after modification.

Here, the first table data and the second table data are displayed in different ways.

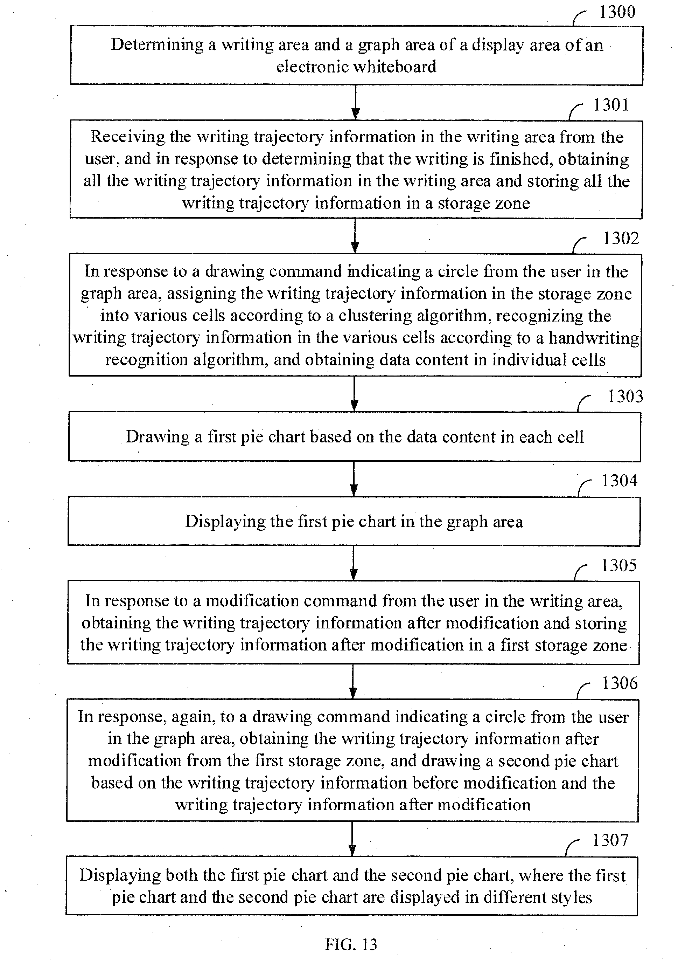

In some embodiments, as shown in FIG. 13, in a writing scenario without table boarders, embodiments of the disclosure provide a flow process for drawing a pie chart as shown below.

Step 1300: determining a writing area and a graph area of a display area of an electronic whiteboard.

Step 1301: receiving the writing trajectory infonnation in the writing area from the user, and in response to determining that the writing is finished, obtaining all the writing trajectory information in the writing area and storing all the writing trajectory information in a storage zone.

Step 1302: in response to a drawing command indicating a circle from the user in the graph area, assigning the writing trajectory information in the storage zone into various cells according to a clustering algorithm, recognizing the writing trajectory information in the various cells according to a handwriting recognition algorithm, and obtaining data content in individual cells.

Step 1303: drawing a first pie chart based on the data content in each cell.

Step 1304: displaying the first pie chart in the graph area.

Step 1305: in response to a modification command from the user in the writing area, obtaining the writing trajectory information after modification and storing the writing trajectory information after modification in a first storage zone.

Step 1306: in response, again, to a drawing command indicating a circle from the user in the graph area, obtaining the writing trajectory information after modification from the first storage zone, and drawing a second pie chart based on the writing trajectory information before modification and the writing trajectory information after modification.

Step 1307, displaying both the first pie chart and the second pie chart, where the first pie chart and the second pie chart are displayed in different styles.

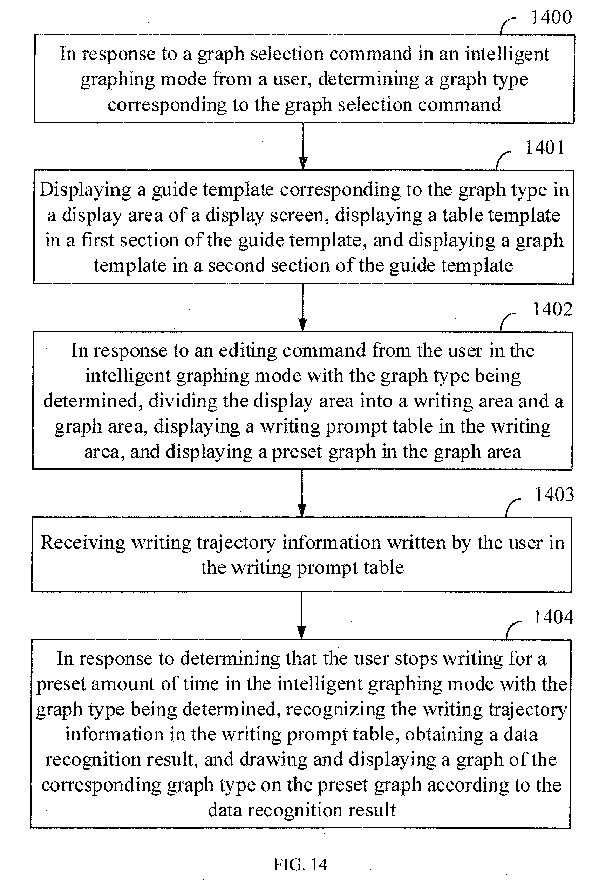

In some embodiments, as shown in FIG. 14, the embodiments provide a method for displaying a graph in a writing scenario with table boarders, and specific implementation steps of the method are shown below.

Step 1400: in response to a graph selection command in an intelligent graphing mode from a user, determining a graph type corresponding to the graph selection command.

Step 1401: displaying a guide template corresponding to the graph type in a display area of a display screen, displaying a table template in a first section of the guide template, and displaying a graph template in a second section of the guide template.

Step 1402: in response to an editing command from the user in the intelligent graphing mode with the graph type being determined, dividing the display area into a writing area and a graph area, displaying a writing prompt table in the writing area, and displaying a preset graph in the graph area.

Step 1403: receiving writing trajectory information written by the user in the writing prompt table.

Step 1404: in response to determining that the user stops writing for a preset amount of time in the intelligent graphing mode with the graph type being determined, recognizing the writing trajectory information in the writing prompt table, obtaining a data recognition result, and drawing and displaying a graph of the corresponding graph type on the preset graph according to the data recognition result.

In some embodiments, the data recognition result includes a plurality of data groups, any one of the data groups includes the content written by the user in any column of the writing prompt table, or the content written by the user in any row of the writing prompt table. During implementation, based on a position relationship between each trajectory point in the writing trajectory information and each cell in the writing prompt table, the writing trajectory information contained in each cell is determined. The writing trajectory information contained in each cell is recognized, and the data content of each cell is obtained. The data contents of respective cells are grouped by columns to obtain a plurality of data groups, or, the data contents of the respective cells are grouped by rows to obtain a plurality of data groups.

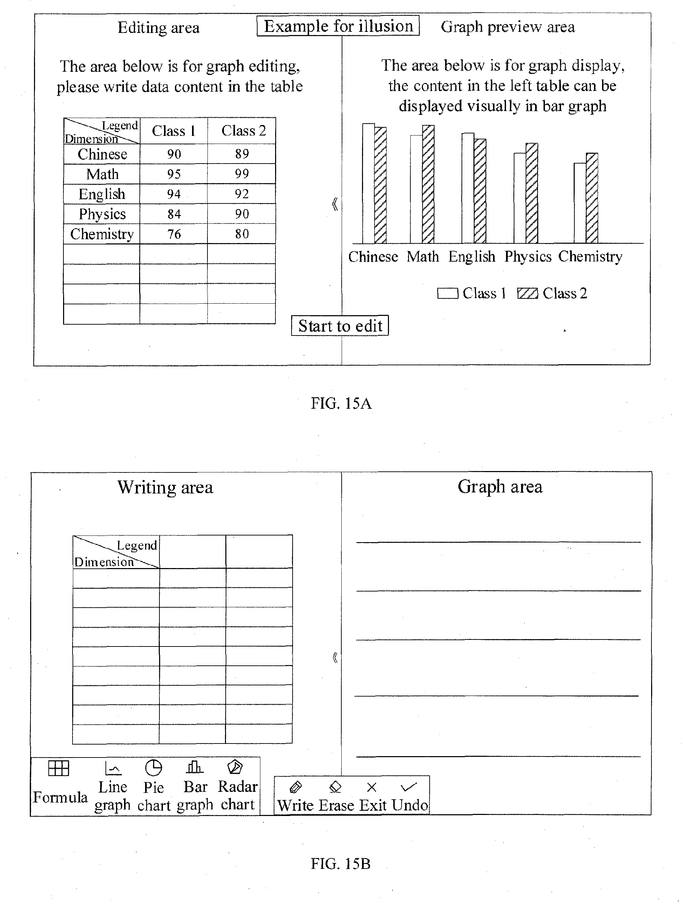

As shown in FIGS. 15A-15E, in a writing scenario with table boarders, a bar graph is taken as an example, and the different interfaces displayed by the electronic whiteboard are explained as follows during the graph display.

As shown in FIG. 15A, the user inputs a graph selection command indicating a bar graph in the intelligent graphing mode. In response to the graph selection command, it is determined that the graph type corresponding to the graph selection command indicates a bar graph, and a guide template corresponding to the bar graph is displayed in a display area. The guide template includes a first partition and a second partition, where the first partition is an editing area for displaying a table template, and the second partition is a graph preview area for displaying the graph template. The first row and the first column in the table template is filled with gray color to indicate that it is not available for writing, and the remaining columns are used to prompt the user for the contents in the columns. For example, the content of the first column is the title of the horizontal axis, and the content of the first row shows legends, which indicates the bar names. Different legends are indicated by the bars with different filling contents. The rest of the contents are specific data for indicating the heights of the bars corresponding to the titles and legends. An edit button may also be displayed in the display interface, or a button for closing the display interface may be clicked to trigger an edit command. It should be noted that, after editing the bar graph, when the interface goes back to the bar graph after switching to another graph, the editing content is displayed directly without entering again into the guide template of the bar graph. In this case, the guide template is merely displayed when first opening the function of the intelligent graphing mode with the graph type being determined.

As shown in FIG. 15B, the user inputs an editing command in the display interface of the guiding template for the bar graph. In response to the editing command from the user in the intelligent graphing mode for the bar graph, the display area is divided into a writing area and a graph area, the writing prompt table is displayed in the writing area, and the preset graph is displayed in the graph area. Here, no data content is included in the writing prompt table, the cells in the first column of the first row are not editable, and the number of rows and columns of the writing prompt table is fixed. For example, a table of 3 rows and 12 columns can be constructed by table boarders of 4* 13, the writing prompt table is defined by the table boarders, and the style of the preset graph is determined according to a preset UI style.

Optionally, the writing prompt table in the writing area can be dragged. For example, the initial position of the writing prompt table is set, the writing prompt table can be dragged downward until a critical row can be completely displayed and the critical row cannot be dragged downward again. Here, the user can drag the writing prompt table to move by a multi-finger touch, for example, the writing prompt table can be moved via a touch with two to four fingers.

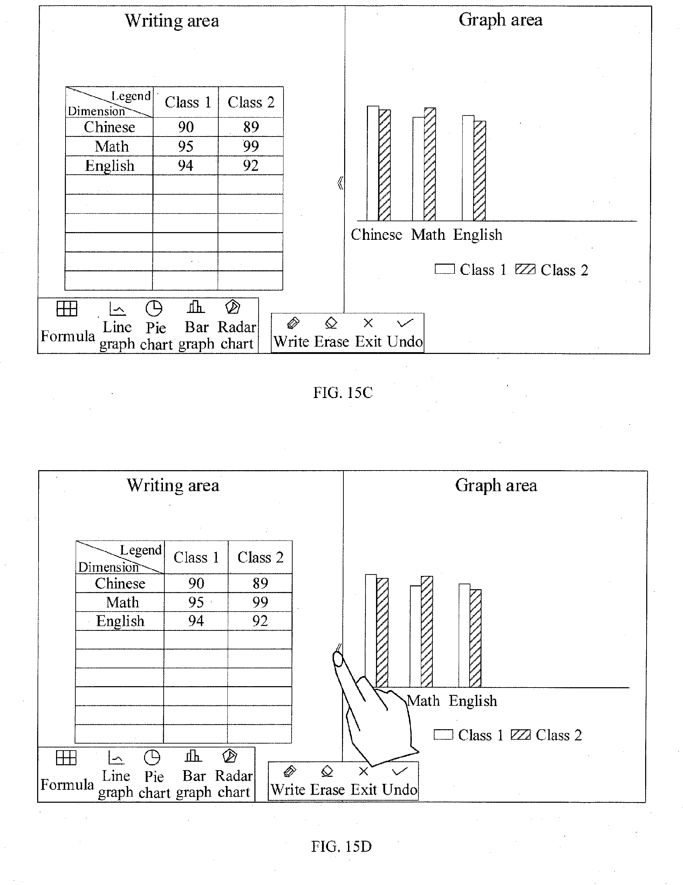

As shown in FIG. 15C, in this case, the user can write content in the writing prompt table, and the content written by the user in the writing prompt table can be drawn into a graph in real time in the preset graph and then displayed. Here, the basic functions that can be set for writing include a 6.5px hard brush, erase, one-key screen clearing, exit, insertion command, etc., where the insertion command is used to insert the content of the graph area of the current display interface to the previous display interface. If the user inputs the insertion command, the inserted graph is selected by default in the display interface, and operations such as moving, scaling, deleting, copying, rotating, etc. can be performed on the graph.

The writing rules of the bar graph include, but are not limited to: (1) at least one cell of legal content should be written before drawing the data to the bar graph, and the cell in the first row and the first column cannot be written; (2) the first row is used for the title 1 which corresponds to legend, if the user does not write the legend, the legend is not shown, where the legend of the bar graph indicates the name of the bars, the different bars can be differentiated by different colors, fill content and so on; (3) the first column is used for title 2 which corresponds to the title on the horizontal coordinate axis, if the user does not write content in the first column, the title 2 is not presented in the horizontal coordinate; (4) the data is written starting from the second row and the second column, and the data formats as integers and decimals are supported only; the written data is necessary for generating the corresponding graph, and if non-data content written in the corresponding cell, the corresponding bar will not be displayed; (5) The content written in each column serves as a data group, after one second from stopping writing, the corresponding graph is generated according to each data group; (6) the drawing of the bar graph is based on the cells with written content located in the lower right corner of the left side of the writing prompt table; on this basis, for the cells ranked ahead, "0" is added for an empty cell, title 1 is not shown if title 1 is absent, and title 2 is not shown if title 2 is absent.

The recognition is performed after 1s from the stopping of the writing of the user, and at this time, the handwritten content from the user in the writing prompt table is retained. If the user adds or modifies the data content in the writing prompt table, the writing trajectory information in the writing prompt table is recognized again after the user stops writing for 1s. It should be noted that if none of the writing contents in the writing prompt table after the recognition meets the writing requirements, the bar graph is not updated.

Optionally, the user can also drag the writing prompt table after writing. In this case, the writing prompt table and the content written in the writing prompt table can be dragged at the same time. Based on a moving position of the writing prompt table, the position of the writing trajectory information in each cell of the writing prompt table will be moved correspondingly in such a way that the user's written content is unchanged in the position of the writing prompt table.

Optionally, switching buttons for different functions can also be displayed in the display interface. For example, if the user clicks on the formula button, the current display interface is switched to the display interface with the formula function; if the user clicks on the button for line graph, the current display interface is switched to the display interface with the line graph function. Optionally, icons for editing, such as an icon for writing, an icon for erasing, an icon for exit, an icon for withdrawing, and the like, can also be displayed in the display interface, so that the user can conveniently switch the current writing function via the icon for editing in the process of writing in the writing area. For example, the user clicks on the icon for erasing after writing to erase the corresponding content. Here, if the user clicks on the icon for exit, a dialog box asking the user whether to confirm the exit can be popped up.

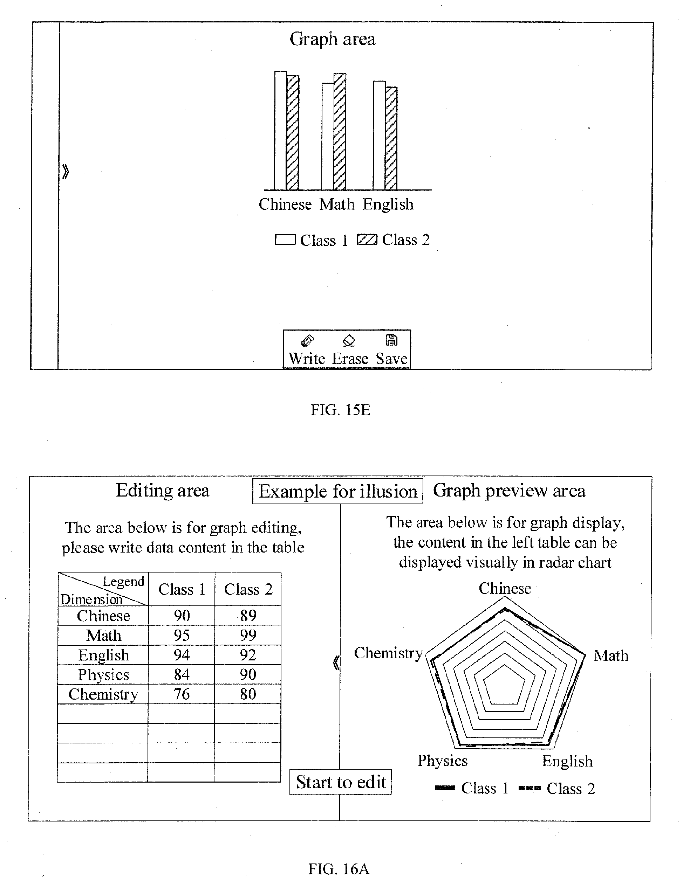

As shown in FIG. 15D, a full-screen button in this display interface can be clicked for previewing the displayed bar graph in full-screen. For example, an arrow button can be set at the boundary line between the writing area and the graph area, and in response to a selection on the arrow button, the full-screen mode is enabled, and the display interface for the bar graph in the full-screen mode is shown in FIG. 15E. In the full-screen mode, the graph in the original graph area is displayed in the center, and the size ratio is consistent with the preset UI design. In the full-screen mode, users can write in the graph area for marking or annotating, in which the basic functions of writing include: red hard pen, erasing in regular eraser size, one-key screen clearing, palm erasing, etc. The current graph area contents can be saved, for example, the graph with annotation can be displayed in the graph area. In the full-screen mode, you can also click the right slide button to disable the full-screen mode, and the previous mode, i.e. the edit mode, is enabled. In this case, the contents of the graph area will be retained when exiting the full-screen mode; and the contents of the graph area in the full-screen mode will be retained if switching to an intelligent graphing mode for another graph type.

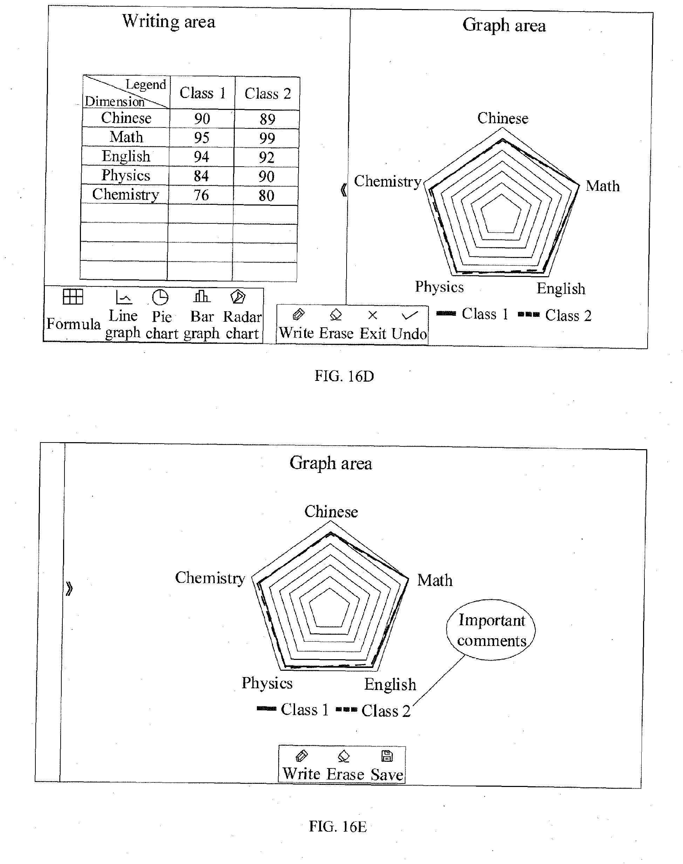

As shown in FIGS. 16A to 16E, in the writing scenario with table boarders, taking the radar chart as an example, the different interfaces displayed by the electronic whiteboard during the process of graph display are explained as follows.

As shown in FIG. 16A, a user inputs a graph selection command indicating a radar chart in an intelligent graphing mode. In response to the graph selection command, it is determined that the graph type corresponding to the graph selection command indicates a radar chart, a guide template corresponding to the radar chart is displayed in a display area. The guide template includes a first partition and a second partition, where the first partition is an editing area for displaying a table template, and the second partition is a graph preview area for displaying the graph template. Here, the cell in the first column and the first row of the table template is filled with gray color to indicate that it is not available for writing, and the remaining columns are used to prompt the user for the contents of the corresponding writing in each column. For example, the contents of the first column are the titles of the vertices, and the contents of the first row are legends for indicating different polar coordinate names. The different legends are indicated by different title prompt symbols in different forms, for example, the solid line indicates the class one, and the broken line indicates the class two. The rest of the content is specific data, which is used to represent the polar coordinates corresponding to the title and polar coordinate name. An edit button on the display interface can be displayed, or a button for closing the display interface can be clicked for the user to input an edit command. It should be noted that after switching to another graph and then returning to the radar chart after editing the radar chart by the user, the edited content can be shown directly without entering the guide template for the radar chart. In this case, the guide template is shown only when the function of the intelligent graphing mode with the graph type being determined is first enabled.

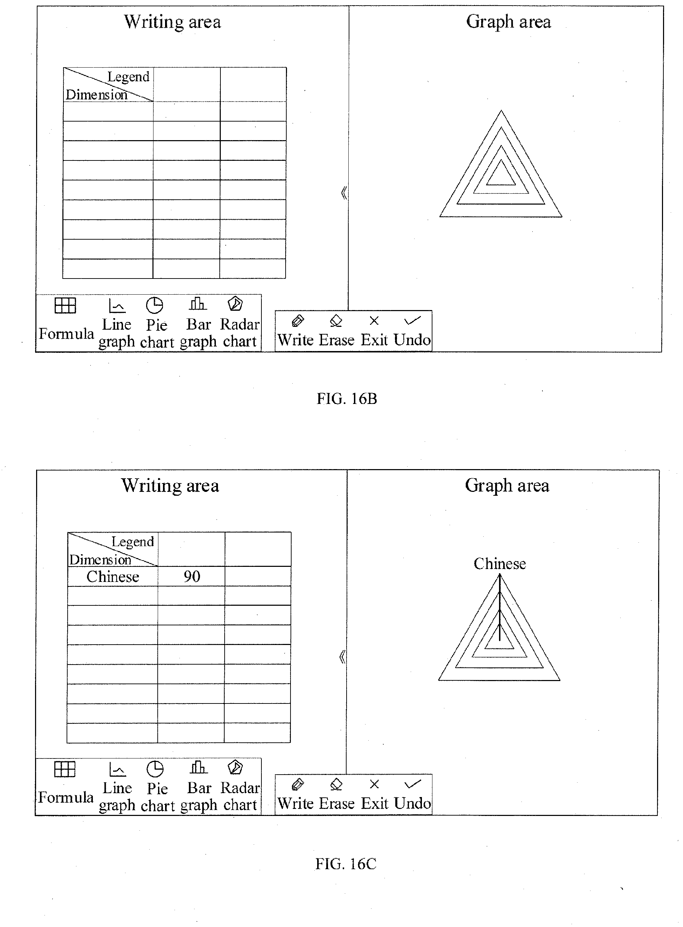

As shown in FIG. 16B, the user inputs an editing command in the display interface with the guide template for the radar chart, and in response to the user's editing command in the intelligent graphing mode for the radar chart, the display area is divided into a writing area and a graph area. The writing prompt table is displayed in the writing area, and the preset graph is displayed in the graph area. No data content is included in the writing prompt table, and the cell in the first column and the first row is not editable, and the number of rows and columns of the writing prompt table is fixed. For example, a table of 3 rows and 12 columns can be constructed by table boarders of 4*13, the writing prompt table consists of the writing boarders, and the style of the preset graph is determined according to a preset UI style.

Optionally, the writing prompts table in the writing area can be dragged. For example, the initial position of the writing prompt table is set, the writing prompt table can be dragged downward until a critical row can be completely displayed and the critical row cannot continue to be dragged downward. Here, the user can drag the writing prompt table to move by a multi-finger touch, for example, the writing prompt table can be moved via a touch with two to four fingers.

As shown in FIG. 16C-FIG. 16D, in this case, the user can write content in the writing prompt table, and the content written by the user in the writing prompt table can be drawn into a graph in real time in the preset chart and then displayed. Here, the basic functions that can be set for writing include a 6.5px hard brush, erase, one-key screen clearing, exit, insertion command, etc., where the insertion command is used to insert the content of the graph area of the current display interface to the previous display interface. If the user inputs the insertion command, the inserted graph is selected by default in the display interface, and operations such as moving, scaling, deleting, copying, rotating, etc. can be performed on the graph.

The writing rules of the radar chart include, but are not limited to: (1) at least one cell of legal content should be written before drawing the data to the radar chart, and the cell in the first row and the first column cannot be written; (2) the first row is used for title 1 which corresponds to legend, if the user does not write the legend, the legend is not shown, where the legend of the radar chart indicates the polar coordinate name; (3) the first column is used for title 2 which corresponds to the titles of vertices, if the user does not write content in the first column, the title 2 is not presented in the vertices; (4) the data is written starting from the second row and the second column, and the data formats as integers and decimals are supported only; the written data from the user is necessary for generating the corresponding graph, and if non-data content written in the corresponding cell, the corresponding polar coordinates will not be displayed; (5) The content written in each column serves as a data group, after 1s from stopping writing, the corresponding polar coordinates, polar coordinate names, and the vertices titles of the radar chart are generated according to each data group; (6) the drawing of the radar chart is based on the cells with written content located in the lower right corner of the left side of the writing prompt table; on this basis, for the cells ranked ahead, "0" is added for an empty cell, title 1 is not shown if title 1 is absent, and title 2 is not shown if title 2 is absent. It should be noted that there are at least three vertices of the radar chart, the radar chart is at least shown as a polygon with a maximum of 12 sides. If the data content written by the user in the writing prompt table occupies less than or equal to 3 rows, then 3 rows of the table are used to draw a polygonal radar chart, and the empty cells in the 3 rows are filled with "0".

After the user stops writing for 1s, the writing trajectory information starts to be recognized, and at this time, the content in the handwritten font in the writing prompt table is retained. If the user adds or modifies the content of the data in the writing prompt table, after the user stops writing for 1s, the re-written writing trajectory information in the writing prompt table starts to be recognized. It should be noted that if none of the writing contents in the writing prompt table meets the writing requirements after the recognition, the radar chart is not updated.

Optionally, the user can also drag the writing prompt table after writing. In this case, the writing prompt table and the content written in the writing prompt table can be dragged at the same time. Based on a moving position of the writing prompt table, the position of the writing trajectory information in each cell of the writing prompt table will be moved correspondingly in such a way that the user's written content is unchanged in the position of the writing prompt table.

Optionally, switching buttons for different functions can also be displayed in the display interface. For example, if the user clicks on the formula button, the current display interface is switched to the display interface with the formula function; if the user clicks on the button for line graph, the current display interface is switched to the display interface with the line graph function. Optionally, icons for editing, such as an icon for writing, an icon for erasing, an icon for exit, an icon for withdrawing, and the like, can also be displayed in the display interface, so that the user can conveniently switch the current writing function via the icon for editing in the process of writing in the writing area. For example, the user clicks on the icon for erasing after writing to erase the corresponding content. Here, if the user clicks on the icon for exit, a dialog box asking the user whether to confirm the exit can be popped up.

Further, a full-screen button in this display interface can be clicked for previewing the displayed radar chart in full-screen. For example, an arrow button can be set at the boundary line between the writing area and the graph area, and in response to a selection on the arrow button, the full-screen mode is enabled, and the display interface for the radar chart in the full-screen mode is shown in FIG. 16E. In the full-screen mode, the graph in the original graph area is displayed in the center, and the size ratio is consistent with the preset UI design. In the full-screen mode, users can write in the graph area for marking or annotating, in which the basic functions of writing include: red hard pen, erasing in regular eraser size, one-key screen clearing, palm erasing, etc. The current graph area contents can be saved, for example, the graph with annotation displayed in the graph area can be saved. In the full-screen mode, you can also click the right slide button to disable full-screen mode, and the previous mode, i.e. the edit mode, is enabled. In this case, the contents of the graph area will be retained when exiting the full-screen mode, and the contents of the graph area in the full-screen mode will be retained if switching to an intelligent graphing mode for another graph type.

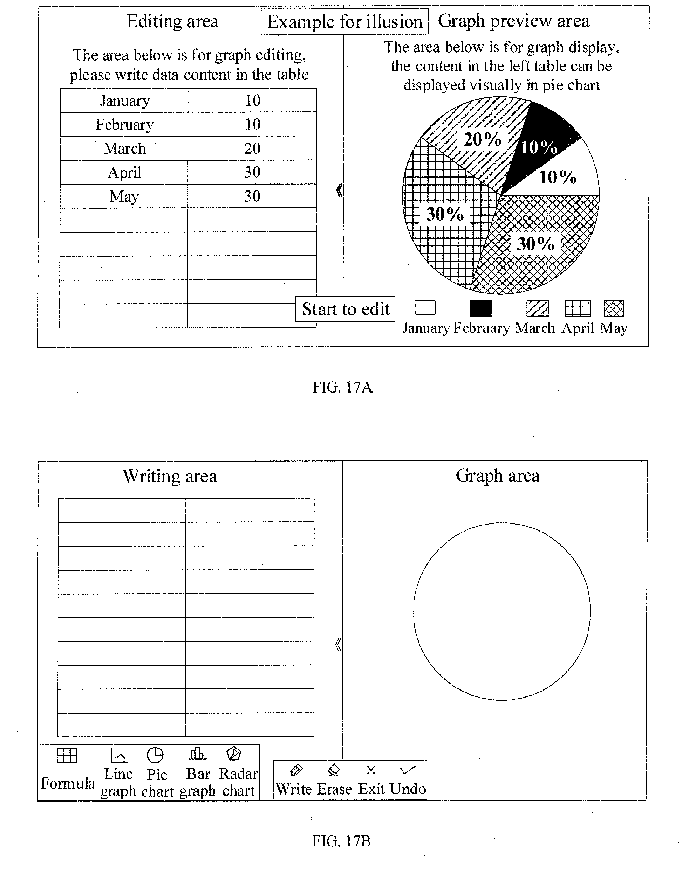

As shown in FIGS. 17A to 17E, in the writing scenario with table boarders, taking the pie chart as an example, the different interfaces displayed by the electronic whiteboard during the process of graph display are explained as follows.

As shown in FIG. 17A, a user inputs a graph selection command indicating a pie chart in an intelligent graphing mode. In response to the graph selection command, determining that the graph type corresponding to the graph selection command indicates a pie chart, a guide template corresponding to the pie chart is displayed in a display area. The guide template includes a first partition and a second partition, where the first partition is an editing area for displaying a table template, and the second partition is a graph preview area for displaying the graph template. Here, the first column in the table template is used to write the titles of the slices (legends), and the second column in the table template is used to write data for each title. The different legends are indicated by different slices with different fill contents, and data corresponding to different titles represent proportions of different slices. An edit button on the display interface can be displayed, or a button for closing the display interface can be clicked for the user to input an edit command. It should be noted that after switching to another graph and then returning to the pie chart after editing the pie chart, the edited content can be shown directly without entering the guide template for the pie chart. In this case, the guide template is shown only when the function of the intelligent graphing mode with the graph type being determined is first enabled. Optionally, an arrow button is shown on the boundary line between the first partition and the second partition in the guide template, and the user can select the arrow button to control the graph template in the second partition to be displayed in full screen.

As shown in FIG. 17B, the user inputs an editing command in the display interface with the guide template for the pie chart, and in response to the user's editing command in the intelligent graphing mode for the pie chart, the display area is divided into a writing area and a graph area. The writing prompt table is displayed in the writing area, and the preset graph is displayed in the graph area. No data content is included in the writing prompt table, and the number of rows and columns of the writing prompt table is fixed. For example, the writing prompt table is a table of 2*13, the writing prompt table consists of the writing boarders, and the style of the preset graph is determined according to a preset UI style.

Optionally, the writing prompts table in the writing area can be dragged. For example, the initial position of the writing prompt table is set, the writing prompt table can be dragged downward until a critical row can be just completely displayed. Here, the user can drag the writing prompt table to move by a multi-finger touch, for example, the writing prompt table can be moved via a touch with two to four fingers.

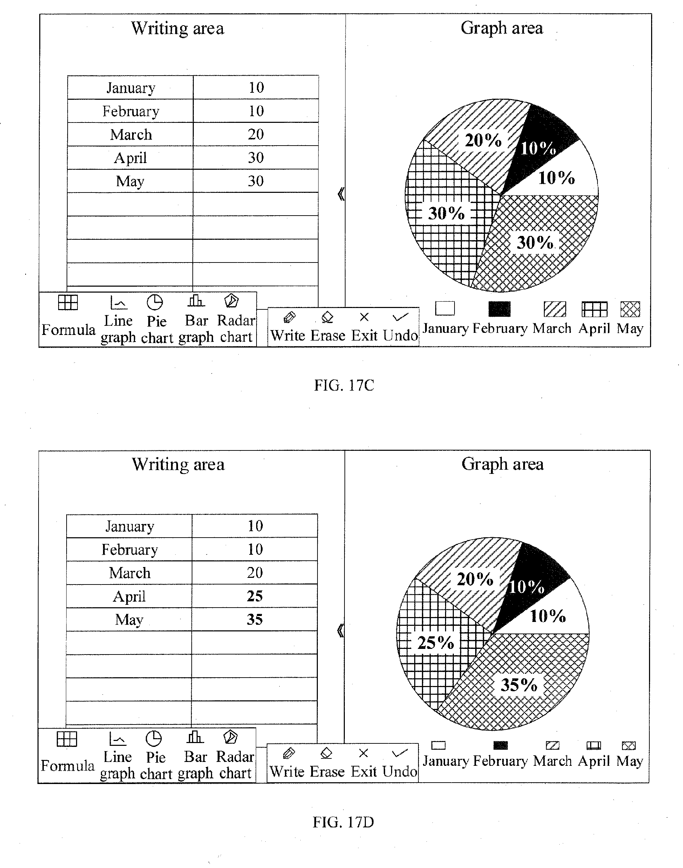

As shown in FIG. 17C, in this case, the user can write content in the writing prompt table, and the content written by the user in the writing prompt table can be drawn into a graph in real time in the preset graph and then displayed. Here, the basic functions that can be set for writing include a 6.5px hard brush, erase, one-key screen clearing, exit, insertion command, etc., where the insertion command is used to insert the content of the graph area of the current display interface to the previous display interface. If the user inputs the insertion command, the inserted graph is selected by default in the display interface, and operations such as moving, scaling, deleting, copying, rotating, etc. can be performed on the graph.

The writing rules of the pie chart include, but are not limited to: (1) at least one cell of legal content should be written before drawing the data to the pie chart; (2) the first column is used for writing the titles (including at least one of Chinese character, letters, numbers, and symbols) which corresponds to legend, if the user does not write the legend, the legend is not shown, where the legend of the pie chart indicates the title of each slice; (3) the second column is used for writing data which corresponds to the proportion of each slice, and the data formats as integers and decimals are supported only; the written data from the user is necessary for generating the corresponding graph, and if non-data content written in the corresponding cell, the corresponding slice will not be displayed; (4) the slices of the pie chart are arranged clockwise from the 12 o'clock position in the order in which the rows in the table are arranged in the writing prompt table; (5) the content written in each column serves as a data group, after one second from stopping writing, the title and proportion of each slice of the pie chart are generated according to each data group; (6) the drawing of the pie chart is based on the cells with written content located in the lower right corner of the left side of the writing prompt table; on this basis, for the cells ranked ahead, "0" is added for an empty cell, the titles are not shown if titles are absent.

After the user stops writing for one second, the writing trajectory information starts to be recognized, and at this time, the content in the handwritten font in the writing prompt table is retained. As shown in FIG. 17D, if the user adds or modifies the data content in the writing prompt table, after the user stops writing for one second, the re-written writing trajectory information in the writing prompt table starts to be recognized, and the pie chart is updated. It should be noted that if none of the writing contents in the writing prompt table meets the writing requirements after the recognition, the pie chart is not updated.

Optionally, the user can also drag the writing prompt table after writing. In this case, the writing prompt table and the content written in the writing prompt table can be dragged at the same time. Based on a moving position of the writing prompt table, the position of the writing trajectory information in each cell of the writing prompt table will be moved correspondingly in such a way that the user's written content is unchanged in the position of the writing prompt table.

Optionally, switching buttons for different functions can also be displayed in the display interface. For example, if the user clicks on the formula button, the current display interface is switched to the display interface with the formula function; if the user clicks on the button for line graph, the current display interface is switched to the display interface with the line graph function. Optionally, icons for editing, such as an icon for writing, an icon for erasing, an icon for exit, an icon for withdrawing, and the like, can also be displayed in the display interface, so that the user can conveniently switch the current writing function via the icon for editing in the process of writing in the writing area. For example, the user clicks on the icon for erasing after writing to erase the corresponding content. Here, if the user clicks on the icon for exit, a dialog box asking the user whether to confirm the exit can be popped up.

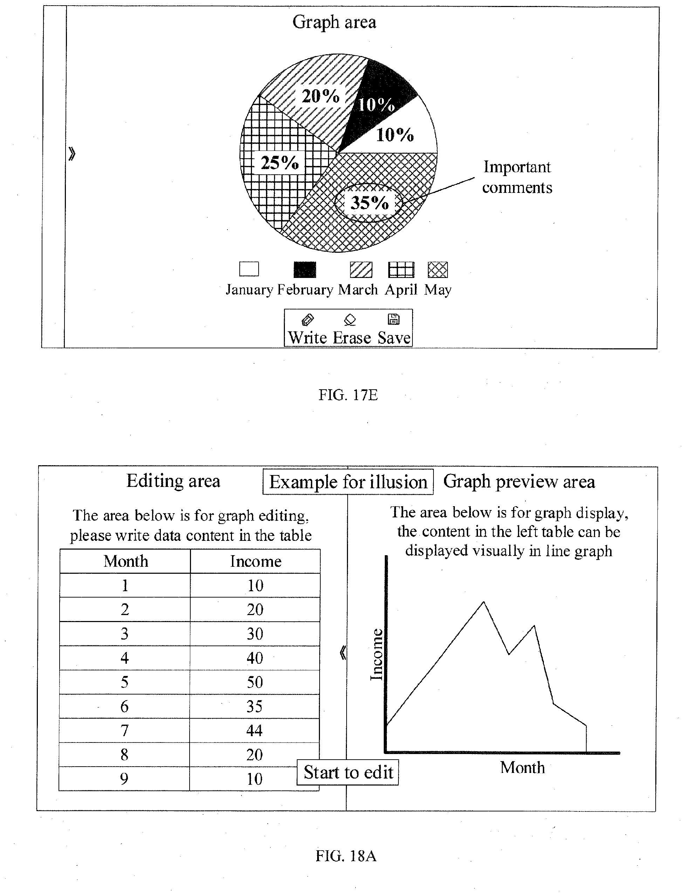

Further, a full-screen button in the display interface can be clicked for previewing the displayed pie chart in full-screen. For example, an arrow button can be set at the boundary line between the writing area and the graph area, and in response to a selection on the arrow button, the full-screen mode is enabled, and the display interface for the radar chart in the full-screen mode is shown in FIG. 17E. In the full-screen mode, the graph in the original graph area is displayed in the center, and the size ratio is consistent with the preset UI design. In the full-screen mode, users can write in the graph area for marking or annotating, where the basic functions of writing include: red hard pen, erasing in regular eraser size, one-key screen clearing, palm erasing, etc. The current graph area contents can be saved, for example, the graph with annotation displayed in the graph area can be saved. In the full-screen mode, you can also click the right slide button to disable full-screen mode, and the previous mode, i.e. the edit mode, is enabled. In this case, the contents of the graph area will be retained when exiting the full-screen mode, and the contents of the graph area in the full-screen mode will be retained if switching to an intelligent graphing mode for another graph type.

As shown in FIGS. 18A to 18D, in the writing scenario with table boarders, taking the line graph as an example, the different interfaces displayed by the electronic whiteboard during the process of graph display are described as follows.

As shown in FIG. 18A, a user inputs a graph selection command indicating a line graph in an intelligent graphing mode. In response to the graph selection command, it is determined that the graph type corresponding to the graph selection command indicates a line graph, a guide template corresponding to the line graph is displayed in a display area. The guide template includes a first partition and a second partition, where the first partition is an editing area for displaying a table template, and the second partition is a graph preview area for displaying the graph template. Here, the first row in the table template is used for writing the titles of the coordinate axes (legends), and the rest rows in the table template are used for writing data corresponding to the respective titles. The different legends are indicated by titles of different coordinate axes, and data corresponding to different titles indicates the coordinate points. An edit button on the display interface can be displayed, or a button for closing the display interface can be clicked for the user to input an edit command. It should be noted that after switching to another graph and then returning to the line graph after editing the line graph, the edited content can be shown directly without entering the guide template for the line graph. In this case, the guide template is shown only when the function of the intelligent graphing mode with the graph type being determined is first enabled. Optionally, an arrow button is shown on the boundary line between the first partition and the second partition in the guide template, and the user can select the arrow button to control the graph template in the second partition to be displayed in full screen.

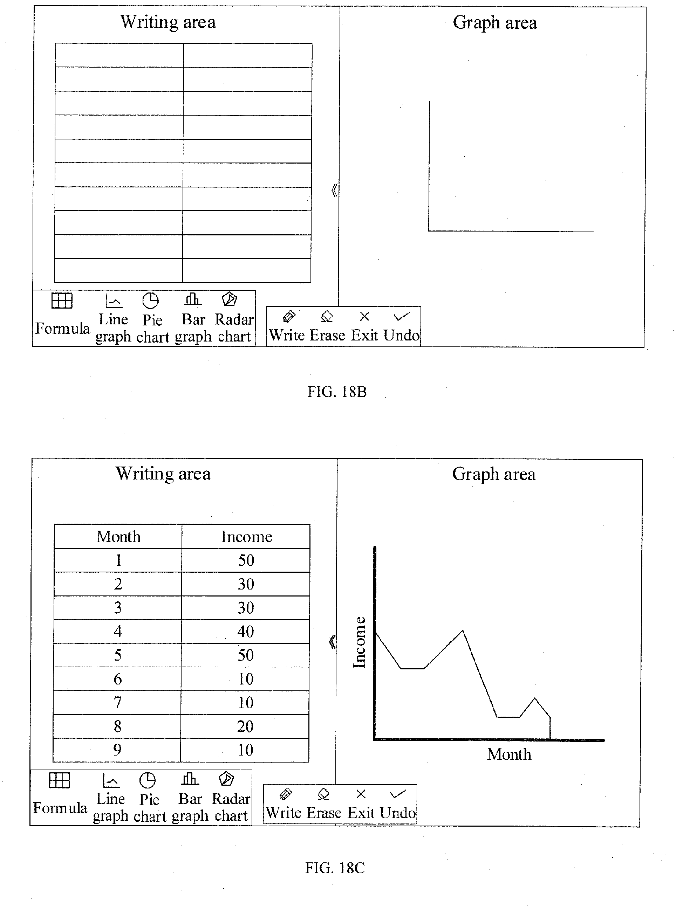

As shown in FIG. 18B, the user inputs an editing command in the display interface with the guide template for the line graph, and in response to the user's editing command in the intelligent graphing mode for the line graph, the display area is divided into a writing area and a charting area. The writing prompt table is displayed in the writing area, and the preset graph is displayed in the graph area. No data content is included in the writing prompt table, and the number of rows and columns of the writing prompt table is fixed. For example, the writing prompt table is a table of 2* 13, the writing prompt table consists of the writing boarders, and the style of the preset graph is determined according to a preset UI style.

Optionally, the writing prompt table in the writing area can be dragged. For example, the initial position of the writing prompt table is set, the writing prompt table can be dragged downward until a critical row can be just completely displayed. Here, the user can drag the writing prompt table to move by a multi-finger touch, for example, the writing prompt table can be moved via a touch with two to four fingers.

As shown in FIG. 18C, in this case, the user can write content in the writing prompt table, and the content written by the user in the writing prompt table can be drawn into a graph in real time in the preset graph and then displayed. Here, the basic functions that can be set for writing include a 6.5px hard brush, erase, one-key screen clearing, exit, insertion command, etc., where the insertion command is used to insert the content of the graph area of the current display interface to the previous display interface. If the user inputs the insertion command, the inserted graph is selected by default in the display interface, and operations such as moving, scaling, deleting, copying, rotating, etc. can be performed on the graph.

The writing rules of the line graph include, but are not limited to: (1) at least one cell of legal content should be written before drawing the data to the line graph; (2) the first row is used for writing the titles (including at least one of Chinese character, letters, numbers, and symbols) which corresponds to legend, if the user does not write the legend, the legend is not shown, where the legend of the line graph indicates the title of each coordinate axis; (3) the rest rows are used for writing data which corresponds to the coordinate points, and the data formats as integers and decimals are supported only; the written data from the user is necessary for generating the corresponding graph, and if non-data content written in the corresponding cell, the corresponding coordinate point will not be displayed; (4) the content written in each column serves as a data group, after one second from stopping writing, the coordinate points, and the titles of the coordinate axes are generated according to each data group; (5) the drawing of the line graph is based on the cells with written content located in the lower right corner of the left side of the writing prompt table; on this basis, for the cells ranked ahead, "0" is added for an empty cell, the titles of the coordinate axes are not shown if titles are absent.

After the user stops writing for one second, the writing trajectory information starts to be recognized, and at this time, the content in the handwritten font in the writing prompt table is retained. If the user adds or modifies the content of the data in the writing prompt table, after the user stops writing for one second, the re-written writing trajectory information in the writing prompt table starts to be recognized, and the line graph is updated. It should be noted that if none of the writing contents in the writing prompt table meets the writing requirements after the recognition, the line graph is not updated.

Optionally, the user can also drag the writing prompt table after writing. In this case, the writing prompt table and the content written in the writing prompt table can be dragged at the same time. Based on a moving position of the writing prompt table, the position of the writing trajectory information in each cell of the writing prompt table will be moved correspondingly in such a way that the user's written content is unchanged in the position of the writing prompt table.

Optionally, switching buttons for different functions can also be displayed in the display interface. For example, if the user clicks on the formula button, the current display interface is switched to the display interface with the formula function; if the user clicks on the button for line graph, the current display interface is switched to the display interface with the line graph function. Optionally, icons for editing, such as an icon for writing, an icon for erasing, an icon for exit, an icon for withdrawing, and the like, can also be displayed in the display interface, so that the user can conveniently switch the current writing function via the icon for editing in the process of writing in the writing area. For example, the user clicks on the icon for erasing after writing to erase the corresponding content. Here, if the user clicks on the icon for exit, a dialog box asking the user whether to confirm the exit can be popped up.

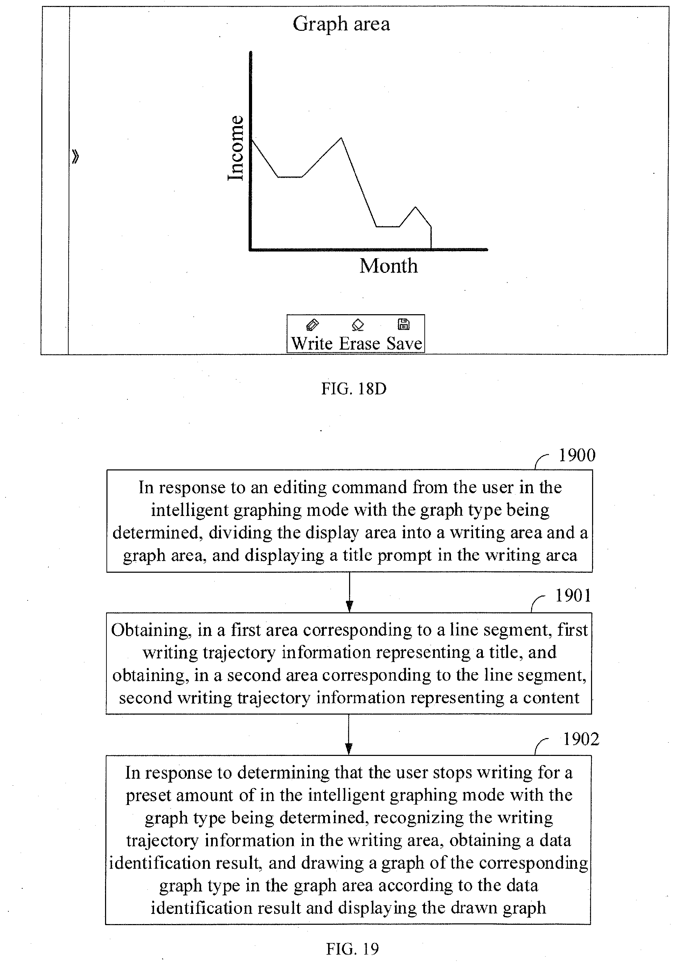

Further, a full-screen button in this display interface can be clicked for previewing the displayed line graph in full-screen. For example, an arrow button can be set at the boundary line between the writing area and the graph area, and in response to a selection on the arrow button, the full-screen mode is enabled, and the display interface for the line graph in the full-screen mode is shown in FIG. 18D. In the full-screen mode, the graph in the original graph area is displayed in the center, and the size ratio is consistent with the preset UI design. In the full-screen mode, users can write in the graph area for marking or annotating, in which the basic functions of writing include: red hard pen, erasing in regular eraser size, one-key screen clearing, palm erasing, etc. The current graph area contents can be saved, for example, the graph with annotation can be displayed in the graph area. In the full-screen mode, you can also click the right slide button to disable full-screen mode and the previous mode, i.e. the edit mode, is enabled. In this case, the contents of the graph area will be retained when exiting the full-screen mode, and the contents of the graph area in the full-screen mode will be retained if switching to an intelligent graphing mode for another graph type.

Optionally, if the content written by the user in the writing prompt table occupies rows exceeding a predetermined number of rows, the content contained in the predetermined number of rows in the writing prompt table is recognized and the rest rows are discarded; or, if the content written by the user in the writing prompt table occupies columns exceeding a predetermined number of columns, the content contained in the predetermined number of columns in the writing prompt table is recognized and the rest columns are discarded.

Optionally, if the number of places in the integer portion of the recognized number in the writing prompt table is greater than a first number threshold, it is expressed in scientific notation; and if the number of places in the decimal portion of the recognized number is greater than a second number threshold, the number of places behind the decimal point is retained at a preset number.

Optionally, if a pixel value of a trajectory point in the writing trajectory information is less than a pixel threshold, the trajectory point is removed. The cell to which the writing trajectory information belongs is based on a starting point of the coordinates after recognizing the writing trajectory information in a standard font.

In some embodiments, as shown in FIG. 19, the embodiments provide a method of displaying a graph in a writing scenario where a title prompt is displayed, and specific steps of the method are shown below.

Step 1900: in response to an editing command from the user in the intelligent graphing mode with the graph type being determined, dividing the display area into a writing area and a graph area, and displaying a title prompt in the writing area.

Step 1901: obtaining, in a first area corresponding to the title prompt, first writing trajectory information representing the title, and obtaining, in a second area corresponding to the title prompt, second writing trajectory information representing the content.

Here, the first area and the second area are separated by the title prompt.

Step 1902: in response to determining that the user stops writing for a preset amount of in the intelligent graphing mode with the graph type being determined, recognizing the writing trajectory information in the writing area, obtaining a data recognition result, and drawing a graph of the corresponding graph type in the graph area according to the data recognition result and displaying the drawn graph.

In some embodiments, the data recognition result includes the title of each coordinate axis and a plurality of cells, and the data recognition result also includes the position of each cell and the data content in each cell.

The processor is specifically configured to determine the data recognition result as follows:
recognizing the writing trajectory information in the first area to obtain the title of each coordinate axis; partitioning the writing trajectory information of the second area into each cell, recognizing the writing trajectory information in each cell, and obtaining the data content in each cell of the second area; determining the data recognition result based on the title, the data content in each cell of the second area, and a position relationship between the title and each cell.

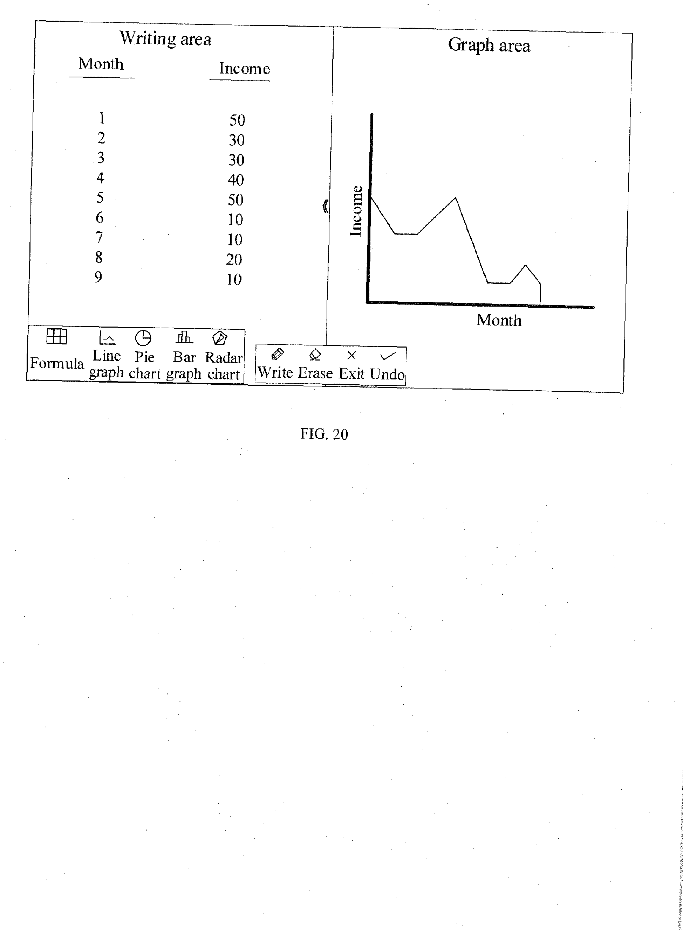

As shown in FIG. 20, in the writing scenario in which the title prompt is displayed, a line graph is used as an example, and the different interfaces displayed during the graph display by the electronic whiteboard are explained as follows.

As shown in FIG. 20, two horizontal line segments are displayed in the writing area of the display area, and the user can write the titles above the horizontal line segments and write the content below the horizontal line segments. When the user stops writing for 1s, the writing trajectory information written by the user in the writing area is recognized, and the content above the horizontal line segments obtained by the recognition is taken as the titles of the coordinate axes, and the data below the horizontal line segments obtained by the recognition is taken as a coordinate point, and a line graph is drawn. Optionally, the number of the words above the horizontal line is less than a number threshold, and the number of rows below the horizontal line is less than a row number threshold.

Switching buttons for different functions, such as graphics for different graph types, formula graphics, etc., can also be displayed in the display area. Buttons for basic functions of writing, such as at least one of icon for writing, icon for erasing, icon for undo, and icon for redo, can also be displayed in the display area. The line graph can also be displayed in full screen by multi-finger touching the line graph. At least one of a finish button, a save button, and an exit button may also be displayed, so that the corresponding function can be operated on the generated graph. Optionally, a step forward/backward is achieved by the undo/redo button, where the changed data caused by the undo/redo operation is not updated to the coordinate axes in real time. During implementation, after clicking the finish button, the content of the current coordinate axes is inserted back into the whiteboard canvas (the electronic whiteboard or a previous display interface in a non-graphing mode) at the ratio of a large window, and cannot be edited again, and up to 6 graphs can be inserted back into a canvas (excluding duplicated ones, which can be duplicated indefinitely). If there is no content in the graph area, the finish button becomes unavailable, and it can't be inserted into the whiteboard canvas. If there are only coordinate axes without data in the graph area, it can be inserted back into the whiteboard canvas. During implementation, if the user clicks on the formula graphics in the current display interface to enable a formula mode, the content in the current display area is retained.

Here, the writing rules include: hard brush, 6.5px, white; (1) two columns of data in the left side of the writing area is written, each column of data is in a format as title (content above the horizontal line) plus data (numbers below the horizontal line), and recognition starts each time after stopping the writing for one second. The first column of data is for the x-coordinate, and the second column of data is for the y-coordinate. Here, the horizontal coordinate scale is consistent with the user's writing data and equidistant, and the vertical coordinate scale data increases in equal proportion.

If the user only writes the table data in the intelligent graphing mode of the writing area, the horizontal and vertical lines can be hand-drawn in the graph area to generate the coordinate axes (no arrow recognition algorithm, two hand-drawn lines from the user forming the coordinate axes). In response to completion of the coordinate axes, the left side of data is introduced. The left two columns of the recognized data is mapped into the axes to generate the line graph, and the content above the horizontal line are the titles for the horizontal and vertical coordinate axes.

Optionally, the content in the writing area can be erased by the eraser, and the crossed area is cleared. After the user erases or modifies the content, the graph is regenerated and the original graph is updated. A button for clearing the screen by one click can also be used to clear all the contents of the graph area, including the coordinate axes.

During implementation, if the left two rows of data are different in amount, in the first mapping to the coordinate axis, a vacant part is not displayed. Based on the writing habit, every two columns are set appropriately with a preset spacing. If a distance between two figures exceeds the preset spacing, it is determined that there are two columns of data. Coordinate axes with a fixed position and fixed size can be generated. Coordinate points updates in real time according to the writing content at the left side, and the line graph is generated according to a user's writing order in the writing area (from left to right). Optionally, moving the graph area by dragging the graph area with a single finger (where the single finger should fall within the graph area) can change the window size of the graph area and scale the graph displayed in the graph area in equal proportion.

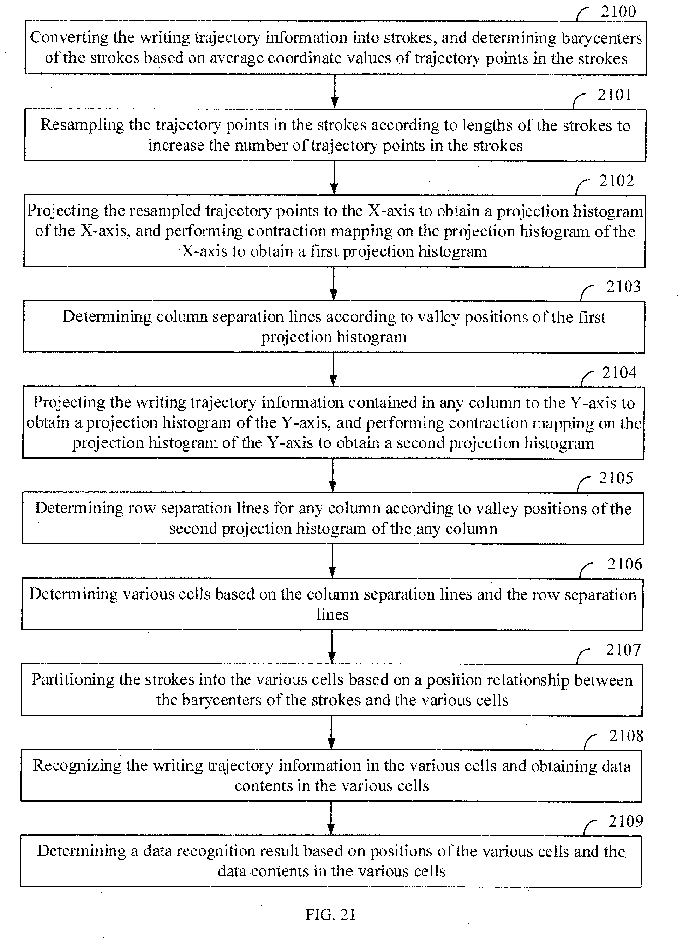

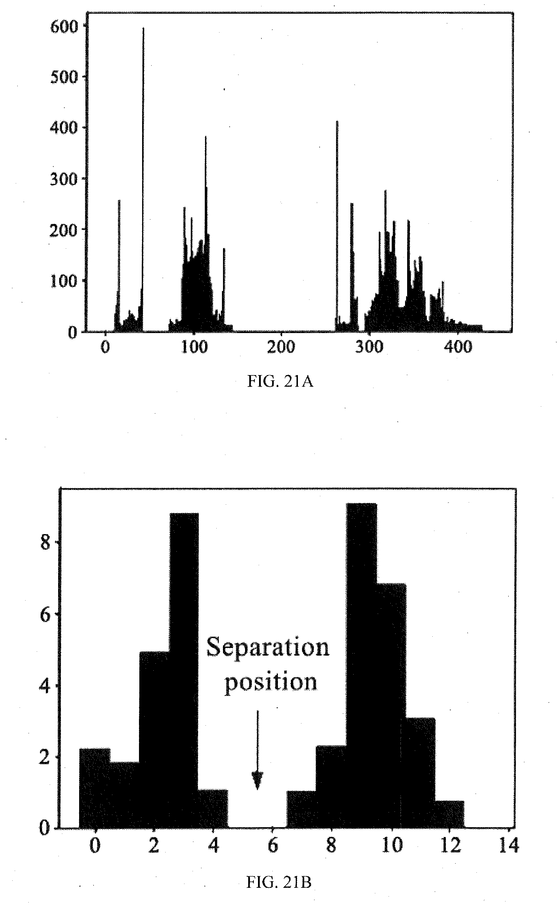

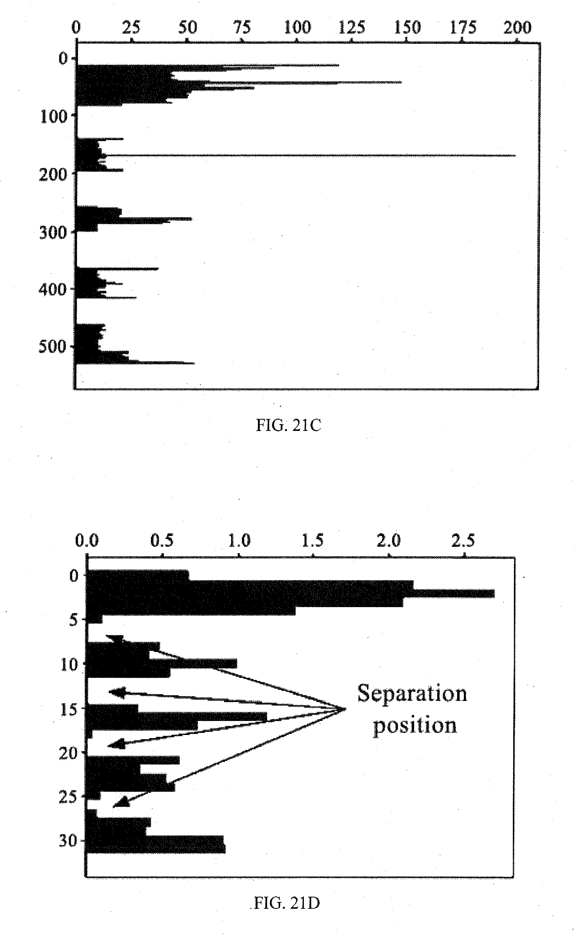

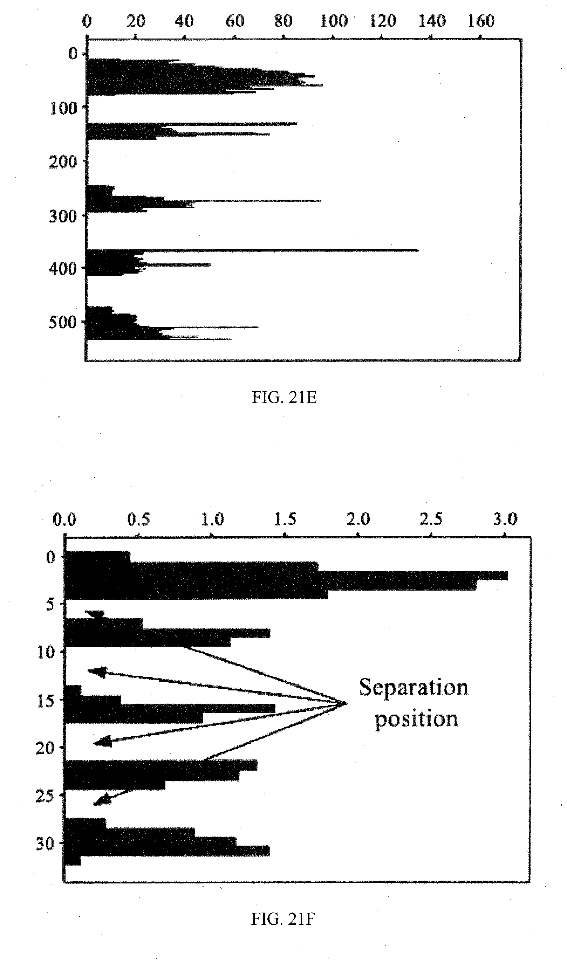

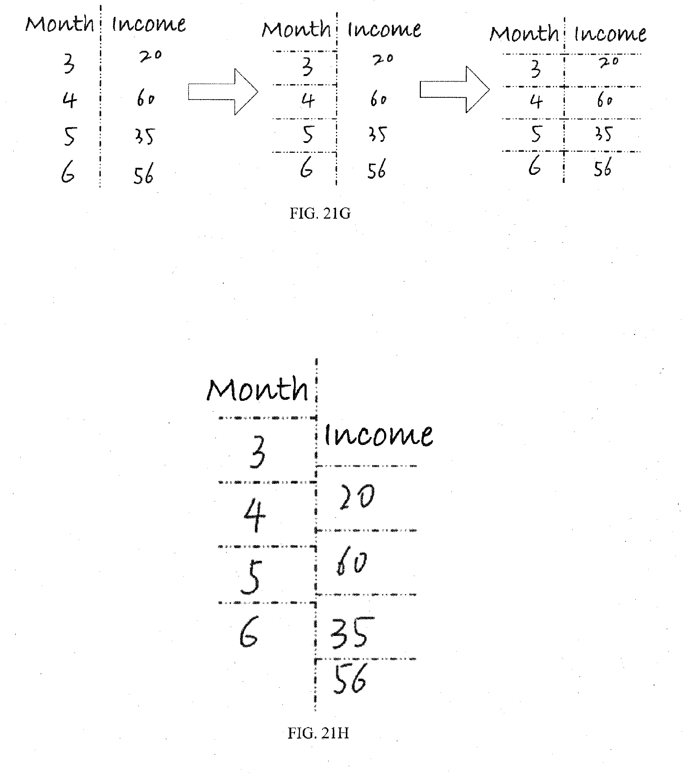

In some embodiments, as shown in FIG. 21, the method for partitioning the table content written by a user in a writing scenario with a title prompt but without table boarders into rows and columns is shown as follows.

Step 2100: converting the writing trajectory information into strokes, and determining barycenters of the strokes based on average coordinate values of trajectory points in the strokes.

Step 2101: resampling the trajectory points in the strokes according to lengths of the strokes to increase the number of trajectory points in the strokes.

Here, the resampling process is used to increase the number of trajectory points in the strokes according to the lengths of the strokes, to prevent a problem of being unable to determine the separation position due to the trajectory points being too sparse when using the projection method.

Step 2102: projecting the resampled trajectory points to the X-axis to obtain a projection histogram of the X-axis, and performing contraction mapping on the projection histogram of the X-axis to obtain a first projection histogram.

Optionally, after the contraction mapping of the projection histogram of the X-axis, normalization can also be performed to obtain a normalized first projection histogram, and the following steps are performed on the normalized first projection histogram.

Step 2103: determining column separation lines according to valley positions of the first projection histogram.

Step 2104: projecting the writing trajectory information contained in any column to the Y-axis to obtain a projection histogram of the Y-axis, and performing contraction mapping on the projection histogram of the Y-axis to obtain a second projection histogram.

Optionally, after the contraction mapping of the projection histogram of the Y-axis, normalization can also be performed to obtain the second projection histogram after normalization, and the following steps are performed on the second projection histogram after normalization.

Step 2105: determining row separation lines for any column according to valley positions of the second projection histogram of the any column.

Step 2106: determining various cells based on the column separation lines and the row separation lines.

Step 2107: partitioning the strokes into the various cells based on a position relationship between the barycenters of the strokes and the various cells.

Step 2108: recognizing the writing trajectory information in the various cells and obtaining the data contents in the various cells.

Step 2109: determining the data recognition result based on the position of each cell and the data content in each cell.

Taking the content written by the user in 5 rows and 2 columns as an example, the embodiments provide an implementation of division in rows and columns.

As shown in FIG. 21A, a projection histogram of X-axis is obtained by projecting the trajectory points after resampling in the X-axis. As shown in FIG. 21B, a first projection histogram is obtained after contraction mapping of the projection histogram of X-axis. The middle X coordinate value of the X coordinate range (the width of the valley) with a Y coordinate value of 0 in the first projection histogram is taken as the position of the column separation line. The writing trajectory information is partitioned into 2 columns based on the determined column separation line.

As shown in FIG. 21C, the Y-axis projection histogram obtained by projecting the writing trajectory information contained in the first column onto the Y-axis is shown; as shown in FIG. 21D, the second projection histogram of the first column is obtained by performing contraction mapping on the Y-axis projection histogram. The middle Y coordinate value of the Y coordinate range where the X coordinate value of the second projection histogram is 0 (the width of the valley) is taken as the position of the row separation line of the first column, and the first column is divided into multiple rows.

Likewise, as shown in FIG. 21E, the Y-axis projection histogram is obtained by projecting the writing trajectory information contained in the second column onto the Y-axis; as shown in FIG. 21F, the second projection histogram is obtained by performing contraction mapping on the Y-axis projection histogram of the second column. The middle Y coordinate value of the Y coordinate range in which the X coordinate value of the second projection histogram is 0 (the width of the valley) is taken as the position of the row separation line in the second column, which divides the second column into a plurality of rows.

It should be noted that, in the method for determining the cells, first the columns are divided and then the rows are separated for each column, so that the problem that the content of each row of different columns is not aligned due to irregular writing can be solved. Even if the content in each row in different columns is not in the same horizontal line, the method in the embodiments is capable of accurately partitioning the data content into the respective cells, and accurately separating the rows and columns. The method is applicable to the longitudinal table, and can solve the problem that the recognition is affected by writing content intended for one row into different rows in one column in the longitudinal table. As shown in FIGS. 21G and 21H, several division ways are shown in the embodiments.

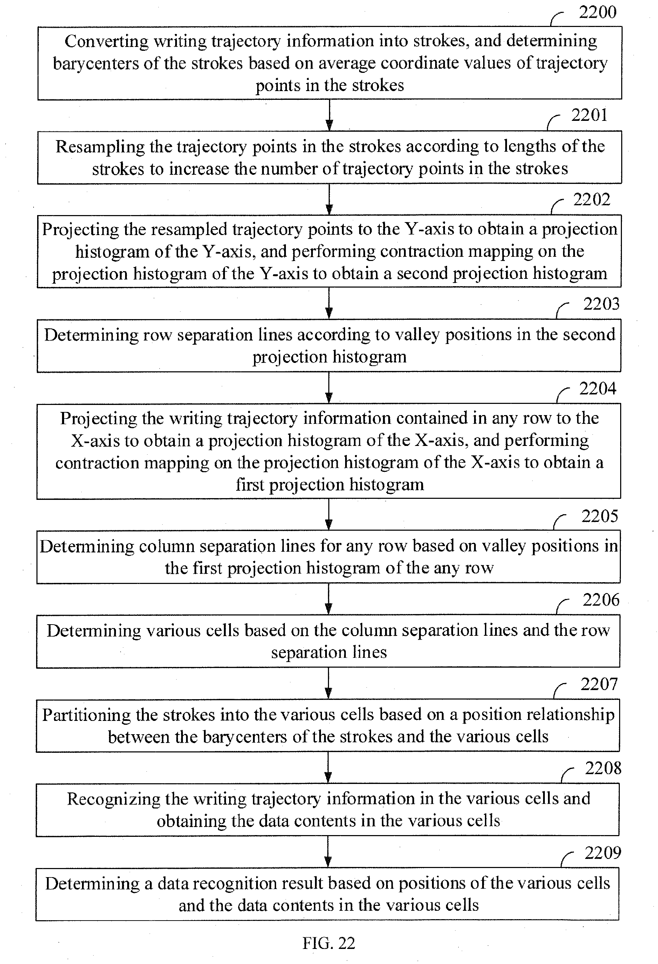

In some embodiments, as shown in FIG. 22, the method for dividing the contents written by a user in a writing scenario with a title prompt but without table boarders into rows and columns, is shown as follows.

Step 2200: converting writing trajectory information into strokes, and determining barycenters of the strokes based on average coordinate values of trajectory points in the strokes.

Step 2201: resampling the trajectory points in the strokes according to lengths of the strokes to increase the number of trajectory points in the strokes.

Step 2202: projecting the resampled trajectory points to the Y-axis to obtain a projection histogram of the Y-axis, and performing contraction mapping on the projection histogram of the Y-axis to obtain a second projection histogram.

Optionally, after the contraction mapping of the projection histogram of the Y-axis, normalization can also be performed to obtain the second projection histogram after normalization, and the following steps are performed on the second projection histogram after normalization.

Step 2203: determining row separation lines according to valley positions in the second projection histogram.

Step 2204: projecting the writing trajectory information contained in any row to the X-axis to obtain a projection histogram of the X-axis, and performing contraction mapping on the projection histogram of the X-axis to obtain the first projection histogram.

Optionally, after the contraction mapping of the projection histogram of the X-axis, normalization can also be performed to obtain the first projection histogram after normalization, and the following steps are performed on the first projection histogram after normalization.

Step 2205: determining column separation lines for any row based on valley positions in the first projection histogram of the any row.

Step 2206: determining various cells based on the column separation lines and the row separation lines.

Step 2207: partitioning the strokes into the various cells based on a position relationship between the barycenters of the strokes and the various cells.

Step 2208: recognizing the writing trajectory information in each cell and obtaining the data content in each cell.

Step 2209: determining the data recognition result based on the position of each cell and the data content in each cell.

It should be noted that in this embodiment of determining the cells, first the rows are separated and then the columns are separated for each column, so that the problem of a blank row due to irregular writing can be solved. In this embodiment, a blank row can be determined, the data content in each cell can be partitioned accurately, and the rows and columns can be separated accurately.

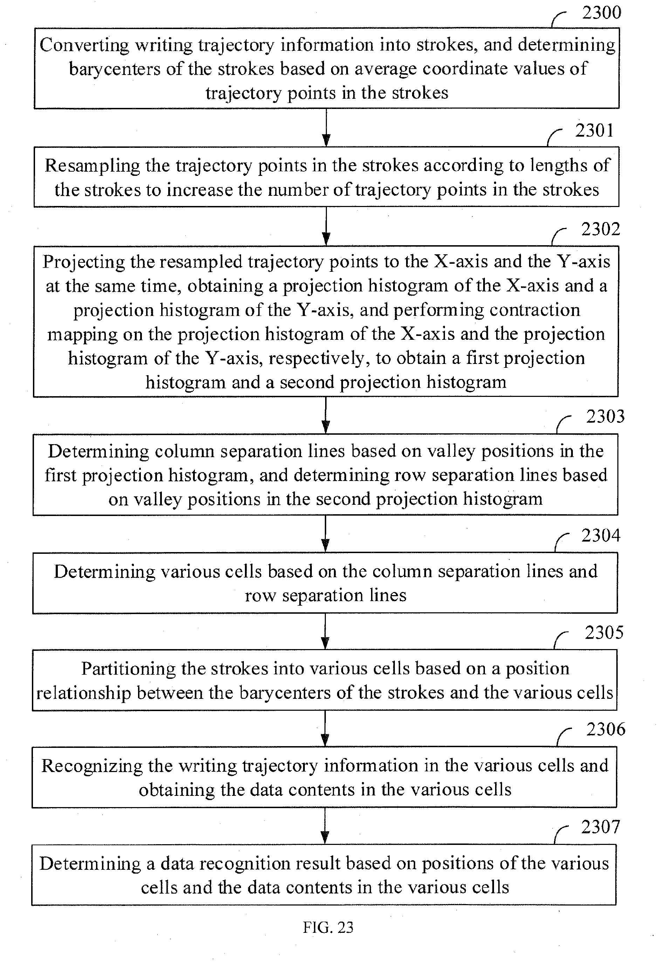

In some embodiments, as shown in FIG. 23, the method for dividing the content written by a user in a writing scenario with a title prompt but without table boarders into rows and columns, is shown as follows.

Step 2300: converting the writing trajectory information into strokes, and determining barycenters of the strokes based on the average coordinate values of the trajectory points in the strokes.

Step 2301: resampling the trajectory points in the strokes according to the length of the strokes to increase the number of trajectory points in the strokes.

Step 2302, projecting the resampled trajectory points to the X-axis and the Y-axis at the same time, obtaining a projection histogram of the X-axis and a projection histogram of the Y-axis, and performing contraction mapping on the projection histogram of the X-axis and the projection histogram of the Y-axis, respectively, to obtain a first projection histogram and a second projection histogram.

Optionally, after the contraction mapping of the projection histogram of the Y-axis, normalization may also be performed to obtain the normalized second projection histogram; or, after the contraction mapping of the projection histogram of the X-axis, normalization may also be performed to obtain the normalized first projection histogram. The following steps are performed on the normalized first projection histogram and the second projection histogram.

Step 2303: determining the column separation lines based on the valley positions in the first projection histogram, and determining the row separation lines based on the valley positions in the second projection histogram.

Step 2304: determining various cells based on the column separation lines and row separation lines.

Step 2305: partitioning the strokes into various cells based on the position relationship between the barycenters of the strokes and the various cells.

Step 2306: recognizing the writing trajectory information in each cell and obtaining the data content in each cell.

Step 2307: determining the data recognition result based on the position of each cell and the data content in each cell.

It should be noted that in this embodiment of determining the cells, the rows and the columns are separated simultaneously, so that the problem of a blank cell due to irregular writing can be solved. In this embodiment, a blank cell, i.e., a cell with no writing trajectory information included, can be determined, the data content in each cell can be partitioned accurately, and the rows and columns can be separated accurately.

In some embodiments, the present embodiment also provides a text recognition model including: a plurality of recurrent neural network (RNN) network layers, where an input of any one of the RNN network layers other than the first two RNN network layers is connected with at least two outputs.

Here, the at least two outputs include outputs of any two RNN network layers prior to the any one RNN network layer.

In some embodiments, the text recognition model further includes a fully connected layer. An input of the fully connected layer is connected with at least three outputs. Here, the at least three outputs include outputs of any three RNN network layers prior to the fully connected layer. An output of any one of RNN network layers prior to a RNN network layer except the last RNN network layer serves as an input to at least two RNN network layers after the RNN network layer.

Optionally, the RNN network layer may be a BiLSTM network layer, or a gate recurrent unit (GRU) network layer, which may be selected according to the actual needs of the user, which is not limited too much herein.

If the BiLSTM network layer is taken as an example, the embodiments also provide a text recognition model including: a plurality of BiLSTM network layers, where an input of any one BiLSTM network layer other than the first two BiLSTM network layers is connected with at least two outputs; where the at least two outputs include the outputs of any two BiLSTM network layers prior to the any one BiLSTM network layer.

The text recognition model provided in the embodiments further includes a fully connected layer. The input of the fully connected layer is connected with at least three outputs, and the at least three outputs include the outputs of any three BiLSTM network layers prior to the fully connected layer.

In some embodiments, an output of any one of BiLSTM network layers prior to a BiLSTM network layer except the last BiLSTM network layer serves as an input to at least two BiLSTM network layers after the BiLSTM network layer.

During implementation, the outputs of each BiLSTM network layer are in a one-dimensional matrix. If an input of a BiLSTM network layer is provided with two outputs, this indicates that the BiLSTM network layer performs a summation operation to the outputs of two BiLSTM network layers prior to the BiLSTM network layer, i.e., the values at the corresponding positions are summed up, to obtain a new one-dimensional matrix, for which the BiLSTM network layer is used for processing.

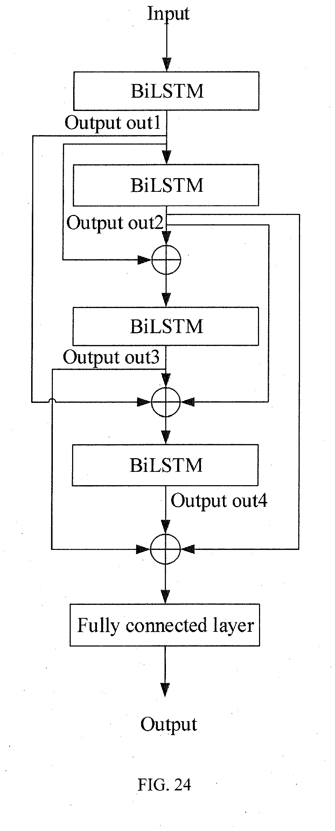

In some embodiments, a specific connection relationship of the text recognition model provided in the embodiments is shown in FIG. 24. The text recognition model includes four BiLSTM network layers and a fully connected layer, a first BiLSTM network layer includes a first input and a first output, a second BiLSTM network layer includes a second input and a second output, a third BiLSTM network layer includes a third input and a third output, and a fourth BiLSTM network layer includes a fourth input and a fourth output.

The first input is used for input of the writing trajectory information, the second input is connected with the first output, the third input is connected with the first and second outputs, the fourth input is connected with the first, second and third outputs, the fourth output is connected with an input of the fully connected layer, and the output of the fully connected layer is used to output data content corresponding to the writing trajectory information.

Specifically, the input of the first BiLSTM layer is provided with the writing trajectory information and the output thereof is out1; the input of the second BiLSTM layer is provided with outl and the output is out2; the input of the third BiLSTM layer is provided with outl + out2, and the output is out3; the input of the fourth BiLSTM layer is provided with out1+out2+out3, and the output is out4; and the input of the fully connected layer is provided with out2+out3+out4, and the output is the data content corresponding to the writing trajectory information.

During implementation, each BiLSTM network layer contains 64 hidden layers, and the fully connected layer contains 3816 neurons. Here, 3816 is the number of the final classification categories, which contains the number of character classes of 3755, the number of English letters of 26, the quantity of Arabic numerals of 10, and the number of commonly used punctuation of 25.

Here, the any one of BiLSTM network layers is obtained after deleting the network parameters using a Dropout layer during model training. Here, a Dropout layer with a probability of 0.5 is used after each BiLSTM network layer. Here, in the data transfer of the text recognition model, 50% of the parameters in the transfer process are randomly set to 0, i.e., randomly removing some of the connections, which are used to reduce model overfitting and accelerate model convergence.

The text recognition model in the embodiments reduces the number of hidden layers compared to the current text recognition model, which not only reduces the size of the text recognition model and compresses the size of the model by several times, but also improves the network degradation phenomenon by changing the connection relationship, and also ensures the accuracy of the text recognition model. During implementation, compressing the model size from 5.1MB to 1.3MB helps in the deployment work on end devices (the original model uses 128 hidden layers for each of the 4 Bilstm network layers, and the text recognition model in the embodiments changes the 128 hidden layers to 64 for each Bilstm network layer, which is reduced by about a factor of four).

In some embodiments, a method for automatic cell division and projection is provided, which is used for automatically dividing the content written by the user into various cells, so as to facilitate automatic recognition of the writing trajectory information in each cell using a track recognition algorithm. The core concept of the method for automatic cell division and projection provided in the embodiments is to obtain the row separation lines and the column separation lines using the projection of the writing trajectory information on the X-axis and the Y-axis, so as to determine the various cells. The specific flow process of the method is shown as follows:
obtaining writing trajectory information in a display area of a display screen;
determining row separation lines and column separation lines based on a first projection histogram of the writing trajectory information on a first coordinate axis, and a second projection histogram of the writing trajectory information on a second coordinate axis; and
determining various cells based on the row separation lines and the column separation lines;
where the first coordinate axis and the second coordinate axis are perpendicular to each other.

In some embodiments, the writing trajectory information is divided into a plurality of rows based on the row separation lines, and is divided into a plurality of columns based on the column separation lines, the borders of the table are determined based on the minimum and maximum values of the trajectory points in the first coordinate axis and the second coordinate axis of all of the writing trajectory information, and the various cells are determined based on the column separation lines, the row separation lines and the borders of the table.

In some embodiments, the row separation lines and the column separation lines are determined as follows:
determining column separation lines according to valley positions in a first projection histogram projected on a first coordinate axis of the writing trajectory information; and determining row separation lines for a column, according to valley positions in a second projection histogram projected on a second coordinate axis of the writing trajectory information included in the column; or
determining row separation lines according to valley positions in a second projection histogram projected on a second coordinate axis of the writing trajectory information; determining column separation lines for a row according to valley positions in a first projection histogram projected on a first coordinate axis of writing trajectory information in the row; or
determining column separation lines according to valley positions of a first projection histogram projected on a first coordinate axis of the writing trajectory information; determining row separation lines according to valley positions in a second projection histogram projected on a second coordinate axis of the writing trajectory information.

In some embodiments, the column separation line is determined according to a valley position where a width of the valley in the first projection histogram is greater than a threshold.

In some embodiments, the row separation line is determined according to a valley position where a width of the valley in the second projection histogram is greater than a threshold.

It is to be noted that, in the method for determining the cells, if first the columns are separated and then the rows are separated for each column, so that the problem that the content of each row of different columns is not aligned due to irregular writing can be solved. This method is applicable to the longitudinal table, and can solve the problem that the recognition is affected by writing content intended for one row into different rows in one column in the longitudinal table. If first the rows are separated and then the columns are separated for each column, the problem of a blank row due to irregular writing can be solved. If the rows and the columns are separated simultaneously, the problem of a blank cell due to irregular writing can be solved.

Embodiment 2: based on the same inventive concept, embodiments of the disclosure also provide a method of displaying a graph. Since the method is the method used by the electronic whiteboard in embodiments of the disclosure, and the principle of solving a problem by the method is similar to that of the electronic whiteboard, the implementation of the method can refer to the implementation of the electronic whiteboard, and the repetitions will not be repeated.

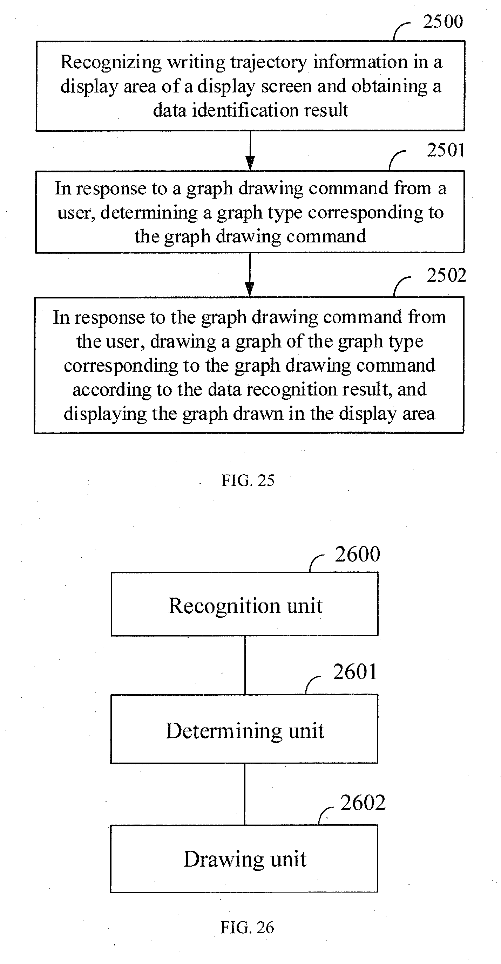

As shown in FIG. 25, the method includes the following steps.

Step 2500: recognizing writing trajectory information in a display area of a display screen and obtaining a data recognition result.

Step 2501: in response to a graph drawing command from a user, determining a graph type corresponding to the graph drawing command.

Step 2502: in response to the graph drawing command from the user, drawing a graph of the graph type corresponding to the graph drawing command according to the data recognition result, and displaying the drawn graph in the display area.

As an optional embodiment, before recognizing the writing trajectory information in the display area of the display screen, and obtaining the data recognition result, the method further includes:
displaying a writing prompt table in the display area, where the writing prompt table is used to prompt a user to write in various cells of the writing prompt table; and
receiving writing trajectory information from the user in the writing prompt table.

As an optional embodiment, displaying the writing prompt table in the display area, includes:
determining a baseline position of the writing prompt table according to a position of trajectory information of a first writing from the user in the display area; and
displaying, in the display area, a writing prompt table with a fixed number of rows and a fixed number of columns according to the baseline position of the writing prompt table, where the trajectory information of the first writing from the user is located within a cell of the writing prompt table.

As an optional embodiment, after displaying the writing prompt table, the method further includes:
if the trajectory information of continuous writing from the user exceeds a range of the writing prompt table, increasing the numbers of rows and/or columns of the writing prompt table according to the position of the trajectory information of the continuous writing; or
if the trajectory information of continuous writing from the user is located at a critical row of the writing prompt table, increasing the number of rows of the writing prompt table; and/or if the trajectory information of continuous writing from the user is located at a critical column of the writing prompt table, increasing the number of column of the writing prompt table.

As an optional embodiment, the number of rows and columns of the writing prompt table is fixed or determined based on parameters input by the user.

As an optional embodiment, the data recognition result is determined in any one of the following ways:
way 1: determining the writing trajectory information in each cell according to the position relationship between each trajectory point in the writing trajectory information and each cell in the writing prompt table; recognizing the writing trajectory information in each cell, and obtaining the data content of each cell;
way 2: recognizing the writing trajectory information, obtaining a content written by the user and a position of a content in the display area; determining the data content of each cell based on the position of the content and the position of each cell in the writing prompt table.

As an optional embodiment, the data recognition result includes a plurality of cells, the data recognition result further includes the position of each cell and data content in each cell.

In some embodiments, the data recognition result is determined as follows:
determining various cells, partitioning the writing trajectory information into the various cells, where the various cells correspond to respective cells in a table, and the writing trajectory information in the various cells corresponds to data content in the respective cells in the table;
recognizing the writing trajectory information in the various cells and obtaining the data content in the respective cells; and
determining the data recognition result based on the positions of the respective cells and the data content in the respective cells.

As an optional embodiment, partitioning the writing trajectory information into the various cells as follows:
converting the writing trajectory information into strokes and determining the barycenters of the strokes based on the average coordinate values of the trajectory points in the strokes; and
partitioning the strokes into various cells based on the position relationship between the barycenters of the strokes and the various cells.

As an optional embodiment, partitioning the writing trajectory information into the various cells as follows:
obtaining a writing order and coordinates of trajectory points in the writing trajectory information;
determining a similarity between the respective trajectory points based on the writing order and coordinates of the respective trajectory points; and
partitioning the trajectory points whose similarity satisfies a preset threshold into a cell.

As an optional embodiment, the various cells are determined as follows:
determining column separation lines based on the valley positions in a first projection histogram projected on a first coordinate axis of the writing trajectory information; determining row separation lines of a column based on valley positions in a second projection histogram projected on a second coordinate axis of writing trajectory information in the column; and determining the various cells based on the column separation lines and the row separation lines; or,
determining row separation lines according to valley positions in a second projection histogram projected on a second coordinate axis of the writing trajectory information; determining column separation lines for a row according to valley positions in a first projection histogram projected on a first coordinate axis of writing trajectory information in the row; determining the various cells according to the column separation lines and the row separation lines; or
determining column separation lines according to valley positions of a first projection histogram projected on a first coordinate axis of the writing trajectory information; determining row separation lines according to valley positions in a second projection histogram projected on a second coordinate axis of the writing trajectory information; determining the various cells according to the column separation lines and the row separation lines.

As an optional embodiment, the various cells are determined by a clustering algorithm.

As an optional embodiment, the column separation line is determined according to a valley position where a width of the valley in the first projection histogram is greater than a threshold; and/or
the row separation line is determined according to a valley position where a width of the valley in the second projection histogram is greater than a threshold.

As an optional embodiment, the writing trajectory information is obtained by resampling the trajectory points in the writing trajectory information. The resampling process is used to increase the trajectory points in the corresponding strokes according to the length of each stroke in the writing trajectory information.

As an optional embodiment, the first projection histogram is obtained by performing contraction mapping for a projection histogram obtained by projecting the writing trajectory information to the first coordinate axis;
the second projection histogram is obtained by performing contraction mapping for a projection histogram obtained by projecting the writing trajectory information to the second coordinate axis.

As an optional embodiment, before recognizing the writing trajectory information in the display area of the display screen, and obtaining the data recognition result, the method further includes:
displaying a title prompt in the display area, where the title prompt is used to indicate a position of the table title for the user;
obtaining first writing trajectory information in a first area corresponding to the title prompt, and obtaining second writing trajectory information in a second area corresponding to the title prompt.

As an optional embodiment, determining the data recognition result as follows:
recognizing the writing trajectory information in the first area to obtain the title of each coordinate axis;
partitioning the writing trajectory information of the second area into various cells, recognizing the writing trajectory information into the various cells, and obtaining the data content in the various cells of the second area;
determining the data recognition result based on the title, the data content in the various cells of the second area, and the position relationship between the titles and the various cells.

As an optional embodiment, the graph drawing command includes a graph selection command, and the graph type is determined in the following manner:
in response to a graph selection command from a user in an intelligent graphing mode, determining a graph type corresponding to the graph selection command.

As an optional embodiment, the graph drawing command includes a first touch gesture, and the graph type is determined as follows:
in response to a first touch gesture from a user in an intelligent graphing mode, recognizing a first graphic indicated by the first touch gesture, and determining the graph type based on the first graphic.

As an optional embodiment, the graph drawing command includes at least one of a drawing command indicating an arrow, a drawing command indicating a circle, a drawing command indicating a polygon, a drawing command indicating a cylinder, or a drawing command indicating a rectangle.

As an optional embodiment, the graph drawing command includes at least one of a touch gesture, or a touch command.

As an optional embodiment, recognizing the graphic corresponding to the graph drawing command, and determining the graph type according to the graphic, includes:
if the graph drawing command includes a drawing command indicating an arrow, determining that the graph type indicates a line graph;
if the graph drawing command includes a drawing command indicating a circle, determining that the graph type indicates a pie chart;
if the graph drawing command includes a drawing command indicating a rectangle, determining that the graph type indicates a histogram;
if the graph drawing command includes a drawing command indicating a cylinder, determining that the graph type indicates a bar graph;
if the graph drawing command includes a drawing command indicating a polygon, determining that the graph type indicates a radar chart.

As an optional embodiment, the data recognition result includes two columns of cells, the drawing command for the arrow includes a command for a first arrow and a command for a second arrow which are drawn in turn; the command for the first arrow corresponds to the first column in the two columns, and the command for the second arrow corresponds to the second column in the two columns;
if a first direction indicated by the command for the first arrow is the X-axis direction, it is determined that the cells of first column are for data on the X-axis of the graph, and cells of the second column are for data on the Y-axis of the graph;
if a first direction indicated by the command for the first arrow is the Y-axis direction, it is determined that the cells of first column are for data on the Y-axis of the graph, and cells of the second column are for data on the X-axis of the graph;
where the command for the first arrow is received earlier than the command for the second arrow, and the second direction indicated by the command for the second arrow is different from the first direction.

As an optional embodiment, the following is included:
in response to a command for enabling an intelligent graphing mode from the user on the first display interface in the writing application, displaying a second display interface in the intelligent graphing mode in the display area;
after drawing the graph in the second display interface and displaying the graph, in response to a command for insertion from the user, inserting the graph of the second display interface into the first display interface of the writing application for display.

As an optional embodiment, when the command for enabling intelligent graphing mode includes a second touch gesture, displaying the second display interface in the intelligent graphing mode in the display area, includes:
receiving a second graphic drawn by the user on the first display interface of the writing application, where the second graphic is generated according to the second touch gesture;
triggering to display the second display interface in the intelligent graphing mode in the display area according to the second graphic.

As an optional embodiment, after receiving a second graphic drawn by the user on the first display interface of the writing application, the following is included:
generating a menu of candidates in the first display interface, where the menu of candidates includes a first startup icon corresponding to the second graphic;
in response to a touch on the startup icon from the user, triggering the second display interface for the graph type corresponding to the second graphic to be displayed in the display area.

As an optional embodiment, generating the menu of candidates in the first interface, includes:
if the second graphic is a cylinder, the first startup icon is an icon indicating a bar graph; and in response to a touch on the icon indicating the bar graph, triggering a second display interface corresponding to the bar graph to be displayed;
if the second graphic is a rectangle, the first startup icon is an icon indicating a histogram; and in response to a touch on the icon indicating the histogram, triggering a second display interface corresponding to the histogram to be displayed;
if the second graphic is a circle, the first startup icon is an icon indicating a pie chart; and in response to a touch on the icon indicating the pie chart, triggering a second display interface corresponding to the pie chart to be displayed;
if the second graphic is a polygon, the first startup icon is an icon indicating a radar chart; and in response to a touch on the icon indicating the radar chart, triggering a second display interface corresponding to the radar chart to be displayed;
if the second graphic is an arrow, the first startup icon is an icon indicating a line graph; and in response to a touch on the icon indicating the line graph, triggering a second display interface corresponding to the line graph to be displayed.

As an optional embodiment, the menu of candidates further includes a second startup icon, and the second startup icon includes an icon for an analysis template; and
in response to a touch on the icon for the analysis template from the user, inserting the analysis template corresponding to the icon for the analysis template in the first display interface.

As an optional embodiment, before responding to the graph drawing command, the following is included:
determining a writing area and a graph area in the display area of the display screen, where the writing area is configured to receive the user's writing trajectory information, the graph area is configured to display the graph corresponding to the writing trajectory information.

As an optional embodiment, before responding to the graph drawing command, the following is included:
determining a writing area and a graph area in the display area of the display screen, where the writing area is configured to receive the user's writing trajectory information, the graph area is configured to display the graph corresponding to the writing trajectory information;
displaying a writing prompt table corresponding to the graph type in the writing area of the display area; and/or
displaying a preset graph corresponding to the graph type in the graph area of the display area.

As an optional embodiment, the graph area is further configured to receive the graph drawing command from the user.

As an optional embodiment, determining the writing area and the graph area in the display area of the display screen, includes:
in response to an editing command from the user in the intelligent graphing mode with the graph type being determined, dividing the display area into the writing area and the graph area, where the graph area is used for displaying a graph corresponding to the graph type.

As an optional embodiment, the following is included:
in response to the dragging command from the user in the writing area, moving the content in the writing area in a corresponding direction; or
in response to the dragging command from the user in the graph area, moving the content in the graph area in a corresponding direction.

As an optional embodiment, the following is included:
in response to a full-screen preview command from the user, displaying the graph area in full screen; or
in response to an annotation operation from the user in the graph area, displaying the content corresponding to the annotation operation; or,
in response to an erasing operation from the user in the graph area, removing the content corresponding to the erasing operation in the graph area; or,
in response to a screen-clearing operation from the user in the graph area, clearing the content in the graph area; or,
in response to a save operation from the user in the graph area, saving the contents in the graph area; or,
in response to a command for switching graph type from the user, switching a current graph type.

As an optional embodiment, the writing area and the graph area are not overlapping in position; or
the graph area floats above the writing area and does not obscure content in the writing area.

As an optional embodiment, determining the graph area in the display area of the display screen, includes:
determining the graph area in the display area of the display screen according to a predetermined position; or
in response to a first partition command from the user in the display area, determining a graph area corresponding to the first partition command.

As an optional embodiment, after displaying the drawn graph in the graph area, the following is included:
in response to a second partition command from the user, dividing the writing area into a first writing area and a second writing area, and dividing the graph area into a first graph area and a second graph area;
where the first writing area is configured to display writing trajectory information received before area division, the second writing area is configured to display writing trajectory information received in the second writing area after area division, the first graph area is configured to display a graph corresponding to the writing trajectory information in the first writing area, and the second graph area is configured to display a graph corresponding to the writing trajectory information in the second writing area.

As an optional embodiment, the writing trajectory information is recognized as follows:
inputting the writing trajectory information into the text recognition model for recognition, and outputting data content corresponding to the writing trajectory information; where the text recognition model includes a plurality of BiLSTM network layers, and an input of any one of the BiLSTM network layers other than the first two BiLSTM network llayers is connected with at least two outputs;
where the at least two outputs connected with an input of any one of the BiLSTM network layers other than the first two BiLSTM network layers includes outputs of any two BiLSTM network layers prior to the any one BiLSTM network layer.

As an optional embodiment, the text recognition model further includes a fully connected layer. An input of the fully connected layer is connected with at least three outputs. Here, the at least three outputs include outputs of any three BiLSTM network layers prior to the fully connected layer.

As an optional embodiment, an output of any one of BiLSTM network layers prior to a BiLSTM network layer except the last BiLSTM network layer serves as an input to at least two BiLSTM network layers after the BiLSTM network layer.

As an optional embodiment, the text recognition model includes four BiLSTM network layers and a fully connected layer, a first BiLSTM network layer includes a first input and a first output, a second BiLSTM network layer includes a second input and a second output, a third BiLSTM network layer includes a third input and a third output, and the fourth BiLSTM network layer includes a fourth input and a fourth output;
the first input is used for input of the writing trajectory information, the second input is connected with the first output, the third input is connected with the first and second outputs, the fourth input is connected with the first, second and third outputs, the fourth output is connected with an input of the fully connected layer, and the output of the fully connected layer is used to output data content corresponding to the writing trajectory information.

As an optional embodiment, after responding to the graph selection command from the user in the intelligent graphing mode, the following is included:
displaying a writing prompt table in the display area, and receiving the writing trajectory information in the writing prompt table from the user;
in response to determining that the user stops writing for a preset amount of time, drawing a graph of a graph type corresponding to the graph selection command and displaying the drawn graph.

As an optional embodiment, before responding to the graph drawing command from the user in the intelligent graphing mode, the following is included:
receiving the writing trajectory information from the user, recognizing the writing trajectory information and obtaining a data recognition result;
after responding to the graph drawing command from the user in the intelligent graphing mode, the processor is further configured to perform:
   drawing the graph of the graph type corresponding to the graph drawing command according to the data recognition result and displaying the drawn graph.

As an optional embodiment, obtaining the data recognition result includes:
determining a plurality of data groups by grouping the content written by the user in columns; or
determining a plurality of data groups by grouping the content written by the user in rows.

As an optional embodiment, the data recognition result includes a plurality of data groups, the plurality of data groups are determined as follows:
if the writing prompt table is displayed in the display area, determining the plurality of data groups by dividing the content written by the user in the writing prompt table into rows or columns; or
if the writing prompt table is not displayed in the display area, determining the plurality of data groups by dividing the content written by the user in various cells into rows or columns after determining the various cells.

As an optional embodiment, determining the plurality of data groups, includes:
determining each column of content as each data group, according to a preset relationship between each row and the coordinate axes;
determining each row of content as each data group, according to a preset relationship between each column and the coordinate axes.

As an optional embodiment, determining the plurality of data groups, includes:
determining content in a preset row among the content written by the user as a title of each coordinate axis, and determining other content as the data content; or
determining content in a preset column among the content written by the user as a title of each coordinate axis, and determining other content as the data content.

As an optional embodiment, drawing the graph of the graph type corresponding to the graph drawing command according to the data recognition result in response to the graph drawing command, includes:
determining the graph type according to the graph drawing command;
drawing the graph of the graph type according to the plurality of data groups corresponding to the content written by the user.

As an optional embodiment, if any data group includes any column of content written by the user, the graph is drawn as follows:
if determining that the graph type indicates a bar graph, determining each category title on a preset axis according to a data group corresponding to a preset column, determining a bar name according to a first content corresponding to a preset index value in a data group corresponding to a remaining column other than the preset column, determining a bar height corresponding to each category title and the bar name according to the content other than the first content in the data group corresponding to the remaining column, and drawing the bar graph according to each category title, bar name and bar height;
if determining that the graph type indicates a radar chart, determining a title of each vertex according to a data group corresponding to a preset column, determining a polar coordinate name according to a second content corresponding to a preset index value in the data group corresponding to a remaining column other than the preset column, and determining the polar coordinate corresponding to each title and polar coordinate name according to the content other than the second content in the data group corresponding to the remaining column, and drawing the radar chart according to each title, polar coordinate name and polar coordinate;
if determining that the graph type indicates a line graph, determining an axis title according to content corresponding to a preset index value in the data group, determining a coordinate point according to the content corresponding to a same index value other than the preset index value in different data groups, and drawing the line graph according to the axis title and the coordinate point; or
if determining that the graph type indicates a pie chart, determining a title of each slice according to a data group corresponding to a preset column, determining a proportion of each slice according to data groups corresponding to columns other than the preset column, and drawing the pie chart according to the title and proportion of each slice.

As an optional embodiment, drawing the graph of the graph type corresponding to the graph drawing command according to the data recognition result, includes:
in an intelligent graphing mode and when the graph type is determined, in response to determining that the user stops writing for a preset amount of time, triggering to draw the graph.

As an optional embodiment, the following is included:
in response to an editing command from the user in the intelligent graphing mode with the graph type being determined, displaying a preset graph in the display area, where a display style of the preset graph is determined according to the graph type.

As an optional embodiment, the following is included:
after the graph type is determined, displaying a guide template corresponding to the graph type in the display area of the display screen, where the guide template is configured to guide the user to write the table content according to a writing rule corresponding to the graph type.

As an optional embodiment, displaying the guide template corresponding to the graph type in the display area of the display screen, includes:
displaying a table template in a first section of the guide template, and displaying a graph template in a second section of the guide template, where the table template includes a preset content, and the preset graph includes a graph corresponding to the preset content.

As an optional embodiment, obtaining the data recognition result, includes:
in response to determining that the user stops writing for a preset amount of time, recognizing the writing trajectory information in the display area of the display screen and obtaining the data recognition result.

As an optional embodiment, recognizing the writing trajectory information in the display area of the display screen and obtaining the data recognition result, includes:
recognizing a trajectory point with a pixel value greater than a preset pixel threshold in the writing trajectory information in the display area of the display screen, and obtaining the data recognition result.

As an optional embodiment, after displaying the drawn graph in the display area, the following is included:
in response to a content adding command from the user, adding the corresponding writing trajectory information, and updating the graph according to the increased writing trajectory information;
in response to a stroke adding command from the user, adding a stroke of the corresponding writing trajectory information, and updating the graph d according to the writing trajectory information after adding the stroke;
in response to an erasing command from the user, erasing the corresponding writing trajectory information, and updating the graph according to the writing trajectory information after erasing; or
in response to a screen-clearing command from the user, clearing all writing trajectory information.

As an optional embodiment, after displaying the drawn graph in the display area, the following is included:
in response to a modification command from the user, modifying the corresponding writing trajectory information and updating the graph according to the writing trajectory information after modification.

As an optional embodiment, in response to the modification command from the user, the following is included:
obtaining and storing the writing trajectory information after modification in a first storage zone, where the first storage zone is different from a storage zone for the writing trajectory information before modification.

As an optional embodiment, the modification command includes a command triggered via a different tip of a stylus, a command triggered via a different button of the stylus, or a command triggered via a switching button on the display area.

As an optional embodiment, after responding to the modification command, the following is included:
determining a first content before modification corresponding to the modification command and a second content after modification corresponding to the modification command;
displaying the first content and the second content simultaneously, where display styles for the first content and the second content are different.

As an optional embodiment, after obtaining and storing the writing trajectory information after modification in the first storage zone, the following is included:
obtaining the writing trajectory information after modification from the first storage zone, drawing a first graph according to the writing trajectory information before modification and the writing trajectory information after modification;
where the first graph includes the first table data corresponding to the writing trajectory information before modification, and the second table data corresponding to the trajectory information after modification.

As an optional embodiment, after obtaining and storing the writing trajectory information after modification in the first storage zone, the following is included:
obtaining the writing trajectory information after modification from the first storage zone, drawing a second graph according to the writing trajectory information before modification, and drawing a third graph according to the writing trajectory information after modification;
displaying the second graph and the third graph simultaneously.

Embodiment 3: based on the same inventive concept, embodiments of the disclosure provide an apparatus for graph display. The apparatus is the apparatus used in the methods of the embodiments, and the principle of solving a problem by the apparatus is similar to that of the method, the implementation of the apparatus can refer to the implementation of the method, and the repetitions will not be repeated.

As shown in FIG. 26, the apparatus includes:
a recognition unit 2600 configured for recognizing writing trajectory information in a display area of a display screen and obtaining a data recognition result;
a determining unit 2601 configured for: in response to a graph drawing command from a user, determining a graph type corresponding to the graph drawing command;
a drawing unit 2602 configured for: in response to the graph drawing command from the user, drawing a graph of the graph type corresponding to the graph drawing command according to the data recognition result, and displaying the graph drawn in the display area.

As an optional embodiment, before recognizing the writing trajectory information in the display area of the display screen, and obtaining the data recognition result, a table prompting unit is further included and configured for:
displaying a writing prompt table in the display area, where the writing prompt table is used to prompt a user to write in various cells of the writing prompt table;
receiving writing trajectory information from the user in the writing prompt table.

As an optional embodiment, the table prompting unit is configured for:
determining a baseline position of the writing prompt table according to a position of trajectory information of a first writing from the user in the display area;
displaying, in the display area, a writing prompt table with a fixed number of rows and a fixed number of columns according to the baseline position of the writing prompt table, where the trajectory information of the first writing from the user is located within a cell of the writing prompt table.

As an optional embodiment, the table prompting unit is configured for:
if the trajectory information of continuous writing from the user exceeds a range of the writing prompt table, increasing the numbers of rows and/or columns of the writing prompt table according to the position of the trajectory information of the continuous writing; or
if the trajectory information of continuous writing from the user is located at a critical row of the writing prompt table, increasing the number of rows of the writing prompt table; and/or if the trajectory information of continuous writing from the user is located at a critical column of the writing prompt table, increasing the number of column of the writing prompt table.

As an optional embodiment, the number of rows and columns of the writing prompt table is fixed or determined based on parameters input by the user.

As an optional embodiment, the recognition unit 2600 is configured for determining the data recognition result in any one of the following ways:
way 1: determining the writing trajectory information in each cell according to the position relationship between each trajectory point in the writing trajectory information and each cell in the writing prompt table; recognizing the writing trajectory information in each cell, and obtaining the data content of each cell;
way 2: recognizing the writing trajectory information, obtaining a content written by the user and a position of a content in the display area; determining the data content of each cell based on the position of the content and the position of each cell in the writing prompt table.

As an optional embodiment, the data recognition result includes a plurality of cells, the data recognition result further includes the position of each cell and data content in each cell.

As an optional embodiment, the recognition unit 2600 is configured for determining the data recognition result as follows:
determining various cells, partitioning the writing trajectory information into the various cells, where the various cells correspond to respective cells in a table, and the writing trajectory information in the various cells corresponds to data content in the respective cells in the table;
recognizing the writing trajectory information in the various cells and obtaining the data content in the respective cells;
determining the data recognition result based on the positions of the respective cells and the data content in the respective cells.

As an optional embodiment, the recognition unit 2600 is configured for partitioning the writing trajectory information into the various cells as follows:
converting the writing trajectory information into strokes and determining the barycenters of the strokes based on the average coordinate values of the trajectory points in the strokes;
partitioning the strokes into various cells based on the position relationship between the barycenters of the strokes and the various cells.

As an optional embodiment, the recognition unit 2600 is configured for partitioning the writing trajectory information into the various cells as follows:
obtaining a writing order and coordinates of trajectory points in the writing trajectory information;
determining a similarity between the respective trajectory points based on the writing order and coordinates of the respective trajectory points;
partitioning the trajectory points whose similarity satisfies a preset threshold into a cell.

As an optional embodiment, the recognition unit 2600 is configured for determining the various cells as follows:
determining column separation lines based on the valley positions in a first projection histogram projected on a first coordinate axis of the writing trajectory information; determining row separation lines of a column based on valley positions in a second projection histogram projected on a second coordinate axis of writing trajectory information in the column; and determining the various cells based on the column separation lines and the row separation lines; or,
determining row separation lines according to valley positions in a second projection histogram projected on a second coordinate axis of the writing trajectory information; determining column separation lines for a row according to valley positions in a first projection histogram projected on a first coordinate axis of writing trajectory information in the row; determining the various cells according to the column separation lines and the row separation lines; or
determining column separation lines according to valley positions of a first projection histogram projected on a first coordinate axis of the writing trajectory information; determining row separation lines according to valley positions in a second projection histogram projected on a second coordinate axis of the writing trajectory information; determining the various cells according to the column separation lines and the row separation lines.

As an optional embodiment, the recognition unit 2600 is configured for determining the various cells by a clustering algorithm.

As an optional embodiment, the recognition unit 2600 is configured for determining the column separation line according to a valley position where a width of the valley in the first projection histogram is greater than a threshold; and/or
determining the row separation line according to a valley position where a width of the valley in the second projection histogram is greater than a threshold.

As an optional embodiment, the writing trajectory information is obtained by resampling the trajectory points in the writing trajectory information. The resampling process is used to increase the trajectory points in the corresponding strokes according to the length of each stroke in the writing trajectory information.

As an optional embodiment, the first projection histogram is obtained by performing contraction mapping for a projection histogram obtained by projecting the writing trajectory information to the first coordinate axis;
the second projection histogram is obtained by performing contraction mapping for a projection histogram obtained by projecting the writing trajectory information to the second coordinate axis.

As an optional embodiment, before recognizing the writing trajectory information in the display area of the display screen, and obtaining the data recognition result, a prompt displaying unit is included and configured for:
displaying a title prompt in the display area, where the title prompt is used to indicate a position of the table title for the user;
obtaining first writing trajectory information in a first area corresponding to the title prompt, and obtaining second writing trajectory information in a second area corresponding to the title prompt.

As an optional embodiment, the prompt displaying unit is configured for determining the data recognition result as follows:
recognizing the writing trajectory information in the first area to obtain the title of each coordinate axis;
partitioning the writing trajectory information of the second area into various cells, recognizing the writing trajectory information into the various cells, and obtaining the data content in the various cells of the second area;
determining the data recognition result based on the title, the data content in the various cells of the second area, and the position relationship between the titles and the various cells.

As an optional embodiment, the graph drawing command includes a graph selection command, and the drawing unit 2602 is configured for determining the graph type in the following manner:
in response to a graph selection command from a user in an intelligent graphing mode, determining a graph type corresponding to the graph selection command.

As an optional embodiment, the graph drawing command includes a first touch gesture, and the drawing unit 2602 is configured for determining the graph type as follows:
in response to a first touch gesture from a user in an intelligent graphing mode, recognizing a first graphic indicated by the first touch gesture, and determining the graph type based on the first graphic.

As an optional embodiment, the graph drawing command includes at least one of a drawing command indicating an arrow, a drawing command indicating a circle, a drawing command indicating a polygon, a drawing command indicating a cylinder, or a drawing command indicating a rectangle.

As an optional embodiment, the graph drawing command includes at least one of a touch gesture, or a touch command.

As an optional embodiment, the drawing unit 2602 is configured for:
if the graph drawing command includes a drawing command indicating an arrow, determining that the graph type indicates a line graph;
if the graph drawing command includes a drawing command indicating a circle, determining that the graph type indicates a pie chart;
if the graph drawing command includes a drawing command indicating a rectangle, determining that the graph type indicates a histogram;
if the graph drawing command includes a drawing command indicating a cylinder, determining that the graph type indicates a bar graph;
if the graph drawing command includes a drawing command indicating a polygon, determining that the graph type indicates a radar chart.

As an optional embodiment, the drawing unit 2602 is further configured for:
the data recognition result includes two columns of cells, the drawing command for the arrow includes a command for a first arrow and a command for a second arrow which are drawn in turn; the command for the first arrow corresponds to the first column in the two columns, and the command for the second arrow corresponds to the second column in the two columns;
if a first direction indicated by the command for the first arrow is the X-axis direction, determining that the cells of first column are for data on the X-axis of the graph, and cells of the second column are for data on the Y-axis of the graph;
if a first direction indicated by the command for the first arrow is the Y-axis direction, determining that the cells of first column are for data on the Y-axis of the graph, and cells of the second column are for data on the X-axis of the graph;
where, the command for the first arrow is received earlier than the command for the second arrow, and the second direction indicated by the command for the second arrow is different from the first direction.

As an optional embodiment, an insertion function unit is included and configured for:
in response to a command for enabling an intelligent graphing mode from the user on the first display interface in the writing application, displaying a second display interface in the intelligent graphing mode in the display area;
in response to a command for insertion from the user, inserting the graph of the second display interface into the first display interface of the writing application for display.

As an optional embodiment, when the command for enabling intelligent graphing mode includes a second touch gesture, the insertion function unit is configured for:
receiving a second graphic drawn by the user on the first display interface of the writing application, where the second graphic is generated according to the second touch gesture;
triggering to display the second display interface in the intelligent graphing mode in the display area according to the second graphic.

As an optional embodiment, after receiving a second graphic drawn by the user on the first display interface of the writing application, a startup function unit is included and configured for:
generating a menu of candidates in the first display interface, where the menu of candidates includes a first startup icon corresponding to the second graphic;
in response to a touch on the startup icon from the user, triggering the second display interface for the graph type corresponding to the second graphic to be displayed in the display area.

As an optional embodiment, the startup function unit is configured for:
if the second graphic is a cylinder, the first startup icon is an icon indicating a bar graph; and in response to a touch on the icon indicating the bar graph, triggering a second display interface corresponding to the bar graph to be displayed;
if the second graphic is a rectangle, the first startup icon is an icon indicating a histogram; and in response to a touch on the icon indicating the histogram, triggering a second display interface corresponding to the histogram to be displayed;
if the second graphic is a circle, the first startup icon is an icon indicating a pie chart; and in response to a touch on the icon indicating the pie chart, triggering a second display interface corresponding to the pie chart to be displayed;
if the second graphic is a polygon, the first startup icon is an icon indicating a radar chart; and in response to a touch on the icon indicating the radar chart, triggering a second display interface corresponding to the radar chart to be displayed;
if the second graphic is an arrow, the first startup icon is an icon indicating a line graph; and in response to a touch on the icon indicating the line graph, triggering a second display interface corresponding to the line graph to be displayed.

As an optional embodiment, the menu of candidates further includes a second startup icon, and the second startup icon includes an icon for an analysis template; and the startup function unit is configured for:
in response to a touch on the icon for the analysis template from the user, inserting the analysis template corresponding to the icon for the analysis template in the first display interface.

As an optional embodiment, before responding to the graph drawing command, a partitioning unit is included and configured for:
determining a writing area and a graph area in the display area of the display screen, where the writing area is configured to receive the user's writing trajectory information, the graph area is configured to display the graph corresponding to the writing trajectory information.

As an optional embodiment, a second partitioning unit is included and configured for:
determining a writing area and a graph area in the display area of the display screen, where the writing area is configured to receive the user's writing trajectory information, the graph area is configured to display the graph corresponding to the writing trajectory information;
displaying a writing prompt table corresponding to the graph type in the writing area of the display area; and/or
displaying a preset graph corresponding to the graph type in the graph area of the display area.

In some embodiment, the graph area is further configured to receive the graph drawing command from the user.

As an optional embodiment, the first partitioning unit is configured for:
in response to an editing command from the user in the intelligent graphing mode with the graph type being determined, dividing the display area into the writing area and the graph area, where the graph area is used for displaying a graph corresponding to the graph type.

As an optional embodiment, the first partitioning unit is further configured for:
in response to the dragging command from the user in the writing area, moving the content in the writing area in a corresponding direction; or
in response to the dragging command from the user in the graph area, moving the content in the graph area in a corresponding direction.

As an optional embodiment, the first partitioning unit is further configured for:
in response to a full-screen preview command from the user, displaying the graph area in full screen; or
in response to an annotation operation from the user in the graph area, displaying the content corresponding to the annotation operation; or,
in response to an erasing operation from the user in the graph area, removing the content corresponding to the erasing operation in the graph area; or,
in response to a screen-clearing operation from the user in the graph area, clearing the content in the graph area; or,
in response to a save operation from the user in the graph area, saving the contents in the graph area; or,
in response to a command for switching graph type from the user, switching a current graph type.

As an optional embodiment, the writing area and the graph area are not overlapping in position; or
the graph area floats above the writing area and does not obscure content in the writing area.

As an optional embodiment, the first partitioning unit is further configured for::
determining the graph area in the display area of the display screen according to a predetermined position; or
in response to a first partition command from the user in the display area, determining a graph area corresponding to the first partition command.

As an optional embodiment, after displaying the drawn graph in the graph area, a re-partitioning unit is included and configured for:
in response to a second partition command from the user, dividing the writing area into a first writing area and a second writing area, and dividing the graph area into a first graph area and a second graph area;
where the first writing area is configured to display writing trajectory information received before area division, the second writing area is configured to display writing trajectory information received in the second writing area after area division, the first graph area is configured to display a graph corresponding to the writing trajectory information in the first writing area, and the second graph area is configured to display a graph corresponding to the writing trajectory information in the second writing area.

As an optional embodiment, the recognition unit 2600 is configured for recognizing the writing trajectory information as follows:
inputting the writing trajectory information into the text recognition model for recognition, and outputting data content corresponding to the writing trajectory information; where the text recognition model includes a plurality of BiLSTM network layers, and an input of any one of the BiLSTM network layers other than the first two BiLSTM network layers is connected with at least two outputs;
where the at least two outputs connected with an input of any one of the BiLSTM network layers other than the first two BiLSTM network layers includes outputs of any two BiLSTM network layers prior to the any one BiLSTM network layer.

As an optional embodiment, the text recognition model further includes a fully connected layer. An input of the fully connected layer is connected with at least three outputs. Here, the at least three outputs include outputs of any three BiLSTM network layers prior to the fully connected layer.

As an optional embodiment, an output of any one of BiLSTM network layers prior to a BiLSTM network layer except the last BiLSTM network layer serves as an input to at least two BiLSTM network layers after the BiLSTM network layer.

As an optional embodiment, the text recognition model includes four BiLSTM network layers and a fully connected layer, a first BiLSTM network layer includes a first input and a first output, a second BiLSTM network layer includes a second input and a second output, a third BiLSTM network layer includes a third input and a third output, and a fourth BiLSTM network layer includes a fourth input and a fourth output;
the first input is used for input of the writing trajectory information, the second input is connected with the first output, the third input is connected with the first and second outputs, the fourth input is connected with the first, second and third outputs, the fourth output is connected with an input of the fully connected layer, and the output of the fully connected layer is used to output data content corresponding to the writing trajectory information.

As an optional embodiment, after responding to the graph selection command from the user in the intelligent graphing mode, the drawing unit 2602 is further configured for:
displaying a writing prompt table in the display area, and receiving the writing trajectory information in the writing prompt table from the user;
in response to determining that the user stops writing for a preset amount of time, drawing a graph of a graph type corresponding to the graph selection command and displaying the drawn graph.

As an optional embodiment, before responding to the graph selection command from the user in the intelligent graphing mode, the recognition unit 2600 is further configured for:
receiving the writing trajectory information from the user, recognizing the writing trajectory information and obtaining a data recognition result;
after responding to the graph selection command from the user in the intelligent graphing mode, the recognition unit 2602 is further configured for:
   drawing the graph of the graph type corresponding to the graph drawing command according to the data recognition result and displaying the drawn graph.

As an optional embodiment, the recognition unit 2600 is further configured for:
determining a plurality of data groups by grouping the content written by the user in columns; or
determining a plurality of data groups by grouping the content written by the user in rows.

As an optional embodiment, the data recognition result includes a plurality of data groups, the plurality of data groups are determined as follows:
if the writing prompt table is displayed in the display area, determining the plurality of data groups by dividing the content written by the user in the writing prompt table into rows or columns; or
if the writing prompt table is not displayed in the display area, determining the plurality of data groups by dividing the content written by the user in various cells into rows or columns after determining the various cells.

As an optional embodiment, the recognition unit 2600 is further configured for:
determining each column of content as each data group, according to a preset relationship between each row and the coordinate axes;
determining each row of content as each data group, according to a preset relationship between each column and the coordinate axes.

As an optional embodiment, the recognition unit 2600 is further configured for:
determining content in a preset row among the content written by the user as a title of each coordinate axis, and determining other content as the data content; or
determining content in a preset column among the content written by the user as a title of each coordinate axis, and determining other content as the data content.

As an optional embodiment, the drawing unit 2602 is configured for:
determining the graph type according to the graph drawing command;
drawing the graph of the graph type according to the plurality of data groups corresponding to the content written by the user.

As an optional embodiment, if any data group includes any column of content written by the user, the drawing unit 2602 is configured for drawing the graph as follows:
if determining that the graph type indicates a bar graph, determining each category title on a preset axis according to a data group corresponding to a preset column, determining a bar name according to a first content corresponding to a preset index value in a data group corresponding to a remaining column other than the preset column, determining a bar height corresponding to each category title and the bar name according to the content other than the first content in the data group corresponding to the remaining column, and drawing the bar graph according to each category title, bar name and bar height;
if determining that the graph type indicates a radar chart, determining a title of each vertex according to a data group corresponding to a preset column, determining a polar coordinate name according to a second content corresponding to a preset index value in the data group corresponding to a remaining column other than the preset column, and determining the polar coordinate corresponding to each title and polar coordinate name according to the content other than the second content in the data group corresponding to the remaining column, and drawing the radar chart according to each title, polar coordinate name and polar coordinate;
if determining that the graph type indicates a line graph, determining an axis title according to content corresponding to a preset index value in the data group, determining a coordinate point according to the content corresponding to a same index value other than the preset index value in different data groups, and drawing the line graph according to the axis title and the coordinate point; or
if determining that the graph type indicates a pie chart, determining a title of each slice according to a data group corresponding to a preset column, determining a proportion of each slice according to data groups corresponding to columns other than the preset column, and drawing the pie chart according to the title and proportion of each slice.

As an optional embodiment, the drawing unit 2602 is configured for:
in an intelligent graphing mode and when the graph type is determined, in response to determining that the user stops writing for a preset amount of time, triggering to draw the graph.

As an optional embodiment, an edition display unit is included and configured for:
in response to an editing command from the user in the intelligent graphing mode with the graph type being determined, displaying a preset graph in the display area, where a display style of the preset graph is determined according to the graph type.

As an optional embodiment, a guide template display unit is included and configured for:
after the graph type is determined, displaying a guide template corresponding to the graph type in the display area of the display screen, where the guide template is configured to guide the user to write the table content according to a writing rule corresponding to the graph type.

As an optional embodiment, the guide template display unit is configured for:
displaying a table template in a first section of the guide template, and displaying a graph template in a second section of the guide template, where the table template includes a preset content, and the preset graph includes a graph corresponding to the preset content.

As an optional embodiment, the recognition unit 2600 is configured for:
in response to determining that the user stops writing for a preset amount of time, recognizing the writing trajectory information in the display area of the display screen and obtaining the data recognition result.

As an optional embodiment, the recognition unit 2600 is configured for:
recognizing a trajectory point with a pixel value greater than a preset pixel threshold in the writing trajectory information in the display area of the display screen, and obtaining the data recognition result.

As an optional embodiment, after displaying the drawn graph in the display area, an update function unit is included and is configured for:
in response to a content adding command from the user, adding the corresponding writing trajectory information, and updating the graph according to the increased writing trajectory information;
in response to a stroke adding command from the user, adding a stroke of the corresponding writing trajectory information, and updating the graph d according to the writing trajectory information after adding the stroke;
in response to an erasing command from the user, erasing the corresponding writing trajectory information, and updating the graph according to the writing trajectory information after erasing; or
in response to a screen-clearing command from the user, clearing all writing trajectory information.

As an optional embodiment, after displaying the drawn graph in the display area, a modification update unit is included and is configured for:
in response to a modification command from the user, modifying the corresponding writing trajectory information and updating the graph according to the writing trajectory information after modification.

As an optional embodiment, the modification update unit is further configured for:
obtaining and storing the writing trajectory information after modification in a first storage zone, where the first storage zone is different from a storage zone for the writing trajectory information before modification.

As an optional embodiment, the modification command includes a command triggered via a different tip of a stylus, a command triggered via a different button of the stylus, or a command triggered via a switching button on the display area.

As an optional embodiment, after responding to the modification command, a comparison display unit is included and is configured for:
determining a first content before modification corresponding to the modification command and a second content after modification corresponding to the modification;
displaying the first content and the second content simultaneously, where display styles for the first content and the second content are different.

As an optional embodiment, after obtaining and storing the writing trajectory information after modification in the first storage zone, a re-drawing unit is included and is configured for:
obtaining the writing trajectory information after modification from the first storage zone, drawing a first graph according to the writing trajectory information before modification and the writing trajectory information after modification;
where the first graph includes the first table data corresponding to the writing trajectory information before modification, and the second table data corresponding to the writing trajectory information after modification.

As an optional embodiment, after obtaining and storing the writing trajectory information after modification in the first storage zone, a graph comparison display unit is included and is configured for:
obtaining the writing trajectory information after modification from the first storage zone, drawing a second graph according to the writing trajectory information before modification, and drawing a third graph according to the writing trajectory information after modification;
displaying the second graph and the third graph simultaneously.

Embodiment 4: based on the same inventive concept, embodiments of the disclosure also provide an electronic device. Since the electronic device is the electronic device used in the methods in embodiments of the disclosure, and the principle of solving a problem by the electronic device is similar to that of the method, the implementation of the electronic device can refer to the implementation of the method, and the repetitions will not be repeated.

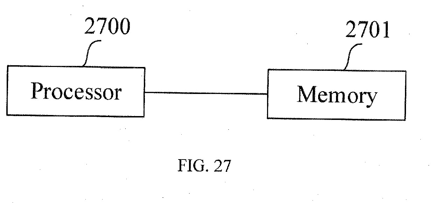

As shown in FIG. 27, the electric device includes a processor(s) 2700 and a memory 2701, the memory2701 is configured for storing instructions executable by the processor(s) 2700, and the processor(s) 2700 is configured to read the instructions in the memory 2701 to perform:
recognizing writing trajectory information in a display area of a display screen and obtaining a data recognition result;
in response to a graph drawing command from a user, determining a graph type corresponding to the graph drawing command;
in response to the graph drawing command from the user, drawing a graph of the graph type corresponding to the graph drawing command according to the data recognition result, and displaying the graph drawn in the display area.

For other embodiments, please refer to the descriptions in the embodiment 1, which is not repeated here.

Based on the same inventive concept, embodiments of the disclosure also provide a computer readable storage medium with computer programs stored therein, when executed by the processor(s), the programs are configured to implement:
recognizing writing trajectory information in a display area of a display screen and obtaining a data recognition result;
in response to a graph drawing command from a user, determining a graph type corresponding to the graph drawing command;
in response to the graph drawing command from the user, drawing a graph of the graph type corresponding to the graph drawing command according to the data recognition result, and displaying the graph drawn in the display area.

It should be understood by those skilled in the art that the embodiments of the application can provide methods, systems and computer program products. Thus the application can take the form of hardware embodiments alone, software embodiments alone, or embodiments combining the software and hardware aspects. Also the application can take the form of computer program products implemented on one or more computer usable storage mediums (including but not limited to magnetic disk memories, optical memories and the like) containing computer usable program codes therein.

The application is described by reference to the flow charts and/or the block diagrams of the methods, the devices (systems) and the computer program products according to the embodiments of the application. It should be understood that each process and/or block in the flow charts and/or the block diagrams, and a combination of processes and/or blocks in the flow charts and/or the block diagrams can be implemented by the computer program instructions. These computer program instructions can be provided to a general-purpose computer, a dedicated computer, an embedded processor, or a processor of another programmable data processing device to produce a machine, so that an apparatus for implementing the functions specified in one or more processes of the flow charts and/or one or more blocks of the block diagrams is produced by the instructions executed by the computer or the processor of another programmable data processing device.

These computer program instructions can also be stored in a computer readable memory which is capable of guiding the computer or another programmable data processing device to operate in a particular way, so that the instructions stored in the computer readable memory produce a manufacture including the instruction apparatus which implements the functions specified in one or more processes of the flow charts and/or one or more blocks of the block diagrams.

These computer program instructions can also be loaded onto the computer or another programmable data processing device, so that a series of operation steps are performed on the computer or another programmable device to produce the computer-implemented processing. Thus the instructions executed on the computer or another programmable device provide steps for implementing the functions specified in one or more processes of the flow charts and/or one or more blocks of the block diagrams.

Evidently those skilled in the art can make various modifications and variations to the application without departing from the spirit and scope of the application. Thus the application is also intended to encompass these modifications and variations therein as long as these modifications and variations to the application come into the scope of the claims of the application and their equivalents.

## Claims

1. A display apparatus, comprising a display screen and a control circuit, wherein
the display screen is configured for content display; and
the control circuit comprises a processor and a memory, wherein the memory is configured for storing programs executable by the processor, and the processor is configured to read the programs in the memory to perform:
recognizing writing trajectory information in a display area of the display screen and obtaining a data recognition result;
in response to a graph drawing command from a user, determining a graph type corresponding to the graph drawing command; and
drawing a graph of the graph type corresponding to the graph drawing command according to the data recognition result, and displaying the drawn graph in the display area.

2. The display apparatus according to claim 1, wherein the display apparatus comprises an electronic whiteboard, the electronic whiteboard comprises a touch component, and the touch component is configured for obtaining handwriting trajectory information.

3. The display apparatus according to claim 1, wherein before recognizing the writing trajectory information in the display area of the display screen and obtaining the data recognition result, the processor is further configured for:
displaying a writing prompt table in the display area, wherein the writing prompt table is configured to prompt the user to write in various cells of the writing prompt table; and
receiving the writing trajectory information written by the user in the writing prompt table.

4. The display apparatus according to claim 3, wherein the processor is configured for:
determining a baseline position of the writing prompt table according to a position of trajectory information of a first writing from the user in the display area; and
displaying, in the display area, the writing prompt table with a fixed quantity of rows and a fixed quantity of columns according to the baseline position of the writing prompt table, wherein the trajectory information of the first writing from the user is located within a cell of the writing prompt table.

5. The display apparatus according to claim 3 or 4, wherein after displaying the writing prompt table, the processor is further configured for:
if trajectory information of continuous writing from the user exceeds a range of the writing prompt table, increasing a quantity of rows and/or a quantity of columns of the writing prompt table according to a position of the trajectory information of the continuous writing; or
if trajectory information of continuous writing from the user is located at a critical row of the writing prompt table, increasing a quantity of rows of the writing prompt table; and/or if trajectory information of continuous writing from the user is located at a critical column of the writing prompt table, increasing a quantity of columns of the writing prompt table.

6. The display apparatus according to claim 3, wherein the processor is further configured in such a way that a quantity of rows and a quantity of columns of the writing prompt table are fixed, or a quantity of rows and a quantity of columns of the writing prompt table are determined according to parameters input by the user.

7. The display apparatus according to any one of claims 2 to 4, wherein the processor is configured for determining the data recognition result in any one of the following ways:
way 1: determining writing trajectory information in each cell according to a position relationship between each trajectory point in the writing trajectory information and each cell in the writing prompt table; and recognizing the writing trajectory information in each cell, and obtaining a data content of each cell;
way 2: recognizing the writing trajectory information, and obtaining a content written by the user and a position of the content in the display area; and determining a data content of each cell based on the position of the content and a position of each cell in the writing prompt table.

8. The display apparatus according to claim 1, wherein the data recognition result comprises a plurality of cells, and the data recognition result further comprises a position of each cell and a data content in each cell.

9. The display apparatus according to claim 8, wherein the processor is configured for determining the data recognition result as follows:
determining various cells, and partitioning the writing trajectory information into the various cells, wherein the various cells correspond to respective cells in a table, and the writing trajectory information in the various cells corresponds to data contents in the respective cells in the table;
recognizing the writing trajectory information in the various cells and obtaining the data content in each cell; and
determining the data recognition result based on the position of each cell and the data content in each cell.

10. The display apparatus according to claim 9, wherein the processor is configured for partitioning the writing trajectory information into the various cells as follows:
converting the writing trajectory information into strokes and determining barycenters of the strokes based on average coordinate values of trajectory points in the strokes; and
partitioning the strokes into the various cells based on a position relationship between the barycenters of the strokes and the various cells.

11. The display apparatus according to claim 9, wherein the processor is configured for partitioning the writing trajectory information into the various cells as follows:
obtaining a writing order and coordinates of trajectory points in the writing trajectory information;
determining a similarity between the trajectory points based on the writing order and coordinates of the trajectory points; and
partitioning the trajectory points whose similarity satisfies a preset threshold into a cell.

12. The display apparatus according to any one of claims 8 to 11, wherein the processor is configured for determining the various cells as follows:
determining column separation lines based on valley positions in a first projection histogram projected on a first coordinate axis of the writing trajectory information; determining row separation lines for any column based on valley positions in a second projection histogram projected on a second coordinate axis of the writing trajectory information in the column; and determining the various cells based on the column separation lines and the row separation lines; or,
determining row separation lines according to valley positions in a second projection histogram projected on a second coordinate axis of the writing trajectory information; determining column separation lines for any row according to valley positions in a first projection histogram projected on a first coordinate axis of writing trajectory information in the row; and determining the various cells according to the column separation lines and the row separation lines; or
determining column separation lines according to valley positions in a first projection histogram projected on a first coordinate axis of the writing trajectory information; determining row separation lines according to valley positions in a second projection histogram projected on a second coordinate axis of the writing trajectory information; and determining the various cells according to the column separation lines and the row separation lines.

13. The display apparatus according to claim 12, wherein the processor is configured for:
determining the column separation line according to a valley position where a width of a valley in the first projection histogram is greater than a threshold; and/or
determining the row separation line according to a valley position where a width of the valley in the second projection histogram is greater than a threshold.

14. The display apparatus according to claim 12, wherein the writing trajectory information is obtained by performing a resampling process on trajectory points in the writing trajectory information;
wherein the resampling process is configured to increase a trajectory point in a stroke according to a length of the stroke in the writing trajectory information.

15. The display apparatus according to claim 12, wherein
the first projection histogram is obtained by performing contraction mapping for a projection histogram obtained by projecting the writing trajectory information to the first coordinate axis; and
the second projection histogram is obtained by performing contraction mapping for a projection histogram obtained by projecting the writing trajectory information to the second coordinate axis.

16. The display apparatus according to any one of claims 8 to 11, wherein the processor is configured for determining the various cells by a clustering algorithm.

17. The display apparatus according to any one of claims 1 to 4, 6, 8 to 11 and 13 to 15, wherein before recognizing the writing trajectory information in the display area of the display screen, and obtaining the data recognition result, the processor is further configured for:
displaying a title prompt in the display area, wherein the title prompt is configured to indicate a writing position of a table title for the user; and
obtaining first writing trajectory information in a first area corresponding to the title prompt, and obtaining second writing trajectory information in a second area corresponding to the title prompt.

18. The display apparatus according to claim 17, wherein the processor is configured for determining the data recognition result as follows:
recognizing the writing trajectory information in the first area to obtain a title of each coordinate axis;
partitioning the writing trajectory information in the second area into the various cells, recognizing the writing trajectory information in the various cells, and obtaining a data content in each cell of the second area; and
determining the data recognition result based on the title of each coordinate axis, the data content in each cell of the second area, and a position relationship between the title of each coordinate axis and each cell.

19. The display apparatus according to any one of claims 1 to 4, 6, 8 to 11, 13 to 15 and 18, wherein the graph drawing command comprises at least one of a touch gesture, or a touch command.

20. The display apparatus according to any one of claims 1 to 4, 6, 8 to 11, 13 to 15 and 18, wherein the graph drawing command comprises a graph selection command, and the processor is further configured for determining the graph type as follows:
in response to the graph selection command from the user in an intelligent graphing mode, determining the graph type corresponding to the graph selection command.

21. The display apparatus according to any one of claims 1 to 4,6, 8 to 11, 13 to 15 and 18, wherein the graph drawing command comprises a first touch gesture, and the processor is configured for determining the graph type as follows:
in response to the first touch gesture from the user in an intelligent graphing mode, recognizing a first graphic indicated by the first touch gesture, and determining the graph type based on the first graphic.

22. The display apparatus according to any one of claims 1 to 4, 6, 8 to 11, 13 to 15 and 18, wherein the graph drawing command comprises at least one of a drawing command indicating an arrow, a drawing command indicating a circle, a drawing command indicating a polygon, a drawing command indicating a cylinder, or a drawing command indicating a rectangle.

23. The display apparatus according to claim 21, wherein the processor is configured for:
if the graph drawing command comprises a drawing command indicating an arrow, determining that the graph type indicates a line graph;
if the graph drawing command comprises a drawing command indicating a circle, determining that the graph type indicates a pie chart;
if the graph drawing command comprises a drawing command indicating a rectangle, determining that the graph type indicates a histogram;
if the graph drawing command comprises a drawing command indicating a cylinder, determining that the graph type indicates a bar graph; or
if the graph drawing command comprises a drawing command indicating a polygon, determining that the graph type indicates a radar chart.

24. The display apparatus according to claim 21,
wherein the data recognition result comprises two columns of cells, a drawing command indicating an arrow comprises a command for a first arrow and a command for a second arrow which are drawn in turn; the command for the first arrow corresponds to a first column in the two columns, and the command for the second arrow corresponds to a second column in the two columns; and
the processor is configured for:
if a first direction indicated by the command for the first arrow is an X-axis direction, determining that cells in the first column are for data on the X-axis of the graph, and cells in the second column are for data on a Y-axis of the graph;
if a first direction indicated by the command for the first arrow is the Y-axis direction, determining that cells in the first column are for data on the Y-axis of the graph, and cells in the second column are for data on the X-axis of the graph;
wherein the command for the first arrow is received earlier than the command for the second arrow, and a second direction indicated by the command for the second arrow is different from the first direction.

25. The display apparatus according to any one of claims 1 to 4, 6, 8 to 11, 1 3 to 15, 18, 23 and 24, wherein the processor is further configured for:
in response to a command for enabling an intelligent graphing mode from the user on a first display interface in a writing application, displaying a second display interface in the intelligent graphing mode in the display area.

26. The display apparatus according to claim 25, wherein the command for enabling the intelligent graphing mode comprises a second touch gesture, and the processor is further configured for:
receiving a second graphic drawn by the user on the first display interface of the writing application, wherein the second graphic is generated according to the second touch gesture; and
triggering the second display interface in the intelligent graphing mode to be displayed in the display area according to the second graphic.

27. The display apparatus according to claim 26, wherein after receiving the second graphic drawn by the user on the first display interface of the writing application, the processor is further configured for:
generating a menu of candidates in the first display interface, wherein the menu of candidates includes a first startup icon corresponding to the second graphic; and
in response to a touch on the first startup icon from the user, triggering the second display interface for a graph type corresponding to the second graphic to be displayed in the display area.

28. The display apparatus according to claim 27, wherein the processor is further configured for:
if the second graphic is a cylinder, determining that the first startup icon is an icon indicating a bar graph; and in response to a touch on the icon indicating the bar graph, triggering a second display interface corresponding to the bar graph to be displayed;
if the second graphic is a rectangle, determining that the first startup icon is an icon indicating a histogram; and in response to a touch on the icon indicating the histogram, triggering a second display interface corresponding to the histogram to be displayed;
if the second graphic is a circle, determining that the first startup icon is an icon indicating a pie chart; and in response to a touch on the icon indicating the pie chart, triggering a second display interface corresponding to the pie chart to be displayed;
if the second graphic is a polygon, determining that the first startup icon is an icon indicating a radar chart; and in response to a touch on the icon indicating the radar chart, triggering a second display interface corresponding to the radar chart to be displayed;
if the second graphic is an arrow, determining that the first startup icon is an icon indicating a line graph; and in response to a touch on the icon indicating the line graph, triggering a second display interface corresponding to the line graph to be displayed.

29. The display apparatus according to claim 27, wherein the menu of candidates further comprises a second startup icon, and the second startup icon comprises an icon for an analysis template; and the processor is further configured for:
in response to a touch on the icon for the analysis template from the user, inserting the analysis template corresponding to the icon for the analysis template in the first display interface.

30. The display apparatus according to claim 25, wherein the processor is further configured for:
after drawing and displaying the graph in the second display interface, in response to an insertion command from the user, inserting the graph in the second display interface into the first display interface of the writing application for display.

31. The display apparatus according to any one of claims 1 to 4, 6, 8 to 11, 13 to 15, 18, 23, 24 and 26 to 30, wherein before responding to the graph drawing command, the processor is further configured for:
determining a writing area and a graph area in the display area of the display screen, wherein the writing area is configured to receive the writing trajectory information from the user, and the graph area is configured to display the graph corresponding to the writing trajectory information.

32. The display apparatus according to any one of claims 1 to 4 and 6, wherein the processor is configured for:
determining a writing area and a graph area in the display area of the display screen, wherein the writing area is configured to receive the writing trajectory information from the user, and the graph area is configured to display the graph corresponding to the writing trajectory information; and
displaying a writing prompt table corresponding to the graph type in the writing area of the display area.

33. The display apparatus according to claim 31, wherein the graph area is further configured to receive the graph drawing command from the user.

34. The display apparatus according to claim 31, wherein the processor is configured for:
in response to an editing command from the user in an intelligent graphing mode with the graph type being determined, dividing the display area into the writing area and the graph area, wherein the graph area is configured for displaying the graph corresponding to the graph type.

35. The display apparatus according to claim 31, wherein the processor is further configured for:
in response to a dragging command from the user in the writing area, moving a content in the writing area in a corresponding direction; or
in response to a dragging command from the user in the graph area, moving a content in the graph area in a corresponding direction.

36. The display apparatus according to claim 31, wherein the processor is further configured for:
in response to a full-screen preview command from the user, displaying the graph area in full screen;
in response to an annotation operation from the user in the graph area, displaying a content corresponding to the annotation operation;
in response to an erasing operation from the user in the graph area, removing a content corresponding to the erasing operation in the graph area;
in response to a screen-clearing operation from the user in the graph area, clearing a content in the graph area;
in response to a save operation from the user in the graph area, saving a content in the graph area; or
in response to a command for switching a graph type from the user, switching a current graph type.

37. The display apparatus according to claim 31, wherein the writing area and the graph area are not overlapping in position; or
the graph area floats above the writing area and does not obscure a content in the writing area.

38. The display apparatus according to claim 31, wherein after displaying the drawn graph in the graph area, the processor is further configured for:
in response to a second partition command from the user, dividing the writing area into a first writing area and a second writing area, and dividing the graph area into a first graph area and a second graph area;
wherein the first writing area is configured to display writing trajectory information received before area division, the second writing area is configured to display writing trajectory information received in the second writing area after area division, the first graph area is configured to display a graph corresponding to writing trajectory information in the first writing area, and the second graph area is configured to display a graph corresponding to writing trajectory information in the second writing area.

39. The display apparatus according to any one of claims 1 to 4, 6, 8 to 11, 13 to 15, 18, 23, 24, 26 to 30 and 33 to 38,wherein the processor is configured for recognizing the writing trajectory information as follows:
inputting the writing trajectory information into a text recognition model for recognition, and outputting a data content corresponding to the writing trajectory information; wherein the text recognition model comprises a plurality of BiLSTM network layers, and an input of any one of the BiLSTM network layers other than the first two BiLSTM network layers is connected with at least two outputs;
wherein the at least two outputs comprises outputs of any two BiLSTM network layers prior to the any one BiLSTM network layer.

40. The display apparatus according to claim 39, wherein the text recognition model further comprises a fully connected layer, an input of the fully connected layer is connected with at least three outputs, and the at least three outputs comprise outputs of any three BiLSTM network layers prior to the fully connected layer.

41. The display apparatus according to claim 39, wherein an output of any one of BiLSTM network layers prior to a BiLSTM network layer except a last BiLSTM network layer serves as an input to at least two BiLSTM network layers after the BiLSTM network layer.

42. The display apparatus according to claim 39, wherein the text recognition model comprises four BiLSTM network layers and a fully connected layer, a first BiLSTM network layer comprises a first input and a first output, a second BiLSTM network layer comprises a second input and a second output, a third BiLSTM network layer comprises a third input and a third output, and the fourth BiLSTM network layer comprises a fourth input and a fourth output;
the first input is used for input of the writing trajectory information, the second input is connected with the first output, the third input is connected with the first and second outputs, the fourth input is connected with the first, second and third outputs, the fourth output is connected with an input of the fully connected layer, and an output of the fully connected layer is used to output the data content corresponding to the writing trajectory information.

43. The display apparatus according to any one of claims 20 and 26 to 29, wherein after responding to the graph selection command from the user in the intelligent graphing mode, the processor is further configured for:
displaying a writing prompt table in the display area, and receiving writing trajectory information in the writing prompt table from the user; and
in response to determining that the user stops writing for a preset amount of time, drawing the graph of a graph type corresponding to the graph selection command and displaying the drawn graph.

44. The display apparatus according to any one of claims 1 to 4, 6, 8 to 11, 13 to 15, 18, 23, 24, 26 to 30, 33 to 38 and 40 to 42, wherein the processor is further configured for:
in an intelligent graphing mode with the graph type being determined, in response to determining that the user stops writing for a preset amount of time, triggering to draw the graph.

45. The display apparatus according to claim 21, wherein before responding to the graph drawing command in the intelligent graphing mode from the user, the processor is further configured for:
receiving the writing trajectory information from the user, recognizing the writing trajectory information and obtaining the data recognition result;
after responding to the graph drawing command in the intelligent graphing mode from the user, the processor is further configured for:
drawing the graph of the graph type corresponding to the graph drawing command according to the data recognition result and displaying the drawn graph.

46. The display apparatus according to any one of claims 1 to 4, 6, 8 to 1 1, 13 to 15, 18, 23, 24, 26 to 30, 33 to 38 and 40 to 42, wherein the processor is further configured for:
in the intelligent graphing mode with the graph type being determined, in response to a gesture command from the user, triggering to draw the graph.

47. The display apparatus according to claim 46, wherein if the gesture command is a gesture command for an arrow, wherein the processor is further configured for:
determining table data corresponding to an X-axis according to a direction of the arrow in the gesture command; or
determining table data corresponding to a Y-axis according to a direction of the arrow in the gesture command.

48. The display apparatus according to any one of claims 1 to 4, 6, 8 to 11, 13 to 15, 18, 23, 24, 26 to 30, 33 to 38 and 40 to 42, wherein the processor is further configured for:
determining a plurality of data groups by grouping a content written by the user in columns; or
determining a plurality of data groups by grouping a content written by the user in rows.

49. The display apparatus according to claim 48, wherein the data recognition result comprises the plurality of data groups, and the processor is further configured for determining the plurality of data groups as follows:
if a writing prompt table is displayed in the display area, determining the plurality of data groups by dividing the content written by the user in the writing prompt table into rows or columns; or
if a writing prompt table is not displayed in the display area, determining the plurality of data groups by dividing data contents in various cells into rows or columns after determining the various cells.

50. The display apparatus according to claim 48, wherein the processor is further configured for:
determining each column of content written by the user as each data group according to a preset relationship between each row and the coordinate axes; or
determining each row of content written by the user as each data group according to a preset relationship between each column and the coordinate axes.

51. The display apparatus according to claim 48, wherein the processor is further configured for:
determining the graph type according to the graph drawing command; and
drawing the graph corresponding to the graph type according to the plurality data groups corresponding to the content written by the user.

52. The display apparatus according to claim 48, wherein if any data group includes any column of content written by the user, the processor is further configured for:
if determining that the graph type indicates a bar graph, determining each category title on a preset axis according to a data group corresponding to a preset column, determining a bar name according to a first content corresponding to a preset index value in a data group corresponding to a remaining column other than the preset column, determining a bar height corresponding to each category title and the bar name according to the content other than the first content in the data group corresponding to the remaining column, and drawing the bar graph according to each category title, bar name and bar height;
if determining that the graph type indicates a radar chart, determining a title of each vertex according to a data group corresponding to a preset column, determining a polar coordinate name according to a second content corresponding to a preset index value in a data group corresponding to a remaining column other than the preset column, determining a polar coordinate corresponding to each title and polar coordinate name according to the content other than the second content in the data group corresponding to the remaining column, and drawing the radar chart according to each title, polar coordinate name and polar coordinate;
if determining that the graph type indicates a line graph, determining an axis title according to a content corresponding to a preset index value in a data group, determining a coordinate point according to the content corresponding to a same index value other than the preset index value in different data groups, and drawing the line graph according to the axis title and the coordinate point; or
if determining that the graph type indicates a pie chart, determining a title of each slice according to a data group corresponding to a preset column, determining a proportion of each slice according to data groups corresponding to columns other than the preset column, and drawing the pie chart according to the title and proportion of each slice.

53. The display apparatus according to any one of claims 1 to 4, 6, 8 to 11, 13 to 15, 18, 23, 24, 26 to 30, 33 to 38 and 40 to 42, wherein the processor is further configured for:
in response to an editing command from the user in the intelligent graphing mode with the graph type being determined, displaying a preset graph in the display area, wherein a display style of the preset graph is determined according to the graph type being determined.

54. The display apparatus according to any one of claims 1 to 4, 6, 8 to 11, 13 to 15, 18, 23, 24, 26 to 30, 33 to 38 and 40 to 42, wherein the processor further is configured for:
after the graph type is determined, displaying a guide template corresponding to the graph type in the display area of the display screen, wherein the guide template is configured to guide the user to write a table content according to a writing rule corresponding to the graph type.

55. The display apparatus according to claim 54, wherein the processor is configured for:
displaying a table template in a first section of the guide template, and displaying a graph template in a second section of the guide template;
wherein the table template comprises a preset content, and the graph template comprises a graph corresponding to the preset content.

56. The display apparatus according to any one of claims 1 to 4, 6, 8 to 11, 13 to 15, 18, 23, 24, 26 to 30, 33 to 38 and 40 to 42, wherein after displaying the drawn graph in the display area, the processor is further configured for:
in response to a modification command from the user, modifying corresponding writing trajectory information and updating the graph according to the writing trajectory information after modification.

57. The display apparatus according to claim 56, wherein in response to the modification command from the user, the processor is further configured for:
obtaining and storing the writing trajectory information after modification in a first storage zone, wherein the first storage zone is different from a storage zone for the writing trajectory information before modification.

58. The display apparatus according to claim 56, wherein the modification command comprises at least one of a command triggered via a different tip of a stylus, a command triggered via a different button of a stylus, or a command triggered via a switching button on the display area.

59. The display apparatus according to claim 56, wherein after responding to the modification command from the user, the processor is further configured for:
determining a first content before modification corresponding to the modification command and a second content after modification corresponding to the modification command; and
displaying the first content and the second content simultaneously, wherein display styles for the first content and the second content are different.

60. The display apparatus according to claim 58, wherein after obtaining and storing the writing trajectory information after modification in the first storage zone, the processor is further configured for:
obtaining the writing trajectory information after modification from the first storage zone, drawing a first graph according to the writing trajectory information before modification and the writing trajectory information after modification;
wherein the first graph comprises first table data corresponding to the writing trajectory information before modification, and second table data corresponding to the writing trajectory information after modification.

61. The display apparatus according to claim 58, wherein after obtaining and storing the writing trajectory information after modification in the first storage zone, the processor further is configured for:
obtaining the writing trajectory information after modification from the first storage zone, drawing a second graph according to the writing trajectory information before modification, and drawing a third graph according to the writing trajectory information after modification;
displaying the second graph and the third graph simultaneously.

62. A method for graph display, comprising:
recognizing writing trajectory information in a display area of a display screen and obtaining a data recognition result;
in response to a graph drawing command from a user, determining a graph type corresponding to the graph drawing command; and
in response to the graph drawing command from the user, drawing a graph of the graph type corresponding to the graph drawing command according to the data recognition result, and displaying the drawn graph in the display area.

63. The method according to claim 62, wherein before recognizing the writing trajectory information in the display area of the display screen and obtaining the data recognition result, the method further comprises:
displaying a writing prompt table in the display area, wherein the writing prompt table is configured to prompt the user to write in various cells of the writing prompt table; and
receiving the writing trajectory information written by the user in the writing prompt table.

64. The method according to claim 63, wherein the displaying the writing prompt table in the display area, comprises
determining a baseline position of the writing prompt table according to a position of trajectory information of a first writing from the user in the display area; and
displaying, in the display area, the writing prompt table with a fixed quantity of rows and a fixed quantity of columns according to the baseline position of the writing prompt table, wherein the trajectory information of the first writing from the user is located within a cell of the writing prompt table.

65. The method according to claim 62 or 63, wherein after displaying the writing prompt table, the method further comprises:
if trajectory information of continuous writing from the user exceeds a range of the writing prompt table, increasing a quantity of rows and/or a quantity of columns of the writing prompt table according to a position of the trajectory information of the continuous writing; or
if trajectory information of continuous writing from the user is located at a critical row of the writing prompt table, increasing a quantity of rows of the writing prompt table; and/or if trajectory information of continuous writing from the user is located at a critical column of the writing prompt table, increasing a quantity of columns of the writing prompt table.

66. The method according to claim 62, wherein a quantity of rows and a quantity of columns of the writing prompt table are fixed, or a quantity of rows and a quantity of columns of the writing prompt table are determined according to parameters input by the user.

67. The method according to any one of claims 62 to 64, wherein determining the data recognition result, comprises any one of the following ways:
way 1: determining writing trajectory information in each cell according to a position relationship between each trajectory point in the writing trajectory information and each cell in the writing prompt table; and recognizing the writing trajectory information in each cell, and obtaining a data content of each cell;
way 2: recognizing the writing trajectory information, and obtaining a content written by the user and a position of the content in the display area; and determining a data content of each cell based on the position of the content and a position of each cell in the writing prompt table.

68. The method according to claim 62, wherein the data recognition result comprises a plurality of cells, and the data recognition result further comprises a position of each cell and a data content in each cell.

69. The method according to claim 68, wherein determining the data recognition result, comprises:
determining various cells, and partitioning the writing trajectory information into the various cells, wherein the various cells correspond to respective cells in a table, and the writing trajectory information in the various cells corresponds to data contents in the respective cells in the table;
recognizing the writing trajectory information in the various cells and obtaining the data content in each cell; and
determining the data recognition result based on the position of each cell and the data content in each cell.

70. The method according to claim 69, wherein the partitioning the writing trajectory information into the various cells, comprises:
converting the writing trajectory information into strokes and determining barycenters of the strokes based on average coordinate values of trajectory points in the strokes; and
partitioning the strokes into the various cells based on a position relationship between the barycenters of the strokes and the various cells.

71. The method according to claim 69, wherein the partitioning the writing trajectory information into the various cells, comprises:
obtaining a writing order and coordinates of trajectory points in the writing trajectory information;
determining a similarity between the trajectory points based on the writing order and coordinates of the trajectory points; and
partitioning the trajectory points whose similarity satisfies a preset threshold into a cell.

72. The method according to any one of claims 68 to 71, wherein determining the various cells, comprises:
determining column separation lines based on valley positions in a first projection histogram projected on a first coordinate axis of the writing trajectory information; determining row separation lines of any column based on valley positions in a second projection histogram projected on a second coordinate axis of writing trajectory information in the column; and determining the various cells based on the column separation lines and the row separation lines; or,
determining row separation lines according to valley positions in a second projection histogram projected on a second coordinate axis of the writing trajectory information; determining column separation lines of any row according to valley positions in a first projection histogram projected on a first coordinate axis of writing trajectory information in the row; and determining the various cells according to the column separation lines and the row separation lines; or
determining column separation lines according to valley positions of a first projection histogram projected on a first coordinate axis of the writing trajectory information; determining row separation lines according to valley positions in a second projection histogram projected on a second coordinate axis of the writing trajectory information; and determining the various cells according to the column separation lines and the row separation lines.

73. The method according to claim 72, further comprising:
determining the column separation line according to a valley position where a width of a valley in the first projection histogram is greater than a threshold; and/or
determining the row separation line according to a valley position where a width of the valley in the second projection histogram is greater than a threshold.

74. The method according to claim 72, wherein the writing trajectory information is obtained by performing a resampling process on trajectory points in the writing trajectory information;
wherein the resampling process is configured to increase a trajectory point in a stroke according to a length of the stroke in the writing trajectory information.

75. The method according to claim 72, wherein
the first projection histogram is obtained by performing contraction mapping on a projection histogram obtained by projecting the writing trajectory information to the first coordinate axis; and
the second projection histogram is obtained by performing contraction mapping on a projection histogram obtained by projecting the writing trajectory information to the second coordinate axis.

76. The method according to any one of claims 68 to 71, further comprising:
determining the various cells by a clustering algorithm.

77. The method according to any one of claims 62 to 64, 66, 68 to 71 and 73 to 75, wherein before recognizing the writing trajectory information in the display area of the display screen and obtaining the data recognition result, the method further comprises:
displaying a title prompt in the display area, wherein the title prompt is configured to indicate a writing position of a table title for the user; and
obtaining first writing trajectory information in a first area corresponding to the title prompt, and obtaining second writing trajectory information in a second area corresponding to the title prompt.

78. The method according to claim 77, wherein determining the data recognition result, comprises:
recognizing the writing trajectory information in the first area to obtain a title of each coordinate axis;
partitioning the writing trajectory information in the second area into the various cells, recognizing the writing trajectory information in the various cells, and obtaining a data content in each cell of the second area; and
determining the data recognition result based on the title of each coordinate axis, the data content in each cell of the second area, and a position relationship between the title of each coordinate axis and each cell.

79. The method according to any one of claims 62 to 64, 66, 68 to 71, 73 to 75 and 78, wherein the graph drawing command comprises at least one of a touch gesture, or a touch command.

80. The method according to any one of claims 62 to 64, 66, 68 to 71, 73 to 75 and 78, wherein the graph drawing command comprises a graph selection command, and determining the graph type comprises:
in response to the graph selection command from the user in an intelligent graphing mode, determining the graph type corresponding to the graph selection command.

81. The method according to any one of claims 62 to 64, 66, 68 to 71, 73 to 75 and 78, wherein the graph drawing command comprises a first touch gesture, and determining the graph type comprises:
in response to the first touch gesture from the user in an intelligent graphing mode, recognizing a first graphic indicated by the first touch gesture, and determining the graph type based on the first graphic.

82. The method according to any one of claims 62 to 64, 66, 68 to 71, 73 to 75 and 78, wherein the graph drawing command comprises at least one of a drawing command indicating an arrow, a drawing command indicating a circle, a drawing command indicating a polygon, a drawing command indicating a cylinder, or a drawing command indicating a rectangle.

83. The method according to claim 82, wherein recognizing the graphic indicated by the graph drawing command and determining the graph type based on the graphic, comprises:
if the graph drawing command comprises a drawing command indicating an arrow, determining that the graph type indicates a line graph;
if the graph drawing command comprises a drawing command indicating a circle, determining that the graph type indicates a pie chart;
if the graph drawing command comprises a drawing command indicating a rectangle, determining that the graph type indicates a histogram;
if the graph drawing command comprises a drawing command indicating a cylinder, determining that the graph type indicates a bar graph; or
if the graph drawing command comprises a drawing command indicating a polygon, determining that the graph type indicates a radar chart.

84. The method according to claim 82,
wherein the data recognition result comprises two columns of cells, a drawing command indicating an arrow comprises a command for a first arrow and a command for a second arrow which are drawn in turn; the command for the first arrow corresponds to a first column in the two columns, and the command for the second arrow corresponds to a second column in the two columns; and
the method further comprises:
if a first direction indicated by the command for the first arrow is an X-axis direction, determining that cells in the first column are for data on the X-axis of the graph, and cells in the second column are for data on a Y-axis of the graph;
if a first direction indicated by the command for the first arrow is the Y-axis direction, determining that cells in the first column are for data on the Y-axis of the graph, and cells in the second column are for data on the X-axis of the graph;
wherein the command for the first arrow is received earlier than the command for the second arrow, and a second direction indicated by the command for the second arrow is different from the first direction.

85. The method according to any one of claims 62 to 64, 66, 68 to 71, 73 to 75, 78, 83 and 84, further comprising:
in response to a command for enabling an intelligent graphing mode from the user on a first display interface in a writing application, displaying a second display interface in the intelligent graphing mode in the display area; and
after drawing a graph in the second display interface and displaying the drawn graph, in response to a command for insertion from the user, inserting the graph in the second display interface into the first display interface of the writing application for display.

86. The method according to any one of claims 62 to 64, 66, 68 to 71, 73 to 75, 78, 83 and 84, wherein before responding to the graph drawing command from the user, the method further comprises:
determining a writing area and a graph area in the display area of the display screen, wherein the writing area is configured to receive the writing trajectory information from the user, and the graph area is configured to display the graph corresponding to the writing trajectory information.

87. The method according to any one of claims 62 to 64 and 66, wherein the method further comprises:
determining a writing area and a graph area in the display area of the display screen, wherein the writing area is configured to receive the writing trajectory information from the user, and the graph area is configured to display the graph corresponding to the writing trajectory information; and
displaying a writing prompt table corresponding to the graph type in the writing area of the display area.

88. An electronic device, comprising a processor and a memory, wherein the memory is configured for storing programs executable by the processor, and the processor is configured to read the programs in the memory to perform the method according to any one of claims 62 to 87.

89. A computer readable storage medium with computer programs stored therein, wherein the programs, when executed by a processor, are configured for implementing the method according to any one of claims 62 to 87.
